(19) Europäisches Patentamt
European Patent Office
Office européen des brevets

(11) **EP 1 971 059 A1**

(12) **EUROPEAN PATENT APPLICATION**
published in accordance with Art. 158(3) EPC


(43) Date of publication:
**17.09.2008 Bulletin 2008/38**

(21) Application number: **06834315.1**

(22) Date of filing: **08.12.2006**

(51) Int Cl.:
***H04J 11/00*** (2006.01) ***H04B 7/06*** (2006.01)
***H04B 7/26*** (2006.01) ***H04J 1/02*** (2006.01)

(86) International application number:
**PCT/JP2006/324560**

(87) International publication number:
**WO 2007/074623 (05.07.2007 Gazette 2007/27)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.12.2005 JP 2005374134**



(71) Applicant: **Sharp Kabushiki Kaisha**
**Osaka-shi, Osaka 545-8522 (JP)**

(72) Inventors:
- **YOSHIMOTO, Takashi**
  **Chiba-shi**
  **Chiba-ken (JP)**
- **IMAMURA, Kimihiko**
  **Vancouver, WA 98684 (US)**

(74) Representative: **Brown, Kenneth Richard et al**
**R.G.C. Jenkins & Co.**
**26 Caxton Street**
**London SW1H 0RJ (GB)**


# (54) WIRELESS TRANSMITTER, WIRELESS RECEIVER, WIRELESS COMMUNICATION SYSTEM, WIRELESS TRANSMISSION METHOD, AND WIRELESS RECEPTION METHOD


(57) A wireless transmitter of the invention includes a plurality of transmitted antennas, a pilot channel number-determining unit that, based on a transmit delay time applied between the plurality of transmitted antennas, determines the number of pilot channels used in estimating a propagation channel, a control channel generator for generating a signal that stores information relating to the number of pilot channels, and each-antenna signal processors that transmit a signal generated by the control channel generator from the plurality of transmitted antennas.


FIG. 8

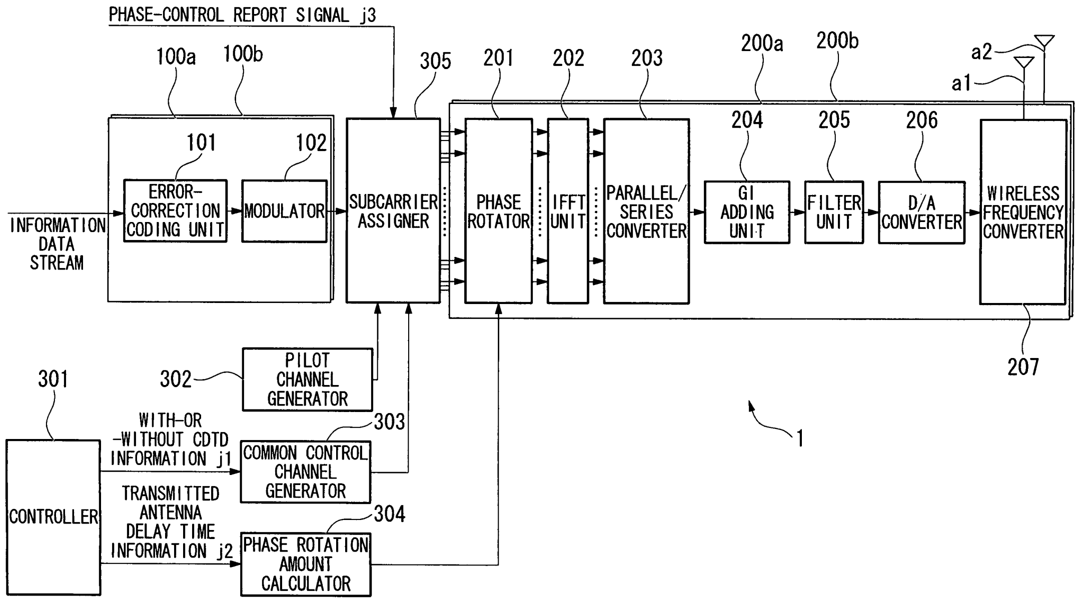


EP 1 971 059 A1

## Description

TECHNICAL FIELD

The present invention relates to a wireless transmitter, a wireless receiver, a wireless communication system, a wireless transmission method, and a wireless reception method, and particularly relates to a wireless transmitter, a wireless receiver, a wireless communication system, a wireless transmission method, and a wireless reception method for transmitting signals from a plurality of transmitted antennas to a received antenna.

Priority is claimed on Japanese Patent Application No. 2005-374134, filed December 27, 2005, the content of which is incorporated herein by reference.

BACKGROUND ART

Recently, there is a proposal for multicarrier transmission using delay transmit diversity (DTD) or cyclic delay transmit diversity (CDTD), in which, when simultaneously transmitting signals from a wireless transmitter including a plurality of transmitted antennas, different delays are applied at each of the transmitted antennas (Non-Patent Literature 1).

A technique disclosed in Non-Patent Literature 1 transmits signals from a wireless transmitter including a plurality of transmitted antennas to a wireless receiver. At the wireless receiver, a received antenna receives a composite wave of signals transmitted from each of the plurality of transmitted antennas of the wireless transmitter.

FIGS. 32A and 32B are diagrams of delay profiles given as time-domain expressions of a propagation channel between one transmitted antenna and one received antenna. FIG 32A is a diagram of a delay profile given as a time-domain expression of a propagation channel between one transmitted antenna and one received antenna, when signals are transmitted from one of the two transmitted antennas. The horizontal axis represents time, and the vertical axis represents received power. The wireless receiver receives two paths w01 and w02 at different times. FIG. 32B is a diagram of a delay profile given as a time-domain expression of a propagation channel between one transmitted antenna and one received antenna, when signals are transmitted from the other transmitted antenna. The horizontal axis represents time, and the vertical axis represents received power. The wireless receiver receives three paths w01 to w05 at different times.

FIGS. 33A and 33B are explanatory diagrams of signals received by the wireless receiver from the wireless transmitter. When the signal transmitted from the other transmitted antenna to the received antenna (FIG. 32B) is obtained by appending a delay timer to the signal transmitted from the first transmitted antenna to the received antenna (FIG. 32A), that is, when DTD or CDTD mentioned above is employed between these two transmitted antennas, as shown in FIG. 33A, the transmitted signal can be regarded as arriving at the received antenna via a propagation channel formed by combining the delay profiles shown in FIG.S 32A and 32B. FIG. 33B expresses FIG.33A in frequency domain, the horizontal axes in FIG33B representing frequency, and the vertical axes in FIG. 33B representing received power. Also, dmax represents the maximum delay time.

When using the transmit diversity methods described above, since the frequency selectability of the channel can be kept strong at all times, in multicarrier transmission such as orthogonal frequency division multiplexing (OFDM), it becomes possible to obtain frequency diversity, and excellent average bit error rate (BER) characteristics.

Incidentally, differences between DTD and CDTD, and cyclic delay, are disclosed in Non-Patent Literature 1.

FIG. 34 is a diagram of examples of signals when DTD is employed. FIG. 34 (a) is a signal transmitted from the one antenna, and FIG. 34 (b) is a signal transmitted from the other antenna. In contrast to the signal transmitted from the one transmitted antenna, a delay is appended to the signal transmitted from the other transmitted antenna. In FIG. 34 (a) and (b), one symbol includes an effective symbol duration containing four samples, and a guard interval duration containing one sample. Looking at the effective symbol duration, in contrast to the signal transmitted from the one transmitted antenna, the signal transmitted from the other transmitted antenna has a delay of one sample.

FIG. 35 is a diagram of examples of signals when CDTD is employed. FIG. 35 (a) is a signal transmitted from the one antenna, and FIG. 35 (b) is a signal transmitted from the other antenna. Here, in contrast to the signal transmitted from the one transmitted antenna, a cyclic delay is appended to the signal transmitted from the other transmitted antenna. In FIG. 35 (a) and (b), one symbol includes an effective symbol duration containing four samples, and a guard interval duration containing one sample. Looking at the effective symbol duration, in contrast to the one transmitted antenna, the other transmitted signal has a delay of one sample is generated in the other transmitted signal.

In multicarrier transmission, a known signal functioning as a pilot channel is inserted at known intervals into the subcarrier, and is used as a reference signal for performing signal to interference plus noise ration (SINR) estimation and cnannel estimation.

FIGS. 36 and 37 are diagrams of pilot channels arranged in a signal transmitted by a wireless transmitter. Here, the horizontal axis represents frequency, and the vertical axis represents time. Here, the signal transmitted by the wireless transmitter is divided into five time bands in the time axis direction, and into fifteen frequency bands in the frequency horizontal direction. Therefore, the signal transmitted by the wireless transmitter includes 5 x 15 = 75 unit regions. A unit region is a region that determines one time band and one frequency band.

FIG. 36 is an example where pilot channels are arranged at equal intervals of ΔNf= 4 in unit regions belonging to the same time band. The pilot channels are arranged in unit regions S(1,1), S(1,5), S(1,9), and S(1, 13). Using the unit region belonging to the lowest frequency band and the fastest time band as a reference, S(x, y) expresses a unit region belonging to the xth fastest time band and the yth lowest frequency band.

FIG. 37 is an example where pilot channels are arranged at equal intervals of ΔNf = 4 in unit regions belonging to different time bands. The pilot channels are arranged in unit regions S(1,1), S(4, 5), S(1,9), and S(4, 13).

In FIGS. 36 and 37, when calculating a propagation channel estimation value in unit region S(2, 8), for example, a propagation channel can be precisely estimated as the average value of propagation channel estimation values calculated from four pilot channels joined by arrow d01, and arrow d02 to d04 in FIG. 37.

Non-Patent Literature 1: Technical Report RCS2004-392 'Effects of Applying Cyclic Delay Transmit Diversity in DS-CDMA using Frequency domain Equalization'

Non-Patent Literature 2: 3GPP Report, R1-050853, 'Common Pilot Channel Structure for OFDM Based Radio Access in Evolved UTRA Downlink.'

DISCLOSURE OF THE INVENTION

Problems to be solved by the invention

As described above, by applying transmit diversity such as CDTD in multicarrier transmission such as OFDM, frequency selectability can be strengthened and good average BER characteristics can be obtained by a frequency diversity effect. When the received signal has strong frequency selectability and severe frequency fluctuation, as shown in FIG 38 (a) and (b), the difference in the propagation channels C1 of pilot channels arranged unit regions S(1, 1), S (1,5), S(1,9), and S(1, 13) increases. In FIG. 38 (a), where the horizontal axis represents frequency and the vertical axis represents received power, received power of the received signal on the pilot channel fluctuates widely with respect to the frequency. In FIG 38 (b), the horizontal axis represents frequency and the vertical axis represents time.

As described above, when estimating the propagation channel C 1 of a unit region around the pilot channels (e.g. unit region S(2,8)) using a propagation channel estimation value calculated from the four pilot channels in FIG. 38 (b), since the received powers of the pilot channels differs widely, there is a problem that the precise of the propagation channel estimation deteriorates.

The present invention has been realized in view of the above problems, and aims to provide a wireless transmitter, a wireless receiver, a wireless communication system, a wireless transmission method, and a wireless reception method that can precisely estimate a propagation channel between communicating devices, even when the frequency selectability is strong.

Means for solving the problems

A wireless transmitter of the invention has been realized to solve the above problems, and includes a plurality of transmitted antennas, a pilot channel number-determining unit that determines the number of pilot channels used in estimating a propagation channel, based on a transmit delay time applied between the plurality of transmitted antennas, a control channel generator for generating a signal that stores information relating to the number of pilot channels, and each-antenna signal processors that transmit a signal generated by the control channel generator from the plurality of transmitted antennas.

In the wireless transmitter of the invention, the pilot channel number-determining unit of the wireless transmitter determines the number of pilot channels used in estimating the propagation channel, based on whether a transmit delay time applied between the plurality of transmitted antennas is 0.

In the wireless transmitter of the invention, when the transmit delay time applied between the plurality of transmitted antennas is not 0, the pilot channel number-determining unit reduces the number of pilot channels used in estimating the propagation channel to a smaller number than when the transmit delay time applied between the plurality of transmitted antennas is 0.

In the wireless transmitter of the invention, when a delay time between signals transmitted from the plurality of transmitted antennas is larger than a predetermined threshold, the pilot channel number-determining unit reduces the number of pilot channels used in estimating the propagation channel to a smaller number than when the delay time is smaller than the threshold.

In the wireless transmitter of the invention, the predetermined threshold is a reciprocal of a frequency bandwidth of a chunk.

In the wireless transmitter of the invention, the predetermined threshold is a reciprocal of a user-occupied bandwidth.

In the wireless transmitter of the invention, the pilot channel number-determining unit reduces the number of pilot channels as the delay amount between signals transmitted from the plurality of transmitted antennas increases by delay transmit diversity.

The wireless transmitter of the invention includes an amplitude-setting unit that, based on the number of pilot channels, varies the amplitudes of the pilot channels.

The wireless transmitter of the invention includes a plurality of transmitted antennas, a control channel generator for generating a signal that stores transmit delay time information applied between the plurality of transmitted antennas, and each-antenna signal processors that transmit a signal generated by the control channel generator from the plurality of transmitted antennas.

The wireless transmitter of the invention includes an amplitude-setting unit that, based on the transmit delay time information applied between the transmitted antennas, varies the amplitudes of pilot channels.

The wireless transmitter of the invention includes a plurality of transmitted antennas, a control channel generator for generating a signal that stores information indicating whether a transmit delay time applied between the plurality of transmitted antennas is 0, and each-antenna signal processors that transmit a signal generated by the control channel generator from the plurality of transmitted antennas.

The wireless transmitter of the invention includes an amplitude-setting unit that varies the amplitudes of the pilot channels based on information indicating whether a transmit delay time applied between the transmitted antennas is 0.

The wireless transmitter of the invention includes a plurality of transmitted antennas, a control channel generator for generating a signal that stores information indicating whether a transmit delay time applied between the plurality of transmitted antennas is greater than a predetermined threshold, and each-antenna signal processors that transmit a signal generated by the control channel generator from the plurality of transmitted antennas.

The wireless transmitter of the invention includes an amplitude-setting unit that varies the amplitudes of the pilot channels based on information indicating whether a transmit delay time applied between the transmitted antennas is greater than the predetermined threshold.

In the wireless transmitter of the invention, the predetermined threshold is a reciprocal of a frequency bandwidth of a chunk.

In the wireless transmitter of the invention, the predetermined threshold is a reciprocal of a user-occupied bandwidth.

The wireless transmitter of the invention includes a plurality of transmitted antennas, a pilot channel determining unit that determines pilot channels used in estimating a propagation channel, based on a transmit delay time applied between the plurality of transmitted antennas, a control channel generator for generating a signal that stores information relating to pilot channels to be used for estimating the propagation channel, and each-antenna signal processors that transmit a signal generated by the control channel generator from the plurality of transmitted antennas.

The wireless transmitter of the invention includes a plurality of transmitted antennas, a pilot channel determining unit that determines pilot channels to be used in estimating a propagation channel, based on whether a transmit delay time applied between the plurality of transmitted antennas is 0, a control channel generator for generating a signal that stores information relating to pilot channels to be used for estimating the propagation channel, and each-antenna signal processors that transmit a signal generated by the control channel generator from the plurality of transmitted antennas.

The wireless transmitter of the invention includes a plurality of transmitted antennas, a pilot channel determining unit that determines pilot channels to be used in estimating a propagation channel, based on whether a transmit delay time applied between the plurality of transmitted antennas is greater than a predetermined threshold, a control channel generator for generating a signal that stores information relating to pilot channels to be used for estimating the propagation channel, and each-antenna signal processors that transmit a signal generated by the control channel generator from the plurality of transmitted antennas.

In the wireless transmitter of the invention, the control channel generator generates a common control channel.

In the wireless transmitter of the invention, the control channel generator generates a shared control signaling channel.

A wireless receiver of the invention includes a received antenna, a pilot channel number determining unit that, based on delay time information relating to delay transmit diversity contained in a signal received by the received antenna, extracts pilot channel number information that indicates the number of pilot channels to be used in propagation channel estimation, and a propagation channel estimator that estimates a propagation channel using the number of pilot channels determined by the pilot channel number information from among pilot channels contained in the signal received by the received antenna.

In the wireless receiver of the invention, the pilot channel number determining unit determines pilot channel number information that indicates the number of pilot channels to be used in propagation channel estimation, based on whether delay time information relating to delay transmit diversity contained in a signal received by the received antenna is 0.

In the wireless receiver of the invention, when the delay time information relating to delay transmit diversity is not 0, the pilot channel number determining unit generates pilot channel number information indicating a smaller number of pilot channels than when the delay transmit diversity is 0.

In the wireless receiver of the invention, when a delay amount between a plurality of transmitted antennas of the wireless transmitter using delay transmit diversity is greater than a predetermined threshold, the pilot channel number determining unit generates pilot channel number information indicating a smaller number of pilot channels than when it is small than the predetermined threshold.

In the wireless receiver of the invention, the predetermined threshold is a reciprocal of a frequency bandwidth of a chunk.

In the wireless receiver of the invention, the predetermined threshold is a reciprocal of a user-occupied bandwidth.

In the wireless receiver of the invention, the pilot channel number-determining unit reduces the number of pilot channels as the delay amount in delay transmit diversity signals increases.

A wireless receiver of the invention includes a received antenna, a pilot channel number determining-unit that extracts pilot channel number information indicating the number of pilot channels to be used in propagation channel estimation contained in a signal received by the received antenna, and a propagation channel estimator that estimates a propagation channel using the number of pilot channels defined by the pilot channel number information indicating the number of pilot channels to be used in propagation channel estimation.

A wireless receiver of the invention includes a received antenna, a pilot channel determining-unit that extracts pilot channel information indicating pilot channels to be used in propagation channel estimation that are contained in a signal received by the received antenna, and a propagation channel estimator that estimates a propagation channel using pilot channels defined by the pilot channel number from among the pilot channels contained in a signal received by the received antenna.

A wireless communication system of the invention includes the abovementioned wireless transmitter and the abovementioned wireless receiver.

A wireless transmission method of the invention includes determining, based on a transmit delay time applied between a plurality of transmitted antennas, the number of pilot channels to be used in estimating a propagation channel, generating a signal that stores information indicating the number of pilot channels, and transmitting the signal from the plurality of transmitted antennas.

A wireless reception method of the invention includes extracting, based on delay time information relating to delay transmit diversity contained in a signal received by a received antenna, the number of pilot channels to be used in propagation channel estimation, and estimating a propagation channel using the number of pilot channels determined by the pilot channel number information from among pilot channels contained in the signal received by the received antenna. Effects

In this invention, based on a transmit delay time applied between a plurality of transmitted antennas, the number of pilot channels to be used in estimating a propagation channel is determined by a pilot channel number determining unit, and a signal that stores information relating to the number of pilot channels is generated by a control channel generator.

Since this enables the wireless receiver to change the number of pilot channels to be used in propagation channel estimation by referring to the information relating to the number of pilot channels, based on the transmit delay time applied between the plurality of transmitted antennas, in multicarrier transmission such as OFDM, by performing delay transmit diversity such as DTD and CDTD, it is possible to effectively obtain frequency diversity effect, which is an advantage of multicarrier transmission, without being affected by frequency selectability, and to estimate the propagation channel with high precision.

## BRIEF DESCRIPTION OF THE DRAWINGS

[FIG. 1] A diagram of an example of assigning pilot channels to unit regions.

[FIG. 2] An explanatory diagram of a weighting method used when calculating propagation channel estimation values from despread results.

[FIG. 3] An explanatory diagram of an example where pilot channels are arranged in unit regions belonging to different time bands.

[FIG. 4] A schematic diagram of signals that arrive at a wireless receiver 2 from a wireless transmitter 1 according to a first embodiment of the invention.

[FIG. 5A] A diagram of a delay profile given as a time-domain expression of the propagation channel from transmitted antenna a1 of the wireless transmitter 1 to a received antenna a3 of a wireless receiver 2.

[FIG. 5B] A diagram of a delay profile given as a time-domain expression of the propagation channel from transmitted antenna a2 of the wireless transmitter 1 to received antenna a3 of the wireless receiver 2.

[FIG. 5C] A diagram of a delay profile given as a time-domain expression of the propagation channel when CDTD is not applied at the wireless transmitter, i.e. when two transmitted antennas a1 and a2 simultaneously transmitted signals s1 and s2.

[FIG. 5D] A diagram of a delay profile given as a time-domain expression of the propagation channel when CDTD is applied at the wireless transmitter, and a delay time $\tau$ is applied to two transmitted antennas a1 and a2 that transmitted signals s 1 and s2.

[FIG. 6] An explanatory diagram of signals transmitted and received between the wireless transmitter 1 and the wireless receiver 2 when CDTD is not applied.

[FIG. 7] An explanatory diagram of signals transmitted and received between the wireless transmitter 1 and the wireless receiver 2 when CDTD is applied.

[FIG. 8] A block diagram of the configuration of a wireless transmitter 1 according to a first embodiment of the invention.

[FIG. 9] A block diagram of another configuration of the wireless transmitter 1 according to the first embodiment of the invention.

[FIG. 10] A block diagram of the configuration of the wireless receiver 2 according to the first embodiment of the invention.

[FIG. 11] A block diagram of another configuration of the wireless receiver 2 according to the first embodiment of the invention.

[FIG. 12] An example of a configuration of signals transmitted by the wireless transmitter 1 (FIG. 4).

[FIG. 13A] An explanatory diagram of signals transmitted from a wireless transmitter including n transmitted antennas a1 to antennas an.

[FIG. 13B] An explanatory diagram of signals transmitted from a wireless transmitter including n transmitted antennas a1 to antennas an.

[FIG. 14] An explanatory diagram of one example of a method of setting a threshold $\alpha$.

[FIG. 15] An explanatory diagram of another example of a method of setting the threshold $\alpha$.

[FIG. 16] An example of a method of arranging pilot channels according to this embodiment.

[FIG. 17A] An explanatory diagram of signals transmitted from the wireless transmitter 1 to the wireless receiver 2 according to this embodiment.

[FIG. 17B] An explanatory diagram of signals transmitted from the wireless transmitter 1 to the wireless receiver 2 according to this embodiment.

[FIG. 18] An explanatory diagram of signals transmitted from the wireless transmitter 1.

[FIG. 19] A block diagram of the configuration of a wireless transmitter 1 according to a second embodiment of the invention.

[FIG. 20] A block diagram of another configuration of the wireless transmitter 1 according to the second embodiment.

[FIG. 21] A block diagram of the configuration of a wireless receiver 2 according to the second embodiment of the invention.

[FIG. 22] An explanatory diagram of an example of signals transmitted and received between a wireless transmitter 1 and a wireless receiver 2 in a third embodiment of the invention.

[FIG. 23A] An explanatory diagrams of signals that are transmitted and received between the wireless transmitter 1 and the wireless receiver 2 in this embodiment.

[FIG. 23B] An explanatory diagrams of signals that are transmitted and received between the wireless transmitter 1 and the wireless receiver 2 in this embodiment.

[FIG. 23C] An explanatory diagrams of signals that are transmitted and received between the wireless transmitter 1 and the wireless receiver 2 in this embodiment.

[FIG. 24] An explanatory diagrams of signals that are transmitted and received between the wireless transmitter 1 and the wireless receiver 2 in this embodiment.

[FIG. 25] An explanatory diagrams of signals that are transmitted and received between the wireless transmitter 1 and the wireless receiver 2 in this embodiment.

[FIG. 26] A block diagram of the configuration of the wireless transmitter 1 according to a third embodiment of the invention.

[FIG. 27] A block diagram of another configuration of the wireless transmitter 1 according to the third embodiment of the invention.

[FIG. 28] A block diagram of the configuration of a wireless receiver 2 according to the third embodiment of the invention.

[FIG. 29] An example of a method of transmitting a signal from the wireless transmitter 1 according to this embodiment.

[FIG. 30] A block diagram of the configuration of a wireless transmitter 1 according to a fourth embodiment of the invention.
[FIG. 31] A block diagram of another configuration of the wireless transmitter 1 according to the fourth embodiment.
[FIG. 32A] A diagram of a delay profile given as a time-domain expression performance a propagation channel between a wireless transmitter and a wireless transmitter when a signal is transmitted from one of two transmitted antennas.
[FIG. 32B] A diagram of a delay profile given as a time-domain expression performance a propagation channel between a wireless transmitter and a wireless transmitter when a signal is transmitted from another of two transmitted antennas.
[FIG. 33A] An explanatory diagram of signals received by a wireless receiver from a wireless transmitter.
[FIG. 33B] An explanatory diagram of signals received by a wireless receiver from a wireless transmitter.
[FIG. 34] A diagram of an example of signals when DTD is employed.
[FIG. 35] A diagram of examples of signals when CDTD is employed.
[FIG. 36] An example of pilot channels arranged in signals transmitted by a wireless transmitter.
[FIG. 37] A diagram of pilot channels arranged in signals transmitted by a wireless transmitter.
[FIG. 38] An explanatory diagram of problems in conventional techniques.

BEST MODES FOR CARRYING OUT THE INVENTION

Embodiments of the invention will be explained with reference to the drawings. These embodiments describe a representative example of delay transmit diversity using CDTD, where signals are transmitted after applying delay among a plurality of transmitted antennas of a wireless transmitter.
In a wireless transmitter according to this embodiment using CDTD, a communication system or the like determines which unit region a pilot channel is to be arranged in. Here, a unit region is a square region in a plane defined by a frequency axis and a time axis, and is determined by a predetermined frequency band and a predetermined time band.
FIG. 1 is a diagram of an example of assigning pilot channels to unit regions. In FIG. 1, the horizontal axis represents frequency, and the vertical axis represents time. The explanation of this embodiment describes a case where, when taking a unit region belonging to the fastest time band and the lowest frequency band as a reference, a unit region belonging to the xth fastest time band and the yth lowest frequency band is expressed as S(x, y). In FIG. 1, pilot channels are arranged in unit regions S(1,1), S(1,3), S(1,5), S(1,7), S(1,9), S(1,11), S(1,13), S(1,15), S(1,17), S(1,19), S(1,21), S(1,23), S(1,25), S(1,27), S(1,29), and S(1,31). The pilot channels are arranged in unit regions belonging to a same time band (x=1) at equal intervals of $\Delta N_f = 2$.
These pilot channels are multiplied by an orthogonal variable spreading factor (OVSF) code having a code length SF = 4, along the frequency axis direction. Reference symbols #1 to #4 represent constituent elements when an OVSF code sequence $C_{SF.m}$ (m=1, 2, ..., SF, SF being the code length) whose SF = 4 is multiplied with a pilot channel as shown in equation (1) below.

[Equation 1]

$$C_{SF.m} = (\#1、\#2、\cdots、\#SF) \quad \cdots (1)$$

For example, when SF = 4, C4.1 = (1, 1, 1, 1), C4.2 = (1, 1, -1, -1), C4.3 = (1, -1, 1, -1), and C4.4 = (1, -1, -1, 1).
Different OVSF code sequence are multiplied with the pilot channels in each cell, or each sector, or each transmitted antenna, and used in differentiating the cells, sectors, and transmitted antennas. The same applies in other embodiments described later. A cell is a region in which the wireless transmitter can perform wireless communication. Sectors are regions formed when the cell is divided into a plurality of sections.
The wireless transmitter transmits pilot channels which are arranged in unit regions as shown in FIG 1. The wireless receiver performs propagation channel estimation using pilot channels arranged in the received signals through the propagation channels.
At the wireless receiver, uses a multiplied OVSF code to perform a despread process respect to pilot channels arranged in unit regions contained in a receive signal. Here, D1, D2, D3, and D4 represent despread results for pilot channels in frequency segments A1, A2, A3, A4,respectively contained in unit regions multiplied with one series of OVSF codes (#1 to #4).
Subsequently, a propagation channel estimation value HA2 in segment A2 is determined from an average value of the despread results D1, D2, and D3 of segment A2, and regions A1 and A3 on both sides thereof. Also, a propagation channel estimation value HA3 in segment A3 is determined from an average value of the despread results D2, D3, and D4 of segment A3, and regions A2 and A4 on both sides thereof. That is, propagation channel estimation values are determined by calculating moving averages.

For segments whose moving averages cannot be easily calculated, such as propagation channel estimation values HA1 and HA4 of segments A1 and A4 at both ends of the frequency axis direction, this is not the only method. For example, an average value of despread results D 1 and D2 can be used as the propagation channel estimation value HA1 of segment A1.

While in the above explanation, the despread results are averaged, the amplitude (or received power) and the phase themselves of some subcarriers of a received signal where pilot channels arranged, can be deemed as the propagation channel estimation value, the propagation channel estimation value of each pilot channel being averaged in its calculation segment. Incidentally, the arrangement of the pilot channels, the pilot channels and the OVSF codes multiplied with them, and the number of pilot channels used in calculating the propagation channel estimation values, are already known at the wireless receiver.

As described above, by taking a moving average centered on a desired propagation channel estimation segment, the precision of propagation channel estimation can be increased.

In the propagation channel estimation method described in FIG. 1, weighting can be performed during averaging.

FIG. 2 is an explanatory diagram of a weighting method used when calculating propagation channel estimation values from despread results. This example describes a weighting method when the segment which propagation channel estimation is performed in is A2 (FIG. 1), and a moving average is taken in one segment on each side of segment A2 (segments A1 and A3). The gradient of the graph in FIG. 2 is calculated by average numbers and the like. If the respective weight numbers of segments A1, A2, and A3 are z1, z2, and z3, the propagation channel estimation value HA2 of segment A2 can be expressed by the following equation (2).

[Equation 2]

$$HA2 = (z1 \times D1 + z2 \times D2 + z3 \times D3)/3 \quad \cdots (2)$$

By weighting the moving average in this manner, propagation channel estimation can be made more precise. Values such as z1 = 0.6, z2 = 1, and z3 = 0.6 are used as weight coefficients.

FIG. 3 is an explanatory diagram of an example where pilot channels are arranged in unit regions belonging to different time bands. In FIG. 3, the horizontal axis represents frequency, and the vertical axis represents time. Common pilot channels are arranged at equal intervals of $\Delta N_f = 2$ in unit regions S(1,1), S(1,3), S(1,5), S(1,7), S(1,9), S(1,11), S (1,13), S(1,15), S(1,17), S(1,19), S(1,21), S(1,23), S(1,25), S(1,27), S(1,29), and S(1,31), which belong to the time band of the first row (x=1). A common pilot channel is one in a constant arrangement, and is used commonly by a plurality of wireless receivers for propagation channel estimation.

Dedicated pilot channels are arranged at equal intervals of Nf = 2 in unit regions S(3,2), S(3,4), S(3,6), S(3,8), S(3,10), S(3,12), S(3,14), S(3,16), S(3,18), S(3,20), S(3,22), S(3,24), S(3,26), S(3,28), S(3,30), and S(3,32), which belong to the time band of the third row (x=3). An dedicated pilot channel is one in a temporary arrangement, and is used for propagation channel estimation by a wireless receiver.

While in FIG. 3, the pilot channels arranged in unit regions belonging to the time band of the third row (x=3) are Dedicated pilot channels, this is not limitative of the invention, it being possible to use common pilot channels or any pilot channels capable of propagation channel estimation.

Common pilot channels and Dedicated pilot channels will be explained in more detail later.

The pilot channels are multiplied along the frequency axis direction with the OVSF code sequence having code length SF = 4 shown above in equation (1), the Dedicated pilot channels arranged in the unit regions belonging to the time band of the third row (x=3) being multiplied with a sequence obtained by a two-cycle shift of the OVSF code sequence that is multiplied with the common pilot channels arranged in the unit regions belonging to the time band of the first row (x=1).

Subsequently, a wireless receiver that receives the signal arranged as shown in FIG. 3 performs propagation channel estimation using the pilot channels of that receive signal. The wireless receiver first performs a despread process using the multiplied OVSF code with respect to the pilot channels arranged in the unit regions contained in the receive signal. In FIG 3, D1, D2, D3, and D4 represent despread results, from the left side (the low-frequency side) for a common pilot channel multiplied with one series of OVSF codes (#1 to #4). Also, D5, D6, D7, and D8 represent despread results, from the left side (the low-frequency side) for Dedicated pilot channels multiplied with one series of OVSF codes (#1 to #4).

Subsequently, for example, propagation channel estimation value HA2 in segment A2 is determined by determining average values of despread results D1, D2, D3, D5, D6, and D7, and calculating a moving average. Propagation channel estimation value HA3 in segment A3 is determined by determining average values of despread results D2, D3, D4, D6, D7, and D8, and calculating a moving average.

While in the above explanation, all the pilot channels arranged in the propagation channel estimation segments are used in estimating the propagation channel, in accordance with the moving speed of the wireless receiver and the like, it is possible to use only the common pilot channels in estimating the propagation channel. For example, in accordance with the moving speed, the propagation channel estimation value HA2 in segment A2 can be switched between an average value of despread results D1, D2, D3, D5, and D6, and an average value of despread results D1, D2, and D3.

Furthermore, while in the above explanation, an average is taken of the despread results, the amplitude (or received power) and the phase themselves of some subcarriers of a received signal where pilot channels arranged, can be deemed as the propagation channel estimation value, and the propagation channel estimation value of each pilot channel can be averaged in its propagation channel estimation value calculation segment. Incidentally, the arrangement of the pilot channels, the pilot channels and the OVSF codes multiplied with them, and the number of pilot channels used in calculating the propagation channel estimation values, are already known at the wireless receiver.

The propagation channel estimation value calculation method described above is merely one example, it being possible, when estimating the propagation channel in a desired segment, to increase the SINR or the signal to noise power ratio (SNR) at the time of propagation channel estimation by using a plurality of peripheral pilot channels.

While FIG. is an example using common pilot channels or Dedicated pilot channels, other types of pilot channels that are capable of propagation channel estimation can be used instead.

Common pilot channels and Dedicated pilot channels are as follows.

Common pilot channels and Dedicated pilot channels are proposed as physical channels in evolved UTRA and UTRAN, which are being considered in 3rd Generation Partnership Project (3GPP). A common pilot channel is one that is used commonly for propagation channel estimation by a plurality of wireless receivers. An dedicated pilot channel is one that is used for propagation channel estimation by one wireless receiver.

Common pilot channels correspond to pilot channels in wideband code division multiple access (W-CDMA), and are used in estimating downlink propagation channel states, cell searches, and propagation channel loss measurement of uplink transmission power control, in adaptive modulation and coding schemes (AMCS).

Dedicated pilot channels can be used for purposes of strengthening downlink common pilot channels with respect to a mobile station having low received power, having been transmitted from a transmitted antenna having a different propagation channel (directivity) to shared-cell antennas, such as an adaptive array antenna. Physical channels for W-CDMA and high speed downlink packet access (HSDPA) using common pilot channels and Dedicated pilot channels are disclosed in ‘Keiji Tachikawa, "W-CDMA Mobile Communication Methods", ISBN4-621-04894-5’.

{First Embodiment}

In this embodiment, propagation channel estimation value calculation segments are changed by switching the number of pilot channels to be used in propagation channel estimation according to whether CDTD, a mode of delay transmit diversity, is applied.

FIG. 4 is a schematic diagram of signals that arrive at a wireless receiver 2 from a wireless transmitter 1 according to a first embodiment of the invention. The wireless transmitter 1 transmits signals s1 and s2 from two transmitted antennas a1 and a2, and the wireless receiver 1 receives these signals at one received antenna a3.

FIGS. 5A, 5B, 5C, and 5D are explanatory diagrams of signals transmitted from the wireless transmitter 1 to the wireless receiver 2 according to this embodiment. FIG 5A is a diagram of a delay profile given as a time-domain expression of the propagation channel from transmitted antenna a1 of the wireless transmitter 1 to the received antenna a3 of the wireless receiver 2. Signal s1 is received at time $t_1$. FIG. 5B is a diagram of a delay profile given as a time-domain expression of the propagation channel from transmitted antenna a2 of the wireless transmitter 1 to the received antenna a3 of the wireless receiver 2. Signal s2 is received at time $t_2$.

FIG. 5C is a diagram of a delay profile given as a time-domain expression of the propagation channel when CDTD is not applied at the wireless transmitter 1, i.e. when the two transmitted antennas a1 and a2 transmit the signals s1 and s2 simultaneously. Signal s1 is received at time $t_1$, and signal s2 is received at time $t_2$.

FIG. 5D is a diagram of a profile delay given as a time-domain expression of the propagation channel when CDTD is applied at the wireless transmitter 1, and signals s1 and s2 are transmitted from the two transmitted antennas a1 and a2 with a delay time $\tau$ appended between them. Signal s1 is received at time $t_1$, and signal s2 is received at time $t_3$ (= time $t_2 + \tau$).

Here, not applying CDTD signifies that the delay time $\tau$ between transmitted antennas a1 and a2 is $\tau = 0$. This is equivalent to saying that the number of pilot channels used in propagation channel estimation is switched according to whether the delay time $\tau = 0$ or $\tau \neq 0$.

FIG. 6 is an explanatory diagram of signals transmitted and received between the wireless transmitter 1 and the wireless receiver 2 when CDTD is not applied. FIG. 6 (a) is a delay profile of FIG. 5C given as a frequency axis expression, where the horizontal axis represents frequency and the vertical axis represents received power. FIG. 6 (b) is a diagram of an example of a pilot channel arrangement for a transmitted signal of the wireless transmitter 2.

FIG. 6 (b) is an arrangement of pilot channels in the frequency axis direction at intervals of $\Delta N_f$=2, in unit regions S(1,1), S(1,3), S(1,5), S(1,7), S(1,9), S(1,11), S(1,13), S(1,15), S(1,17), S(1,19), S(1,21), S(1,23), S(1,25), S(1,27), S (1,29), and S(1,31) belonging to the first-row frequency band (x=1).

The pilot channels are multiplied with an OVSF code having a code length SF = 4 along the frequency axis direction. In FIG. 6 (b), reference symbols #1 to #4 represent constituent elements when using the OVSF code sequence $C_{SF.m}$ (m=1, 2, ..., SF, SF being the code length) having SF = 4, shown in equation (1) above.

When the wireless transmitter 1 transmits signals without applying CDTD, and the wireless receiver 2 receives the signals with the pilot channel arrangement shown in FIG 6 (a), the wireless receiver 2 determines, for example, the propagation channel estimation value HA2 in segment A2 of FIG. 6 (b) by calculating the average value of despread results D1, D2, and D3 of the pilot channels arranged in segments A1, A2, and A3. The propagation channel estimation value of segment A3 is determined by calculating the average value of despread results D2, D3, and D4 of the pilot channels arranged in segments A2, A3, and A4.

Thus in FIG. 6 (b), three segments (e.g. segments A1 to A3) provide frequency bands used for calculating the propagation channel estimation value of a predetermined segment. That is, the average number of pilot channels $N_{avg}$ = 3.

FIG. 7 is an explanatory diagram of signals transmitted and received between the wireless transmitter 1 and the wireless receiver 2 when CDTD is applied.

FIG. 7 (a) is a frequency axis expression of the delay profile of FIG. 5D for the receive signal of the wireless receiver 2 in FIG. 4, where the horizontal axis represents frequency and the vertical axis represents received power.

FIG. 7 (b) is an arrangement of pilot channels in the frequency axis direction at intervals of $\Delta N_f$ = 2, in unit regions S(1,1), S(1,3), S(1,5), S(1,7), S(1,9), S(1,11), S(1,13), S(1,115), S(1,17), S(1,19), S(1,21), S(1,23), S(1,25), S (1,27), S(1,29), and S(1,31) belonging to the first-row frequency band (x=1).

When the wireless transmitter 1 transmits signals after applying CDTD, and the wireless receiver 2 receives the signals with the pilot channel arrangement shown in FIG. 7 (b), the wireless receiver 2 determines, for example, the propagation channel estimation value HA2 in segment A2 by calculating the despread result D2 of the pilot channels arranged in segment A2. The propagation channel estimation value of segment A3 is determined by calculating the average value of despread result D3 of the pilot channels arranged in segment A3. That is, in FIG. 7 (b), the average number of pilot channels $N_{avg}$ = 1.

By reducing the average number of pilot channels used in calculating the propagation channel estimation value so that $N_{avg}$ = 1 when applying CDTD, in contrast to $N_{avg}$ = 3 when not applying CDTD, the frequency band $F_s$ used in calculating the propagation channel estimation value can be made narrower. When not applying CDTD in FIG. 6 (b), the frequency bandwidth of $N_{avg}$ is 24 times the frequency bandwidth in the unit region. When applying CDTD in FIG 7 (b), the frequency bandwidth of $N_{avg}$ is 8 times the frequency bandwidth in the unit region.

This makes it possible to reduce the difference in frequency fluctuation of the pilot channels arranged in segments used in calculating the propagation channel estimation value, and makes propagation channel estimation more precise.

While in this example, the pilot channels are arranged in unit regions belonging to the same frequency band (the first-row (x=1) frequency band), even if they are arranged in unit regions belonging to different frequency bands, the frequency band $F_s$ used in propagation channel estimation value calculation can be varied by similarly varying the average number of pilot channels used in propagation channel estimation value calculation.

For example, when the wireless receiver 2 receives a signal with the pilot channel arrangement shown in FIG 3, if CDTD is not being applied, it calculates the propagation channel estimation value HA2 in segment A2 from the average value of the despread results D1, D2, D3, D5, D6, and D7. If CDTD is being applied, it calculates HA2 from the average of despread results D2 and D6.

FIG. 8 is a block diagram of the configuration of a wireless transmitter 1 (FIG 4) according to the first embodiment of the invention. The wireless transmitter 1 includes each-user signal processors 100a and 100b, each-antenna signal processors 200a and 200b, a controller 301, a pilot channel generator 302, a common control channel generator 303, a phase rotation amount calculator 304, a subcarrier assigner 305, and transmitted antennas a1 and a2.

The each-user signal processors 100a and 100b performs signal processes destined for each user. The controller 301 outputs with-or-without CDTD information j 1, and delay time information j2 relating to delay time between the transmitted antennas a1 and a2, to the common control channel generator 303 and the phase rotation amount calculator 304 respectively. The common control channel generator 303 generates a common control channel that stores the with-or-without CDTD information j 1 output by the controller 301.

The pilot channel generator 302 generates a pilot channel multiplied with an OVSF code sequence, and outputs it to the subcarrier assigner 305.

The phase rotation amount calculator 304 calculates a phase rotation amount of each subcarrier from the transmitted antenna delay time information j2 output from the controller 301. Based on subcarrier assignment information j3 output by an upper layer such as a media access control (MAC) unit or the like, the subcarrier assigner 305 assigns signals output by the each-user signal processors 100a and 100b, the pilot channel output by the pilot channel generator 302, and the signal output by the common control channel generator 303, to the subcarriers. The each-antenna signal processors 200a and 200b perform signal processes of each of the transmitted antennas a1 and a2.

The each-user signal processor 100a includes an error-correction coding unit 101 that performs error-correction coding of information data streams, and a modulator 102 that performs a modulation process such as quadrature phase shirt keying (QPSK) and quadrature amplitude modulation (16QAM) with respect to an error-correction coding unit output. The configuration of the each-user signal processor 100b is the same as that of the each-user signal processor 100a, and will not be repetitiously explained.

Signals output by the each-user signal processors 100a and 100b are assigned, based on the subcarrier assignment information j3 reported by an upper level such as a MAC unit, in the subcarrier assigner 305 that assigns to suitable subcarriers, to unit regions which are suitable subcarriers, and are then output to the each-antenna signal processors 200a and 200b. The subcarrier assigner 305 also includes a function of assigning pilot channels that are output by the pilot channel generator 302 to unit regions where the pilot channels will be arranged.

The each-antenna signal processor 200a includes a phase rotator 201, an inverse fast Fourier transform (IFFT) unit 202, a parallel/series converter 203, a guard interval (GI) adding unit 204, a filter unit 205, a digital/analog (D/A) converter 206, and a wireless frequency converter 207.

The phase rotator 201 performs a phase rotation of each subcarrier with respect to the signal output by the subcarrier assigner 305. The IFFT unit 202 performs an inverse fast Fourier transform, converting a signal on the frequency axis to one on the time axis. The parallel/series converter 203 performs a parallel/series conversion of a signal output by the IFFT unit 202. The GI adding unit 204 adds a guard interval to a signal output from the parallel/series converter 203. The filter unit 205 extracts only signals in a desired band with respect to the signal output by the GI adding unit 204. The D/A converter 206 performs a process of digital/analog conversion to a signal output by the filter unit 205. The wireless frequency converter 207 converts a signal output by the D/A converter 206 to a wireless frequency.

The each-antenna signal processor 200b has the same configuration as the each-antenna signal processor 200a, and will not be repetitiously explained. Signals from the each-antenna signal processors 200a and 200b are output to the transmitted antennas a1 and a2, and are transmitted as wireless signals.

When appending a phase-rotation at the phase rotator 201, the phase-rotation amount $\theta_m$ is $\theta_m = 2\pi f_m \cdot (n-1) T$. Here, $f_m$ is frequency interval between the $0^{th}$ subcarrier and the $m^{th}$ subcarrier, expressed as $f_m = m/ T_5$. $T_5$ is the width of the time band of the unit region. Also, (n-1) is the size of the cyclic delay time at transmitted antenna an (in FIG. 8, a2, i.e. n = 2) with respect to the signal transmitted from transmitted antenna a1.

In the configuration shown in FIG. 8, the with-or-without CDTD information j 1 is stored on the common control channel. It need only be stored in a unit region where with-or-without CDTD information j1 is obtained before the wireless receiver 2 estimates the propagation channel using pilot channels. For example, it can be stored in a shared control signaling channel. Common control channels and common signaling channels will be explained later.

While FIG. 8 is an example where there are two users and two transmitted antennas, the configuration is the same for three or more users and three or more transmitted antennas.

When signals that are scrambled with specific scramble codes, determined for each transmitted antenna, each sector, and each base station forming a wireless transmitter, are transmitted to each transmitted antenna, there are cases where, seen from one transmitted antenna end, the signal of the other transmitted antenna does not appear to have been simply delayed; this embodiment can also be applied in such cases.

FIG 9 is a block diagram of another configuration of the wireless transmitter 1 (FIG 4) according to the first embodiment of the invention. The controller 301 of the wireless transmitter 1 outputs the with-or-without CDTD information j1 to a propagation channel estimation value calculation pilot channel number-determining unit 307. The controller 301 outputs the transmitted antenna delay time information j2 to the phase rotation amount calculator 304.

The propagation channel estimation value calculation pilot channel number-determining unit 307 determines, based on the with-or-without CDTD information j1 output from the controller 301, a symbol number of pilot channels to be used in propagation channel estimation value calculation, and outputs pilot channel number information j4 to the common control channel generator 303. The common control channel generator 303 generates a common control channel that stores the pilot channel number information j4 output by the propagation channel estimation value calculation pilot channel number-determining unit 307.

The pilot channel generator 302 generates a pilot channel multiplied with an OVSF code sequence, and outputs it to the subcarrier assigner 305.

Based on the transmitted antenna delay time information j2 output from the controller 301, the phase rotation amount calculator 304 calculates a phase-rotation amount of each subcarrier. Based on the phase-control report signal j3 output by an upper level such as a MAC unit, the subcarrier assigner 305 assigns the signals output by the each-user signal processors 100a and 100b, the pilot channel output by the pilot channel generator 302, and the signal output by the common control channel generator 303 to the subcarriers. Since the configuration is otherwise the same as that of the wireless transmitter 1 in FIG. 8, like reference numerals are appended and it is not repetitiously explained.

FIG. 10 is a block diagram of the configuration of the wireless receiver 2 (FIG. 4) according to the first embodiment of the invention. The wireless receiver includes a received antenna a3, a wireless frequency converter 401, an analog/digital (A/D) converter 402, a filter unit 403, a GI remover 404, a series/parallel converter 405, a fast Fourier transform (FFT) unit 406, a propagation channel estimator 407, a propagation channel weight coefficient calculator 408, a propagation channel distortion-compensator 409, a parallel/series converter 410, a demodulator 411, and an error-correction decoder 412.

The wireless frequency converter 401 frequency-converts a wireless signal received by the received antenna a3 to a base band signal. The A/D converter 402 converts a signal output by the wireless frequency converter 401 to a digital signal. The filter unit 403 extracts only signals in a desired band from those output by the A/D converter 402. The GI remover 404 removes the guard interval, appended at the wireless transmitter 1 to avoid distortion by the delay waves, from signals output by the filter unit 403. The series/parallel converter 405 converts the signals output by the GI remover 404 from series to parallel. The FFT unit 406 performs a fast Fourier transform process that converts a signal output by the series/parallel converter 405 from a time domain signal to a frequency domain signal. In compliance with the pilot channel number information j4 relating to the number of pilot channels to be used in calculating the propagation channel estimation value reported by a MAC unit 500, the propagation channel estimator 407 performs a propagation channel estimation from the pilot channel output by the FFT unit 406.

The propagation channel weight coefficient calculator 408 calculates weight coefficients for compensating propagation channel distortion, using a method such as minimum mean square error (MMSE) maximum ratio combing (MRC) from a signal output by the propagation channel estimator 407. The propagation channel distortion-compensator 409 compensates propagation channel distortion due to facing the like by multiplying the signal output by the FFT 406 with a signal output by the propagation channel weight coefficient calculator 408. The parallel/series converter 410 converts a signal output by the propagation channel distortion-compensator 409 from parallel to series. The demodulator 411 performs a demodulation process such as QPSK and 16QAM to a signal output by the parallel/series converter 410. The error-correction decoder 412 performs an error-correction decoding process to a signal output by the demodulator 411, and outputs an information data signal thereby obtained to the MAC unit 500.

The MAC unit 500, which has a function of controlling the wireless receiver 2, includes a propagation channel estimation value calculation pilot channel number determining unit 501 that, from information data signals output by the error-correction decoder 412, acquires the with-or-without CDTD information j1 (FIG. 8) from an information data signal on the common pilot channel, determines the number of pilot channels to be used in propagation channel estimation value calculation, and outputs pilot channel number information j4 to the propagation channel estimator 407.

When the with-or-without CDTD information j 1 is stored on a shared control signaling channel, the MAC unit 500 acquires the with-or-without CDTD information j 1 from the shared control signaling channel contained in the information data signal output by the error-correction decoder 412.

While in the configuration of the wireless receiver 2 of FIG. 8, the propagation channel estimation value calculation pilot channel number determining unit 501 is provided in the MAC unit 500, the invention is not limited to this arrangement, it being possible to provide it in an upper level that controls the wireless receiver 2. Other constituent elements of the MAC unit 500 are disclosed in, for example, 3GPP Report R2-051738, "'Evolution of Radio Interface Protocol Architecture," etc.

As described above, the wireless transmitter 1 of FIG. 8 transmits a signal containing a control channel storing the with-or-without CDTD information j1, the wireless receiver 2 of FIG. 10 receives the transmitted signal from the wireless transmitter, acquires the with-or-without CDTD information j1 from the received signal, derives the number of pilot channels to be used in calculating the propagation channel estimation value from the with-or-without CDTD information j1, and calculates a propagation channel estimation value based on the derived propagation channel estimation value calculation pilot channel number information j4, whereby the propagation channel can be estimated with high precision.

At the wireless receiver 2 of FIG 20, the propagation channel estimation value calculation pilot channel number determining unit 501 (pilot channel determining unit) acquires pilot channel information relating to the pilot channels to be used in propagation channel estimation contained in the signal received by the received antenna a3, and the propagation channel estimator 407 estimates the propagation channel using, from among the pilot channels contained in the signal received by the received antenna a3, pilot channels that are determined by the pilot channel information.

While in this example, at the wireless receiver 2 (FIG 10), the propagation channel estimation value calculation pilot channel number determining unit 501 acquires the pilot channel number information j4, which indicates the number of pilot channels to be used in propagation channel estimation and is contained in the signal received by the received antenna a3, the configuration is not limited to this. For example, the propagation channel estimation value calculation pilot channel number determining unit 501 can acquire the type of pilot channels (Dedicated pilot channels, common pilot channels, etc.) to be used in propagation channel estimation, contained in the signal received by the received antenna a3.

FIG 11 is a block diagram of another configuration of the wireless receiver 2 (FIG. 4) according to the first embodiment of the invention. In compliance with the pilot channel number information j4 relating to the number of pilot channels to be used in calculating the propagation channel estimation value reported by the MAC unit 500, the propagation channel estimator 407 of the wireless receiver 2 estimates a propagation channel from the pilot channel output by the FFT 406.

The MAC unit 500, which has a function of controlling the wireless receiver 2, includes a propagation channel estimation value calculated pilot channel number acquiring unit 502 that acquires the pilot channel number information j4 relating to the number of pilot channels to be used in calculating the propagation channel estimation value, from the information data stream of the common pilot channel among the information data streams output by the error-correction decoder 412, and outputs the pilot channel number information j4 to the propagation channel estimator.

When the pilot channel number information j4 is stored on a shared control signaling channel, the MAC unit 500 acquires the pilot channel number information j4 from the shared control signaling channel of the information data stream output by the error-correction decoder 412.

While in the configuration of the wireless receiver 2 in FIG. 11, the propagation channel estimation value calculated pilot channel number acquiring unit 502 is provided in the MAC unit 500, the configuration is not limited to this, and it can be provided instead in an upper level that controls the wireless receiver 2.

Since the configuration of FIG. 11 is otherwise the same as that of the wireless receiver 2, like reference numerals are appended and it is not repetitiously explained.

As described above, based on the with-or-without CDTD information j1 that is set, the wireless transmitter 1 of FIG 9 derives the number of pilot channels to be used in calculating the propagation channel estimation value, stores the derived pilot channel number information j4 on a common pilot channel and the like, and transmits it to the wireless receiver 2 of FIG. 11. Consequently, the wireless receiver 2 need not derive the number of pilot channels to be used in calculating the propagation channel estimation value, and the processing load at the wireless receiver can be reduced.

FIG. 12 is another example of a configuration of signals transmitted by the wireless transmitter 1 (FIG. 4). In addition to common pilot channels and Dedicated pilot channels, other types of physical channels such as common control channels, synchronization channels, shared control signaling channels, and shared data channels, are proposed in evolved UTRA and UTRAN, which are being considered in 3GPP.

The channels of FIG 12 are pursuant to the above proposals.

Synchronization channels correspond to synchronization channels in W-CDMA schemes, and are used in cell search of mobile stations functioning as wireless receivers, wireless frames for OFDM signals, timeslots, transmission timing intervals (TTI), and OFDM symbol timing synchronization.

Common control channels are contained in common control information such as broadcast information (corresponding to broadcast channel) that corresponds to first common control physical channels, second common control physical channels, and pacing indicator channels in W-CDMA, packet pacing indicator information (corresponding to pacing indicator channel) that specifies whether there is a packet call-up, packet pacing information (corresponding to pacing channel) in response to a packet call-up, and downlink access information (corresponding to downlink access channel).

Shared control signaling channels correspond to fast downlink common channel-related common control channels contained in fast physical common channels, downlink specific control channels, and acquisition indicators in HSDPA schemes, and are used in transmission of information requires for demodulation of fast downlink common channels at each of a plurality of mobile stations working in conjunction with each other, information required for error-correction decoding processes and hybrid automatic repeat requests (HARQ), scheduling information of wireless resources (frequency, time), and so on.

Shared data channels correspond to fast downlink common channels contained in fast physical common channels and downlink specific control channels in HSDPA schemes, and are used in transmission of packet data from an upper level to mobile stations. Physical channels for W-CDMA and HSDPA are disclosed in 'Keiji Tachikawa, "W-CDMA Mobile Communication Methods", ISBN4-621-04894-5'.

As shown in FIG. 12, after transmitting the common control channel symbols, shared data channel symbols, which information data signal of each user is stored in, are transmitted. As shown in FIG. 6 (b) and FIG 7 (b), pilot channels are arranged in the shared data channel symbols. With-or-without CDTD information j1 is stored in the common control channel symbols. Alternatively, the with-or-without CDTD information j1 can be stored in shared control signaling channels.

When the wireless receiver 2 receives the signal having the configuration shown in FIG 12, it acquires arrangement information of the shared data channel symbols from the common control channel symbols. It then determines the number of pilot channels to be used in calculating the propagation channel estimation value from the with-or-without CDTD information j1, and uses the pilot channels of the shared data channel symbols to estimate a propagation channel for each subcarrier. Known common pilot channels are inserted in the common control channel symbols according to a predetermined arrangement, and are used in estimating the propagation channels.

Thus, irrespective of whether CDTD is applied, the number of pilot channels transmitted from the wireless transmitter to the wireless receiver is the same. When not applying CDTD, the number of pilot channels used in calculating the propagation channel estimation value at the wireless receiver is fewer than when applying CDTD. Therefore, the frequency bandwidth used when calculating the propagation channel estimation value at the wireless receiver can be made narrower. As a result, when applying CDTD, even if the received power fluctuates severely across a wide frequency band, fluctuation in the received power can be reduced in the frequency band for estimating the propagation channel, which can be estimated with high precision.

Furthermore, when not applying CDTD, since the propagation channel can be estimated using a great many pilot channels arranged in a wide frequency band, the precision of the propagation channel estimation can be increased.

{Second Embodiment}

In this embodiment, in CDTD, the number of pilot channels used in calculating the propagation channel estimation value is switched according to the result of a comparison between a delay time that is appended between transmitted antennas and a threshold that is determined by a system applying CDTD. In the following example, pilot channels are arranged in unit regions belonging to the same frequency band.

A threshold $\alpha$ for switching the number of pilot channels used in calculating the propagation channel estimation value is set at a wireless transmitter 1 applying CDTD. When the delay time $\tau$ between the transmitted antennas is larger than the threshold $\alpha$, the number of pilot channels used in calculating the propagation channel estimation value is set to a smaller number than when the delay time $\tau$ between the transmitted antennas is smaller than the threshold $\alpha$.

When there is a plurality of transmitted antennas, the delay time $\tau$ between them is the delay time between a reference transmitted antenna and an antenna that appends the maximum delay.

FIGS. 13A and 13B are explanatory diagrams of signals transmitted from a wireless transmitter including n transmitted antennas a1 to an. FIG 13B is the delay time $\tau$ between the transmitted antennas when wireless transmitter shown in FIG. 13A, which includes a total number n of transmitted antennas a1, a2, ..., an, applies CDTD in transmitting signals. Signals s1, s2, ..., sn are incoming waves of signals transmitted from the transmitted antennas a1, a2, ..., an, respectively.

FIG 14 is an explanatory diagram of one example of a method of setting the threshold $\alpha$. In FIG 14, at a wireless transmitter applying CDTD, users on a shared data channel are assigned to chunks. As shown in FIG. 14, users of the shared data channel are assigned in segment Fc units that contain a plurality of subcarriers in the frequency axis direction, and assigned in units known as TTI that contain a plurality of OFDM symbols in the time axis direction. Regions defined by these Fc and TTI are represented as chunks. A chunk is a region defined by a predetermined frequency band and a predetermined time length, and can include one or a plurality of unit regions.

At the wireless transmitter applying CDTD, a user may desire to obtain a frequency diversity effect by performing frequency diversity, or he may desire to obtain a multi-user diversity effect by performing multi-user diversity. In the user assignments shown in FIG 14, a frequency diversity region which is a frequency domain where frequency diversity effect is desired, and a multi-user diversity region which is a frequency domain where multi-user diversity is desired, are switched in chunk units.

Frequency diversity is a technique whereby, when transmitting signals from a wireless transmitter including a plurality of transmitted antennas to a wireless receiver, a large delay time difference is applied between the signals transmitted from the plurality of transmitted antennas. Frequency diversity effect is a technique of increasing communication quality using signals in regions having good reception quality at the wireless receiver, by utilizing the large delay time difference applied between signals transmitted from a plurality of transmitted antennas. Incidentally, a unit region that is transmitted from the wireless transmitter to the wireless receiver while applying frequency diversity is termed as frequency diversity region.

Multi-user diversity is a technique whereby, when transmitting signals from a wireless transmitter including a plurality of transmitted antennas to a wireless receiver, a small delay time difference is applied between the signals transmitted from the plurality of transmitted antennas. Multi-user diversity effect is a technique of increasing communication quality using signals in regions having low received power fluctuation, by utilizing the small delay time difference applied between signals transmitted from a plurality of transmitted antennas. Incidentally, a unit region that is transmitted from the wireless transmitter to the wireless receiver while applying multi-user diversity is termed as multi-user diversity region.

For a chunk where it is desired to obtain multi-user diversity, it is desirable that frequency fluctuation is low in surrounding frequency regions, and the CDTD delay time is at a low setting. For a chunk where it is desired to obtain frequency diversity, it is desirable that frequency fluctuation is high in surrounding frequency regions, and the CDTD delay time is at a large setting.

If Fc is the frequency bandwidth of a chunk, the threshold a for switching the arrangement of the pilot channels is set such that $\alpha$ = 1/Fc. When the delay time $\tau$ between the transmitted antennas is larger than the threshold $\alpha$, the number of pilot channels used in calculating the propagation channel estimation value is set to a number smaller than when the delay time $\tau$ between the transmitted antennas is smaller than the threshold $\alpha$.

FIG. 15 is an explanatory diagram of another example of a method of setting the threshold $\alpha$. In this method, users on a shared data channel are assigned to subcarriers. As shown in FIG. 15, users on a shared data channel are assigned across a plurality of chunks in the frequency axis direction. In FIG. 15, the users are assigned across three chunks. In the time axis direction, they are assigned in TTI units containing a plurality of OFDM symbols.

At the wireless transmitter applying CDTD, a user may desire to obtain a frequency diversity effect, or he may desire to obtain a multi-user diversity effect. In the user assignments shown in FIG. 15, a frequency diversity region which is a frequency domain where frequency diversity effect is desired, and a multi-user diversity region which is a frequency domain where multi-user diversity is desired, are switched in user units. For a user who desires to obtain a multi-user diversity effect, it is desirable that, in the frequency region of that user assigned across a plurality of chunks, frequency fluctuation is low, and the CDTD delay time $\tau$ is at a low setting. For a user who desires to obtain a frequency diversity effect, it is desirable that, in the frequency region of that user assigned across a plurality of chunks, frequency fluctuation is high, and the CDTD delay time $\tau$ is at a large setting.

If Fu is the frequency bandwidth of a user assigned across a plurality of chunks, the threshold $\alpha$ for switching the pilot arrangement is set such that $\alpha$ = 1/Fu. When the delay time $\tau$ between the transmitted antennas is larger than the threshold $\alpha$, the number of pilot channels used in calculating the propagation channel estimation value is set to a number smaller than when the delay time between the antennas is smaller than the threshold $\alpha$.

A specific example of the second embodiment will be explained in the same manner as the first embodiment, as shown in FIG 4, by describing a case where a wireless transmitter transmits signals from two transmitted antennas a1 and a2, and a wireless receiver receives those signals at one received antenna a3. The method shown in FIG. 14 is used to assign the users on the shared data channel to subcarriers.

FIG. 16 is an example of a method of arranging pilot channels according to this embodiment. In a wireless transmitter according to this embodiment that applies CDTD, it is determined which unit region to arranged pilot channels in according to the scheme and the like of the communication system scheme. In FIG. 16 (a), the horizontal axis represents frequency, and the vertical axis represents received power.

In FIG. 16 (b), pilot channels are arranged in unit regions S(1,1), S(1,3), S(1,5), S(1,7), S(1,9), S(1,11), S(1,13), S(1,15), S(1,17), S(1,19), S(1,21), S(1,23), S(1,25), S(1,27), S(1,29), and S(1,31). These pilot channels are arranged in unit regions belonging to the same time band (x=1) at intervals of $\Delta$Nf = 2 in the frequency axis direction. The pilot channels are multiplied with an OVSF code having a code length of SF = 4 along the frequency axis direction. As in the description of the first embodiment, reference symbols #1 to #4 represent constituent elements of the OVSF code sequence. The number of unit regions (number of subcarriers) of one chunk is 24, and, if Fc is the frequency bandwidth of one chunk, the threshold $\alpha$ = 1/Fc.

FIG.S 17A and 17B are explanatory diagrams of signals transmitted from the wireless transmitter 1 according to this embodiment to a wireless receiver 2. The wireless transmitter 1 transmits signals in the pilot channel arrangement shown in FIG 16 (b) after applying a delay time $\tau = T_1$ to the transmitted antennas a1 and a2. FIG. 17A is the delay profile given as a time domain expression of the propagation channel at this time.

In FIG. 17A, signal s1 is output from transmitted antenna a1, and signal s1 is output from transmitted antenna a2. FIG. 16 (b) is a frequency-domain expression of FIG. 17A. As shown in FIG. 16 (a) and (b), since $\alpha = 1/Fc > T_1$, when applying the delay time $\tau = T_1$ between the transmitted antennas a1 and a2, the wireless transmitter stores information indicating that $\alpha = 1/Fc > T_1$ in the common control channel shown in FIG. 12 before transmission.

The received antenna a3 (FIG. 10) of the wireless receiver 2 receives the signals arranged as shown in FIG. 16 (b) from the wireless transmitter 1, via a propagation channel having the delay profile shown in FIG. 17A.

The wireless receiver 2 receives the signals arranged as shown in FIG. 16 (b) and the information indicating that $\alpha = 1/Fc > T_1$, and performs propagation channel estimation using an average number of pilot channels Navg that is set when $\alpha = 1/Fc > T_1$. In FIG. 16 (b), Navg = 3.

As shown in FIG. 16 (b), the wireless receiver 2 performs a despread process by multiplying the pilot channels with an OVSF code. From the left side, the despread results are represented by D1, D2, D3, and D4. Subsequently, the propagation channel of, for example, segment A2 in FIG. 16 (b) is estimated by calculating the average of the despread results D1, D2, and D3 of the pilot channels arranged in segments A1, A2, and A3.

FIG. 18 is an explanatory diagram in a case where the wireless transmitter 1 transmits signals having the pilot channel arrangement shown in FIG. 18 (b) after applying a delay time $\tau = T_2$ between the transmitted antennas a1 and a2. The pilot channel arrangement in FIG. 18 (b) is the same as that in FIG. 16 (b). FIG. 17B is a delay profile given as a time-domain expression of the propagation channel at this time. In FIG. 17B, signal s1 is output from transmitted antenna a1, and signal s2 is output from transmitted antenna a2. FIG. 18 (b) is a frequency-domain expression of FIG 17B. As shown in FIG. 18, since $\alpha = 1/Fc < T_2$, when applying the delay time $\tau = T_2$ between the transmitted antennas a1 and a2, the wireless transmitter stores information indicating that $\alpha = 1/Fc < T_2$ in the common control channel shown in FIG. 12 before transmitting it.

The received antenna a3 (FIG. 10) of the wireless receiver 2 receives the signals arranged as shown in FIG. 16 (b) from the wireless transmitter 1, via a propagation channel having the delay profile shown in FIG. 17A.

The wireless receiver 2 receives the signals arranged as shown in FIG. 18 (b) and the information indicating that $\alpha = 1/Fc<T_2$, and performs propagation channel estimation using an average number of pilot channels Navg that is set when $\alpha = 1/Fc<T_2$. In FIG. 18 (b), Navg = 1.

As shown in FIG. 18 (b), the wireless receiver 2 performs a despread process by multiplying the pilot channels with an OVSF code. From the left side (the low-frequency side), the despread results are represented by D1, D2, D3, and D4. Subsequently, the propagation channel of, for example, segment A2 in FIG. 16 (b) is estimated by calculating the despread result D2 of the pilot channels arranged in segment A2.

Thus in the system applying CDTD, when the delay amount between the transmitted antennas is smaller than a threshold $\alpha$, the average number for calculating propagation channel estimation Navg = 3, whereas, when the delay amount between the transmitted antennas is larger than the threshold $\alpha$, this average number is reduced to Navg = 1, whereby the frequency band Fs used in calculating the propagation channel estimation value can be made narrower.

This makes it possible to reduce the difference in frequency band fluctuation among the pilot channels arranged in segments used in calculating the propagation channel estimation value, and increases the precision of the propagation channel estimation.

While the foregoing example describes an operation when pilot channels are arranged in unit regions belonging to the same time band (x=1), even if they are arranged in different time bands, the frequency band Fs used in calculating the propagation channel estimation value can be similarly varied by varying the average number of pilot channels used in calculating the propagation channel estimation value.

For example, when the wireless receiver 2 receives the signals with the pilot channel arrangement of FIG. 3, if $\alpha = 1/Fc> \tau$, it calculates propagation channel estimation value HA2 in segment A2 from the average of despread results D1, D2, D3, D5, D6, and D7, whereas if $\alpha = 1/Fc< \tau$, it calculates value HA2 from the average of D2 and D6.

FIG. 19 is a block diagram of the configuration of the wireless transmitter 1 according to the second embodiment of the invention. A controller 301 outputs information j5 indicating whether the delay time of the transmitted antennas is larger or smaller than a threshold, and transmitted antenna delay time information j2, to a common control channel generator 303 and a phase rotation amount calculator 304 respectively. The common control channel generator 303 generates a common control channel that stores the information j5 output by the controller 301.

The configuration of the wireless transmitter 1 is otherwise the same as that of the wireless transmitter 1 (FIG. 8) according to the first embodiment, and will not be repetitiously explained.

While in the configuration described in FIG. 19, the information j5 indicating whether the delay time of the transmitted antennas is larger or smaller than the threshold is stored in a common control channel, the configuration is not limited to this, it being possible to store the information j 5 in any channel that enables the wireless receiver 2 to obtain the information j5 indicating whether the delay time of the transmitted antennas is larger or smaller than a threshold, before using the pilot channels to estimate the propagation channel. For example, it can be stored in a shared control signaling channel. The common control channel and the shared control signaling channel are the same as those in the first embodiment.

FIG 20 is a block diagram of another configuration of the wireless transmitter 1 (FIG. 4) according to the second embodiment. A controller 301 of the wireless transmitter 1 outputs information j 5, indicating whether the delay time of the transmitted antennas is larger or smaller than a threshold, to a propagation channel estimation value calculation pilot channel number-determining unit 307. The controller 301 outputs transmitted antenna delay time information j2 to a phase rotation amount calculator 304.

The propagation channel estimation value calculation pilot channel number-determining unit 307 determines the number of pilot channels to be used in calculating the propagation channel estimation value from the information j 5 indicating whether the delay time of the transmitted antennas is larger or smaller than the threshold output by the controller 301, and outputs a pilot channel number information j4 to the common control channel generator 303. The common control channel generator 303 generates a common control channel that stores the pilot channel number information j4 output by the propagation channel estimation value calculation pilot channel number-determining unit 307.

Since the configuration is otherwise the same as that of the wireless transmitter 1 according to the first embodiment (FIG. 8), like reference numerals are appended and it is not repetitiously explained. The configuration of the wireless receiver 2 that receives the transmitted signals from the wireless transmitter 1 in FIG. 20 is the same as that of FIG. 11.

In the wireless transmitter 1 of FIG. 20, based on whether the transmission delay time applied to the plurality of transmitted antennas a1 and a2 is larger than a predetermined threshold, the propagation channel estimation value calculation pilot channel number-determining unit 307 determines pilot channels to be used in estimating the propagation channel, the common control channel generator 303 generates a signal that stores information relating to the pilot channels to be used in estimating the propagation channel, and the signal generated by the common control channel generator 303 is transmitted from the plurality of transmitted antennas a1 and a2 to the each-antenna signal processors 200a and 200b.

While in this wireless transmitter 1 (FIG. 20), the pilot channel number-determining unit 307 determines the number of pilot channels to be used in estimating the propagation channel, based on whether the transmission delay time applied to the transmitted antennas a1 and a2 is larger than the predetermined threshold, the configuration is not limited to this. For example, the pilot channel number-determining unit 307 can determine the type (dedicated pilot channel, common pilot channel, etc.) of the pilot channels to be used in estimating the propagation channel, based on whether the transmission delay time applied to the transmitted antennas a1 and a2 is larger than the predetermined threshold.

FIG. 21 is a block diagram of the configuration of a wireless receiver 2 according to the second embodiment of the invention.

A propagation channel estimation value calculation pilot channel number determining unit 501 of a MAC unit 500 acquires, from the information data signal of a common pilot channel among the signals output by an error-correction decoder 412, information j 5 indicating whether the delay time of the transmitted antennas is larger or smaller than a threshold, determines the number of pilot symbols to be used in calculating a propagation channel estimation value, and outputs pilot channel number information j4 to a propagation channel estimator 407.

When the information j5 indicating whether the delay time of the transmitted antennas is larger or smaller than a threshold is stored on a shared control signaling channel, the MAC unit 500 acquires the information j5 indicating whether the delay time of the transmitted antennas is larger or smaller than a threshold from a shared control signaling channel of the information data signal output by the error-correction decoder 412.

Since the configuration of the wireless receiver 2 is otherwise the same as that of the wireless receiver 2 according to the first embodiment (FIG 10), it will not be repetitiously explained.

While in the configuration of the wireless receiver 2 of FIG. 21, the propagation channel estimation value calculation pilot channel number determining unit 501 is provided in the MAC unit 500, the invention is not limited to this configuration, it being possible to provide the determining unit 501 in an upper level that controls the wireless receiver 2.

As described above, the wireless transmitter 1 of FIG. 19 transmits a signal containing a control channel storing the information j 5 indicating whether the delay time of the transmitted antennas is larger or smaller than a threshold, the wireless receiver 2 of FIG. 21 receives the transmitted signals from the wireless transmitter of FIG. 19, acquires the information j 5 indicating whether the delay time of the transmitted antennas is larger or smaller than a threshold from the received signal, derives the number of pilot channels to be used in calculating the propagation channel estimation value from the information j5 indicating whether the delay time of the transmitted antennas is larger or smaller than a threshold, and calculates a propagation channel estimation value based on the derived propagation channel estimation value calculation pilot channel number information j4, whereby it can estimate the propagation channel with high precision.

As described above, by receiving the transmitted signals of the wireless transmitter 1 of FIG. 20 at the wireless receiver 2 of FIG. 11, the wireless receiver 2 need not derive the number of pilot channels to be used in calculating the propagation channel estimation value, whereby the processing load at the wireless receiver can be reduced.

As described above, in a system applying CDTD, by reducing the number of pilot channels used in calculating the propagation channel estimation value when a delay time $\tau$ between transmitted antennas is larger than a threshold $\alpha$, which is predetermined by the system, to a smaller number than when the delay time $\tau$ between transmitted antennas is larger than the threshold $\alpha$, the frequency bandwidth used in calculating the propagation channel estimation value can be made narrower. As a result, the difference in frequency fluctuation among the pilot channels used in propagation channel estimation of a given segment can be reduced, and propagation channel estimation can be performed with high precision irrespective of whether CDTD is being applied.

{Third Embodiment}

This embodiment describes a case where, when applying CDTD, the number of pilot channels used in calculating the propagation channel estimation value is varied adaptively according to a delay time applied between transmitted antennas.

In this example, as shown in FIG. 4, a wireless transmitter 1 transmits signals from two transmitted antennas a1 and a2, and a wireless receiver 2 receives them at one received antenna a3.

In CDTD, the wireless transmitter 1 applies a delay time $\tau$ between the transmitted antennas a1 and a2, and transmits the signals. In this case, the frequency fluctuation interval of the composite wave of the transmitted antennas a1 and a2 received by the wireless receiver 2 is $1/\tau$. In this embodiment, the number of pilot channels used in calculating the propagation channel estimation value is set such that the frequency bandwidth Fs used in calculating the above propagation channel estimation becomes $Fs<1\tau$.

FIG. 22 is an explanatory diagram of an example of signals transmitted and received between a wireless transmitter 1 and a wireless receiver 2 in a third embodiment of the invention. At the wireless transmitter 1 applying CDTD, a pilot channel arrangement is determined beforehand according to a scheme of the system and the like. In this example, the pilot channels are arranged beforehand as common pilot channels, as shown in FIG 22 (b).

As shown in FIG. 22 (b), common pilot channels are arranged in unit regions S(1,1), S(1,3), S(1,5), S(1,7), S (1,9), S(1,11), S(1,13), S(1,15), S(1,17), S(1,19), S(1,21), S(1,23), S(1,25), S(1,27), S(1,29), S(1,31), S(1,33), S(1,33), S(1,35), S(1,37), and S(1,39). The common pilot channels are arranged at subcarrier intervals of $\Delta Nf = 4$ in the frequency axis direction in unit regions belonging to the same time band (x=1). The common pilot channels are multiplied with an OVSF code having a code length SF = 4 along the frequency axis direction. In FIG. 22 (b), as in the description of the first embodiment, reference symbols #1 to #4 represent constituent elements of the OVSF code sequence.

The wireless receiver 2 sets a pilot average number Navg in correspondence with the frequency bandwidth Fs used in calculating the propagation channel estimation value. For frequency bandwidth Fs = Fs1, Fs2, Fs3 (Fs1>Fs2>Fs3), it sets Navg1, Navg2, and Navg3 (Navg1>Navg2>Navg3). In the following explanation, Navg1 = 5, Navg2 = 3, and Navg3 = 1.

FIGS. 23A, 23B, and 23C are explanatory diagrams of signals that are transmitted and received between the wireless transmitter 1 and the wireless receiver 2 in this embodiment. The wireless transmitter 1 applies a delay time $\tau$ between the transmitted antennas a1 and a2, and transmits the signals in, for example, the pilot channel arrangement shown in FIG. 22 (b). FIG. 23A is a delay profile of the propagation channel at this time, given as a time-domain expression. In FIG. 23A, signal s1 is output from transmitted antenna a1, and signal s2 is output from transmitted antenna a2. FIG. 22 (a) is a frequency-domain expression of FIG. 23A. The wireless transmitter 1 stores the delay time information indicating that the delay time $\tau$ between the transmitted antennas a1 and a2 is $\tau = T_1$ in the common control channel shown in FIG 12.

The received antenna a3 of the wireless receiver 2 receives the signals arranged as shown in FIG. 22 (b) and the delay time information $\tau$ indicating that the delay time between the transmitted antennas a1 and a2 is $\tau = T_1$ from the wireless transmitter 1, via the propagation channel having the delay profile shown in FIG 23A.

When the delay time $\tau$ between the transmitted antennas a1 and a2 is $\tau = T_1$, as shown in FIG. 22 (a), the frequency fluctuation interval of the propagation channel becomes $1/T_1$, and since $1/T_1$ >Fs1>Fs2>Fs3, the propagation channel estimation value is calculated with an average number of pilots Navg = 5.

As shown in FIG. 22 (b), the wireless receiver 2 performs a despread process by multiplying the pilot channel with an OVSF code. Reference numerals D1, D2, D3, D4, and D5 represent despread results, from the left side. Next, a propagation channel is estimated for, for example, segment A3 in FIG. 22 (b), by an averaging process with an average number of pilots Navg = 5 set according to $\tau = T_1$. That is, it is calculated by averaging the despread results D1, D2, D3, D4, and D5 of pilot channels arranged in segments A1, A2, A3, A4, and A5.

Subsequently, the wireless transmitter 1 transmits the signals with a delay $\tau = T_2$ between the transmitted antennas. FIG. 23B is a delay profile of the propagation channel when applying a delay of $\tau = T_2$, given as a time-domain expression, and the propagation channel of FIG. 24 (a) is a frequency-domain expression of the delay profile of FIG. 23B. Signal s1 represents an incoming wave of the signal transmitted from transmitted antenna a1, and signal s2 represents an incoming wave of the signal transmitted from transmitted antenna a2.

FIG. 24 is an explanatory diagram of signals transmitted and received between the wireless transmitter 1 and the wireless receiver 2 in this embodiment. In FIG. 24 (a), the frequency fluctuation interval of the propagation channel becomes $1/T_2$, and since Fs1>1/T2>Fs2>Fs3, the wireless receiver that receives the signals in the pilot arrangement shown in FIG. 24 (b) calculates the propagation channel estimation value with an average number of pilots Navg2 = 3. Specifically, for example, propagation channel estimation for segment A3 in FIG. 24 (b) is calculated by averaging the despread results D2, D3, and D4 of pilot channels arranged in segments A2, A3, and A4.

The wireless transmitter 1 transmits the signals with a delay $\tau = T_3$ between the transmitted antennas. FIG 23C is a delay profile given as a time-domain expression of the propagation channel when applying a delay of $\tau = T_3$.

FIG. 25 is an explanatory diagram of signals transmitted and received between the wireless transmitter 1 and the wireless receiver 2 in this embodiment. The propagation channel of FIG. 25 (a) is a frequency-domain expression of the delay profile of FIG. 23B. Signal s1 represents an incoming wave of the signal transmitted from transmitted antenna a1, and signal s2 represents an incoming wave of the signal transmitted from transmitted antenna a2. In FIG. 25 (a), the frequency fluctuation interval of the propagation channel becomes $1/T_3$, and since $Fs1>Fs2>1/T_3>Fs_3$, the wireless receiver that receives the signals in the pilot arrangement shown in FIG. 25 (b) calculates the propagation channel estimation value with an average number of pilots Navg3 = 1. Specifically, for example, propagation channel estimation for segment A3 in FIG. 25 (b) is calculated from the despread result D3 of the pilot channels arranged in segment A3.

FIG. 26 is a block diagram of the configuration of the wireless transmitter 1 according to the third embodiment of the invention. The controller 301 outputs transmitted antenna delay time information j2 to the common control channel generator 303 and the phase rotation amount calculator 304 respectively. The common control channel generator 303 generates a common control channel that stores the transmitted antenna delay time information j 2 output by the controller 301.

The phase rotation amount calculator 304 calculates a phase-rotation amount of each subcarrier from the transmitted antenna delay time information j 2 output by the controller 301. Since the configuration is otherwise the same as that of the wireless transmitter 1 according to the first embodiment (FIG. 8), it will not be repetitiously explained.

FIG. 27 is a block diagram of another configuration of the wireless transmitter 1 according to the third embodiment of the invention. At the wireless transmitter 1, the controller 301 outputs transmitted antenna delay time information j2 to the propagation channel estimation value calculation pilot channel number-determining unit 307 and the phase rotation amount calculator 304. The propagation channel estimation value calculation pilot channel number-determining unit 307 determines the number of symbols of pilot channels used in calculating the propagation channel estimation value from the transmitted antenna delay time information j2 output by the controller 301, and outputs the pilot channel number information j4 to the common control channel generator 303. The common control channel generator 303 generates a common control channel that stores the pilot channel number information j4 output by the propagation channel estimation value calculation pilot channel number-determining unit 307.

Since the configuration is otherwise the same as that of the wireless transmitter 1 according to the first embodiment (FIG. 8), like reference numerals are appended and it is repetitiously explained. Incidentally, the configuration of the wireless receiver 2 that receives the transmitted signals of the wireless transmitter 1 in FIG. 27 is the same as that in FIG. 11.

In the wireless transmitter 1 of FIG. 27, the propagation channel estimation value calculation pilot channel number-determining unit 307 (pilot channel determining unit) determines, based on the transmitted antenna delay time information j2 (transmit delay time information) appended between the plurality of transmitted antennas a1 and a2, pilot channels to be used in estimating a propagation channel, the common control channel generator 303 (control channel generator) generates a signal that stores information relating to the pilot channels to be used in estimating the propagation channel, and the each-antenna signal processors 200a and 200b transmit the signal generated by the common control channel generator 303 from the transmitted antennas a1 and a2.

While in this wireless transmitter 1 (FIG. 27), the propagation channel estimation value calculation pilot channel number-determining unit 307 determines the pilot channels to be used in estimating the propagation channel based on the transmitted antenna delay time information j2 appended between the plurality of transmitted antennas a1 and a2, the invention is not limited to this. For example, the pilot channel number-determining unit 307 can determine the type (dedicated pilot channel, common pilot channel, etc.) of the pilot channels to be used in estimating the propagation channel, based on the transmitted antenna delay time information j2 applied between the transmitted antennas a1 and a2.

FIG. 28 is a block diagram of the configuration of the wireless receiver 2 according to the third embodiment of the invention. A MAC unit 500, which has a unit for controlling the wireless receiver 2, includes a propagation channel estimation value calculation pilot channel number determining unit 501 that acquires the transmitted antenna delay time information j2 from the information data signal of a common pilot channel among the signals output by the error-correction decoder 412, and determines, with respect to a reciprocal of the transmitted antenna delay time, the number of pilot symbols to be used in calculating the propagation channel estimation value such as to reduce the frequency bandwidth used in calculating the propagation channel estimation information.

When the transmitted antenna delay time information j2 is stored on a shared control signaling channel, the MAC unit 500 acquires the transmitted antenna delay time information j2 from a shared control signaling channel of the information data signal output by the error-correction decoder 412.

While in the configuration of the wireless receiver 2 of FIG. 28, the propagation channel estimation value calculation pilot channel number determining unit 501 is provided in the MAC unit 500, it can be provided in an upper level that controls the wireless receiver 2. Since the configuration of the wireless receiver 2 is otherwise the same as that of the wireless receiver 2 according to the first embodiment (FIG. 10), it will not be repetitiously explained.

As described above, the wireless transmitter 1 of FIG. 26 transmits a signal containing a control channel storing the transmitted antenna delay time information j2, the wireless receiver 2 of FIG. 28 receives the transmitted signals from the wireless transmitter of FIG. 26, acquires the transmitted antenna delay time information j2 from the received signal, derives the number of pilot channels to be used in calculating the propagation channel estimation value from the transmitted antenna delay time information j2, and calculates a propagation channel estimation value based on the derived propagation channel estimation value calculation pilot channel number information j4, whereby it can estimate the propagation channel with high precision.

As described above, by receiving the transmitted signals of the wireless transmitter 1 of FIG. 27 at the wireless receiver 2 of FIG. 11, the wireless receiver 2 need not derive the number of pilot channels to be used in calculating the propagation channel estimation value, whereby the processing load at the wireless receiver can be reduced.

As described above, in a wireless transmitter 2 applying CDTD, by switching the number of pilot channels to be used in calculating the propagation channel estimation value such that the frequency bandwidth Fs used in calculating the propagation channel estimation information is smaller than the reciprocal of the delay time $\tau$ applied between the transmitted antennas a1 and a2, the frequency bandwidth used in calculating the propagation channel estimation value can be made narrower. As a result, the difference in frequency fluctuation among the pilot channels used in propagation channel estimation of a given segment can be reduced, and propagation channel estimation can be performed with high precision irrespective of whether CDTD is applied.

{Fourth Embodiment}

This embodiment describes an example where, in a system applying CDTD as described in the first to third embodiments, a procedure of varying the power of pilot channels used in calculating the propagation channel estimation value, a procedure of varying the power of the pilot channels is performed, as shown in the third embodiment, by adaptively varying the number of pilot channels used in calculating the propagation channel estimation value according to the delay time applied between transmitted antennas.

A wireless receiver 2 sets a pilot average number Navg in correspondence with the frequency bandwidth Fs used in calculating a propagation channel estimation value. For example, for frequency bandwidth Fs = Fs1, Fs2, Fs3 (Fs1>Fs2>Fs3), it sets Navg1 = 5, Navg2 = 3, and Navg3 = 1. As shown in FIG. 22 (b), FIG. 24 (b), and FIG. 24 (b), it then calculates the propagation channel estimation value by performing an averaging process with Navg such that the frequency fluctuation interval $1/\tau$ calculated from the delay time information $\tau$ of the transmitted antennas a1 and a2 stored in the common control channel of the receive signal is smaller than Fs.

FIG. 29 is an example of a method of transmitting a signal from the wireless transmitter 1 according to this embodiment. In FIG. 29, when the wireless transmitter 1 of this embodiment transmits a signal to the wireless receiver 2, P represents the power ratio between the power Pa of unit regions where the pilot channels are arranged and the power Pb of unit regions where data channels are arranged is and a power ratio (P = Pa/Pb).

In FIG. 29 (a) to (c), Navg1 = 5, Navg2 = 3, and Navg3 = 1 respectively. In FIG. 29 (a) to (c), the horizontal axis represents frequency, and the vertical axis represents received power. Regions shaded with diagonal lines represent unit regions where pilot channels are arranged, while regions that are not shaded with diagonal lines represent unit regions where data channels are arranged.

In FIG. 29 (a), the power ratio P1, which is the power ratio P when Navg = 5, is P1 = 0 db, since power Pa and power Pb are at the same setting. In FIG. 29 (b), the power ratio P2, which is the power ratio P when Navg = 3, is P2 = 2.3 dB. In FIG. 29 (c), the power ratio P3, which is the power ratio P when Navg = 1, is P3 = 7 dB.

As for example shown in FIG. 22, when the wireless transmitter 1 transmits a signal with a delay time $\tau = T_1$ applied between the transmitted antennas a1 and a2, the power ratio between the power Pa in unit regions where pilot channels of the transmitted signal are arranged, and the power Pb in unit regions where data channels are arranged is set as P1(Pa/Pb). As shown in FIG. 24 (b), when the wireless transmitter 1 transmits a signal with a delay time $\tau = T_2$ applied between the transmitted antennas, the power ratio between the power Pa in unit regions where pilot channels of the transmitted signal are arranged, and the power Pb in unit region where data channels are arranged is set as P2 (Pa/Pb).

In FIG. 29 (a) to (c), the power ratio P(Pa/Pb) is changed using the following equation (3) as a reference.

[Equation 3]

$$P(Pa/Pb) = 10 \cdot \mathrm{Log10}(Navg, std/Navg)\ [dB] \quad \cdots (3)$$

In equation (3), Navg, std represents an average number of pilots used as a reference. In FIG. 29 (a) to (c), Navg = 5 is used as a reference for the number of pilot channels.

As the number of pilot channels used in calculating the propagation channel estimation value decreases, if the power ratio P between the power Pa in unit regions where pilot channels of the transmitted signal are arranged and the power Pb in unit regions where data channels are arranged is set to a high ratio, the equation (3) need not be used.

It is also possible to set the power ratio P based on information relating to the delay time between the transmitted antennas. That is, by increasing the power ratio P in proportion to the size of the delay time between the transmitted antennas, the same effect can be obtained as by setting the power ratio P to a high setting as the number of pilot channels used in calculating the propagation channel estimation value decreases.

Similarly, the power ratio P can also be set based on the 'information indicating whether to perform delay diversity' or 'information indicating whether the delay time of the transmitted antennas is larger or smaller than a threshold' that was used in the first and second embodiments. That is, the power ratio P is set larger when performing transmit diversity than when not performing it, or, the power ratio is set larger when the delay time between the transmitted antennas is larger than the predetermined threshold than when it is smaller than the threshold.

As described above, as the number of pilot channels used in calculating the propagation channel estimation value decreases, by setting a high power ratio P = Pa/Pb between the power Pa in unit regions where pilot channels of the transmitted signal are arranged, and the power Pb in unit regions where data channels are arranged, it is possible to suppress a decrease in SINR due to the decrease in the number of pilot channels used in calculating the propagation channel estimation value, and the precision of propagation channel estimation can be increased.

FIG. 30 is a block diagram of the configuration of a wireless transmitter 1 according to a fourth embodiment of the invention. The controller 301 outputs the transmitted antenna delay time information j2 to an amplitude-setting unit 306, a common control channel generator 303, and a phase rotation amount calculator 304. The common control channel generator 303 generates a common control channel that stores the transmitted antenna delay time information j2 output by the controller 301.

Based on the transmitted antenna delay time information j2, the amplitude-setting unit 306 sets an amplitude of each pilot channel output by the pilot channel generator 302, and outputs to a subcarrier assigner 305.

Based on phase-control report signal j3 output by an upper level such as a MAC unit, the subcarrier assigner 305 assigns, to the signals output by the each-user signal processors 100a and 100b, pilot channels which are output by the pilot channel generator 302 and whose power is set by the amplitude-setting unit 306, and the common control channel output by the common control channel generator 303. Since the configuration is otherwise the same as that of the wireless transmitter 1 according to the first embodiment (FIG. 8), it is not repetitiously explained.

The configuration of the wireless receiver 2 according to this embodiment is the same as that of the wireless receiver 2 according to the twenty-third embodiment (FIG. 30), and is not repetitiously explained.

While this embodiment describes an example which, when adaptively varying the number of pilot channels used in calculating the propagation channel estimation value according to the delay time applied between the transmitted antennas of the third embodiment, uses a method of controlling the power ratio between unit regions where pilot channels are arranged and unit regions where data channels are arranged, the invention is not limited to this, it being possible to vary the number of pilot channels used in calculating the propagation channel estimation value as shown in the first and second embodiments.

FIG. 31 is a block diagram of another configuration of the wireless transmitter 1 (FIG. 4) according to the fourth embodiment. The controller 301 of the wireless transmitter 1 outputs the transmitted antenna delay time information j2 to the propagation channel estimation value calculation pilot channel number-determining unit 307 and the phase rotation amount calculator 304. The propagation channel estimation value calculation pilot channel number-determining unit 307 determines the number of pilot symbols to be used in calculating the propagation channel estimation value from the transmitted antenna delay time information j2 output by the controller 301, and outputs pilot channel number information j4 to the common control channel generator 303 and the amplitude-setting unit 306. The common control channel generator 303 generates a common control channel that stores the pilot channel number information j4 output by the propagation channel estimation value calculation pilot channel number-determining unit 307.

Based on the pilot channel number information j4 output by the propagation channel estimation value calculation pilot channel number-determining unit 307, the amplitude-setting unit 306 sets the amplitude of each pilot channel output by the pilot channel generator 302, and outputs to the subcarrier assigner 305.

Since the configuration is otherwise the same as that of the wireless transmitter 1 (FIG. 8) according to the first embodiment, like reference numerals are appended and it is not repetitiously explained.

As described above, as the number of pilot channels used in calculating the propagation channel estimation value decreases, by setting a high power ratio P = Pa/Pb between the power Pa in unit regions where pilot channels of the transmitted signal are arranged, and the power Pb in unit regions where data channels are arranged, it is possible to suppress a decrease in SINR due to the decrease in the number of pilot channels used in calculating the propagation channel estimation value, and the precision of propagation channel estimation can be increased.

Incidentally, the consumption power can also be suppressed by controlling the power ratio P in each frequency bandwidth of the unit regions, or in each frequency bandwidth of a user-occupied band, or the like.

In the embodiments described above, programs for implementing some or all of the functions of the error-correction coding unit 141, the modulator 102, the phase rotator 201, the IFFT unit 202, the parallel/series converter 203, the GI appending unit 204, the filter unit 205, the D/A converter 206, the wireless frequency converter 207, the controller 301, the pilot channel generator 302, the common control channel generator 303, the phase rotation amount calculator 304, the subcarrier assigner 305, and the amplitude-setting unit 306 of the wireless transmitter 1 (FIGS. 8, 19, 26, and 30), and the wireless frequency converter 401, the A/D converter 402, the filter unit 403, the GI remover 404, the series/parallel converter 405, the FFT 406, the propagation channel estimator 407, the propagation channel weight coefficient calculator 408, the propagation channel distortion-compensator 409, the parallel/series converter 410, the demodulator 411, the error-correction decoder 412, the MAC unit 500, and the propagation channel estimation value calculation pilot channel number determining unit 501 of the wireless receiver (FIGS. 10, 21, and 28) can be stored on a computer-readable recording medium; a computer system is made to read and execute the programs stored on the recording medium, whereby the wireless transmitter 1 and the wireless receiver 2 are controlled. Here, 'computer system' includes hardware such as OS and peripheral devices.

'Computer-readable recording medium' includes portable media such as a flexible disk, an optical-magnetic disk, a ROM, a CD-ROM, and storage devices such as hardware contained in the computer system. Moreover, 'computer-readable recording medium' also includes media that dynamically store a program for a short period of time, such as a communication line when transmitting the program via a network such as the internet and a communication cable such as a telephone line, and media that store the program for a fixed time, such as a volatile memory that is internally provided in computer systems that function as server and clients in such a case. The program can implement only some of the functions mentioned above, and it can also implement these functions in combination with other programs already stored in the computer system.

While preferred embodiments of the invention have been described and illustrated above, the specific configuration is not limited to these embodiments, and include other designs and the like which are made without departing from the spirit or scope of the present invention.

INDUSTRIAL APPLICABILITY

The present invention can be applied in a wireless transmitter, a wireless receiver, a wireless communication system, a wireless transmission method, and a wireless reception method for transmitted signals from a plurality of transmitted antennas to a received antenna, and, in multicarrier transmission such as OFDM, by performing delay transmit diversity such as DTD and CDTD, it is possible to effectively obtain frequency diversity effect, which is an advantage of multicarrier transmission, without being affected by frequency selectability, and to estimate the propagation channel with high precision.

**Claims**

1. A wireless transmitter comprising:

    a plurality of transmitted antennas;
    a pilot channel number-determining unit that determines the number of pilot channels used in estimating a propagation channel, based on a transmit delay time applied between said plurality of transmitted antennas;
    a control channel generator for generating a signal that stores information relating to said number of pilot channels; and
    each-antenna signal processors that transmit a signal generated by said control channel generator from said plurality of transmitted antennas.

2. The wireless transmitter according to claim 1, wherein said pilot channel number-determining unit determines the number of pilot channels used in estimating the propagation channel, based on whether a transmit delay time applied between said plurality of transmitted antennas is 0.

3. The wireless transmitter according to claim 1, wherein, when the transmit delay time applied between said plurality of transmitted antennas is not 0, said pilot channel number-determining unit reduces the number of pilot channels used in estimating the propagation channel to a smaller number than when the transmit delay time applied between said plurality of transmitted antennas is 0.

4. The wireless transmitter according to claim 1, wherein, when a delay time between signals transmitted from said plurality of transmitted antennas is larger than a predetermined threshold, said pilot channel number-determining unit reduces the number of pilot channels used in estimating the propagation channel to a smaller number than when the delay time is smaller than the threshold.

5. The wireless transmitter according to claim 4, where said predetermined threshold is a reciprocal of a frequency bandwidth of a chunk.

6. The wireless transmitter according to claim 4, where said predetermined threshold is a reciprocal of a user-occupied bandwidth.

7. The wireless transmitter according to claim 1, wherein said pilot channel number-determining unit reduces the number of pilot channels as the delay amount between signals transmitted from said plurality of transmitted antennas increases by delay transmit diversity.

**8.** The wireless transmitter according to claim 1, comprising an amplitude-setting unit that, based on said number of pilot channels, varies the amplitudes of said pilot channels.

**9.** A wireless transmitter comprising:

a plurality of transmitted antennas;
a control channel generator for generating a signal that stores transmit delay time information applied between said plurality of transmitted antennas; and
each-antenna signal processors that transmit a signal generated by said control channel generator from said plurality of transmitted antennas.

**10.** The wireless transmitter according to claim 9, comprising an amplitude-setting unit that, based on said transmit delay time information applied between said transmitted antennas, varies the amplitudes of pilot channels.

**11.** A wireless transmitter comprising:

a plurality of transmitted antennas;
a control channel generator for generating a signal that stores information indicating whether a transmit delay time applied between said plurality of transmitted antennas is 0; and
each-antenna signal processors that transmit a signal generated by said control channel generator from said plurality of transmitted antennas.

**12.** The wireless transmitter according to claim 11, comprising an amplitude-setting unit that varies the amplitudes of said pilot channels based on information indicating whether a transmit delay time applied between said transmitted antennas is 0.

**13.** A wireless transmitter comprising:

a plurality of transmitted antennas;
a control channel generator for generating a signal that stores information indicating whether a transmit delay time applied between said plurality of transmitted antennas is greater than a predetermined threshold; and
each-antenna signal processors that transmit a signal generated by said control channel generator from said plurality of transmitted antennas.

**14.** The wireless transmitter according to claim 13, comprising an amplitude-setting unit that varies the amplitudes of said pilot channels based on information indicating whether a transmit delay time applied between said transmitted antennas is greater than said predetermined threshold.

**15.** The wireless transmitter according to claim 13, where said predetermined threshold is a reciprocal of a frequency bandwidth of a chunk.

**16.** The wireless transmitter according to claim 13, where said predetermined threshold is a reciprocal of a user-occupied bandwidth.

**17.** A wireless transmitter comprising:

a plurality of transmitted antennas;
a pilot channel determining unit that determines pilot channels used in estimating a propagation channel, based on a transmit delay time applied between said plurality of transmitted antennas;
a control channel generator for generating a signal that stores information relating to pilot channels to be used for estimating said propagation channel; and
each-antenna signal processors that transmit a signal generated by said control channel generator from said plurality of transmitted antennas.

**18.** A wireless transmitter comprising:

a plurality of transmitted antennas;
a pilot channel determining unit that determines pilot channels to be used in estimating a propagation channel, based on whether a transmit delay time applied between said plurality of transmitted antennas is 0;
a control channel generator for generating a signal that stores information relating to pilot channels to be used for estimating said propagation channel; and
each-antenna signal processors that transmit a signal generated by said control channel generator from said plurality of transmitted antennas.

**19.** A wireless transmitter comprising:

a plurality of transmitted antennas;
a pilot channel determining unit that determines pilot channels to be used in estimating a propagation channel, based on whether a transmit delay time applied between said plurality of transmitted antennas is greater than a predetermined threshold;
a control channel generator for generating a signal that stores information relating to pilot channels to be used for estimating said propagation channel; and
each-antenna signal processors that transmit a signal generated by said control channel generator from said plurality of transmitted antennas.

**20.** The wireless transmitter according to any one of claims 1, 9, 11, 13, 17, 18, and 19, wherein said control channel generator generates a common control channel.

**21.** The wireless transmitter according to any one of claims 1, 9, 11, 13, 17, 18, and 19, wherein said control channel generator generates a shared control signaling channel.

**22.** A wireless receiver comprising:

a received antenna;
a pilot channel number determining unit that, based on delay time information relating to delay transmit diversity contained in a signal received by said received antenna, extracts pilot channel number information that indicates the number of pilot channels to be used in propagation channel estimation; and
a propagation channel estimator that estimates a propagation channel using the number of pilot channels determined by said pilot channel number information from among pilot channels contained in the signal received by said received antenna.

**23.** The wireless receiver according to claim 22, wherein said pilot channel number determining unit determines pilot channel number information that indicates the number of pilot channels to be used in propagation channel estimation, based on whether delay time information relating to delay transmit diversity contained in a signal received by said received antenna is 0.

**24.** The wireless receiver according to claim 22, wherein, when said delay time information relating to delay transmit diversity is not 0, said pilot channel number determining unit generates pilot channel number information indicating a smaller number of pilot channels than when said delay transmit diversity is 0.

**25.** The wireless receiver according to claim 22, wherein, when a delay amount between a plurality of transmitted antennas of said wireless transmitter using delay transmit diversity is greater than a predetermined threshold, said pilot channel number determining unit generates pilot channel number information indicating a smaller number of pilot channels than when it is small than said predetermined threshold.

**26.** The wireless receiver according to claim 25, where said predetermined threshold is a reciprocal of a frequency bandwidth of a chunk.

**27.** The wireless receiver according to claim 25, where said predetermined threshold is a reciprocal of a user-occupied bandwidth.

**28.** The wireless receiver according to claim 22, wherein said pilot channel number-determining unit reduces the number of pilot channels as the delay amount in delay transmit diversity signals increases.

**29.** A wireless receiver comprising:

a received antenna;
a pilot channel number determining-unit that extracts pilot channel number information indicating the number of pilot channels to be used in propagation channel estimation contained in a signal received by the received antenna; and
a propagation channel estimator that estimates a propagation channel using the number of pilot channels defined by said pilot channel number information indicating the number of pilot channels to be used in propagation channel estimation.

**30.** A wireless receiver comprising:

a received antenna;
a pilot channel determining-unit that extracts pilot channel information indicating pilot channels to be used in propagation channel estimation that are contained in a signal received by the received antenna; and
a propagation channel estimator that estimates a propagation channel using pilot channels defined by said pilot channel number from among the pilot channels contained in a signal received by said received antenna.

**31.** A wireless communication system comprising the wireless transmitter according to any one of claims 1 and 19, and the wireless receiver according to claim 22.

**32.** A wireless communication system comprising the wireless transmitter according to any one of claims 9, 11, and 13, and the wireless receiver according to claim 29.

**33.** A wireless communication system comprising the wireless transmitter according to any one of claims 17, 18, and 19, and the wireless receiver according to claim 30.

**34.** A wireless transmission method comprising:

determining, based on a transmit delay time applied between a plurality of transmitted antennas, the number of pilot channels to be used in estimating a propagation channel;
generating a signal that stores information indicating said number of pilot channels; and
transmitting said signal from said plurality of transmitted antennas.

**35.** A wireless reception method comprising:

extracting, based on delay time information relating to delay transmit diversity contained in a signal received by a received antenna, the number of pilot channels to be used in propagation channel estimation; and
estimating a propagation channel using the number of pilot channels determined by said pilot channel number information from among pilot channels contained in the signal received by said received antenna.

# FIG. 1

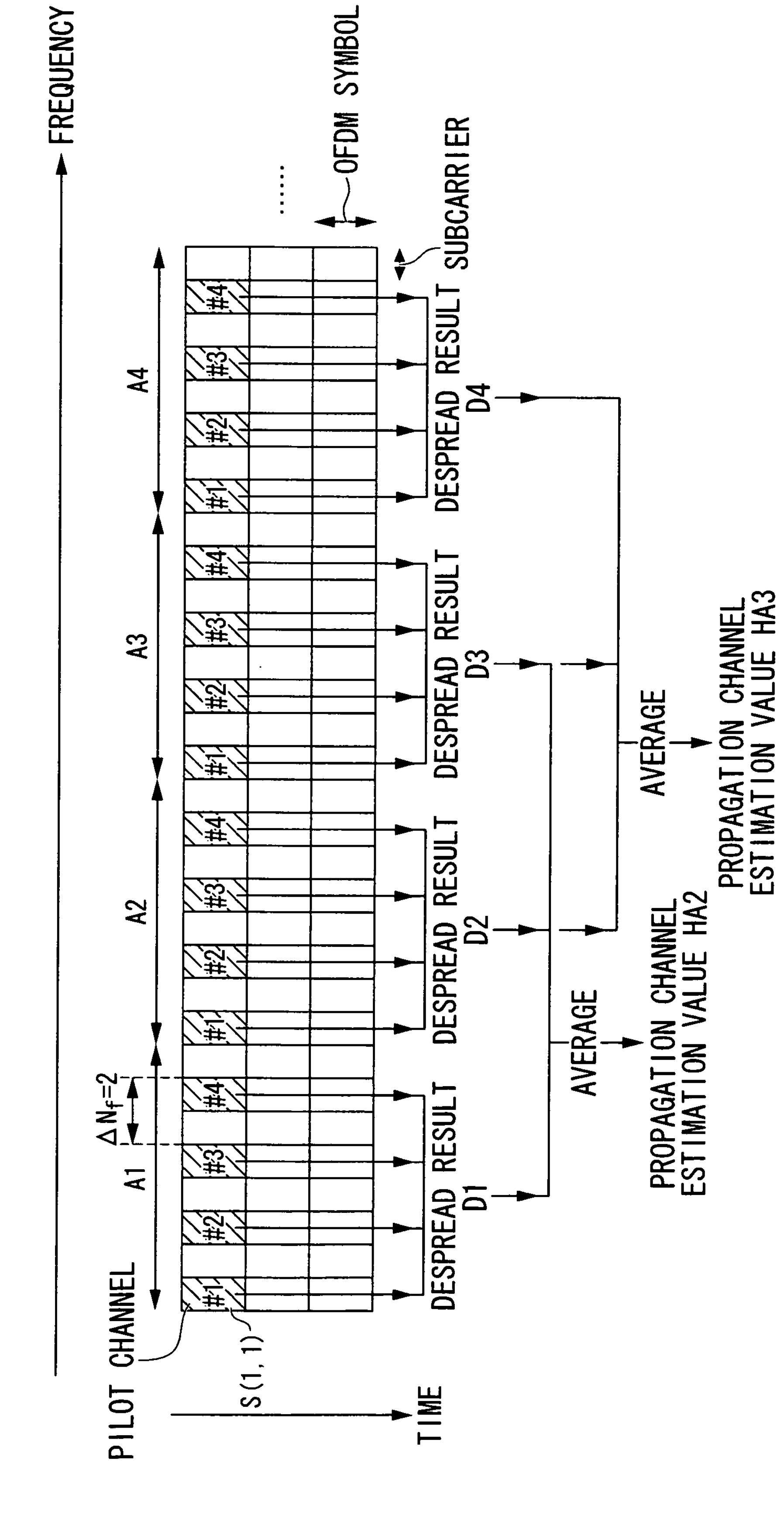
FREQUENCY
OFDM SYMBOL
SUBCARRIER
A1
A2
A3
A4
$\Delta N_f=2$
#1
#2
#3
#4
DESPREAD RESULT D1
DESPREAD RESULT D2
DESPREAD RESULT D3
DESPREAD RESULT D4
AVERAGE
PROPAGATION CHANNEL ESTIMATION VALUE HA2
AVERAGE
PROPAGATION CHANNEL ESTIMATION VALUE HA3
PILOT CHANNEL
S(1, 1)
TIME

FIG. 2

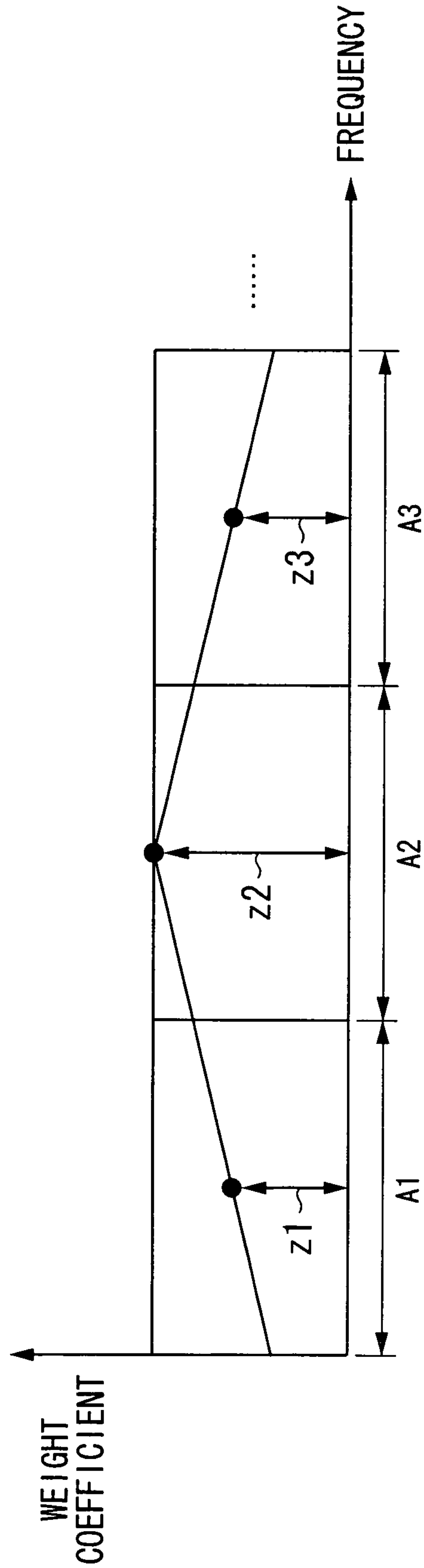

FIG. 3

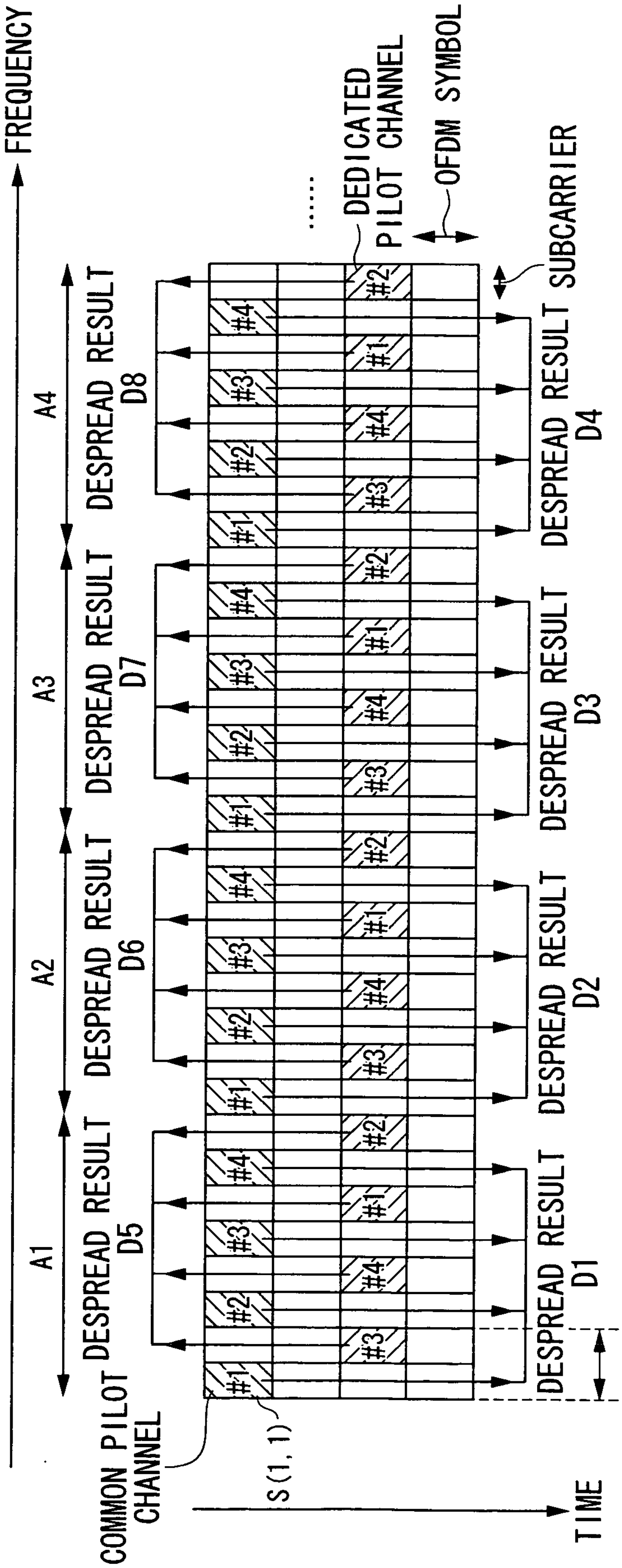
FREQUENCY
TIME
COMMON PILOT CHANNEL
S(1, 1)
A1
A2
A3
A4
DESPREAD RESULT D1
DESPREAD RESULT D2
DESPREAD RESULT D3
DESPREAD RESULT D4
DESPREAD RESULT D5
DESPREAD RESULT D6
DESPREAD RESULT D7
DESPREAD RESULT D8
DEDICATED PILOT CHANNEL
OFDM SYMBOL
SUBCARRIER
ΔNf=2
#1
#2
#3
#4

FIG. 4

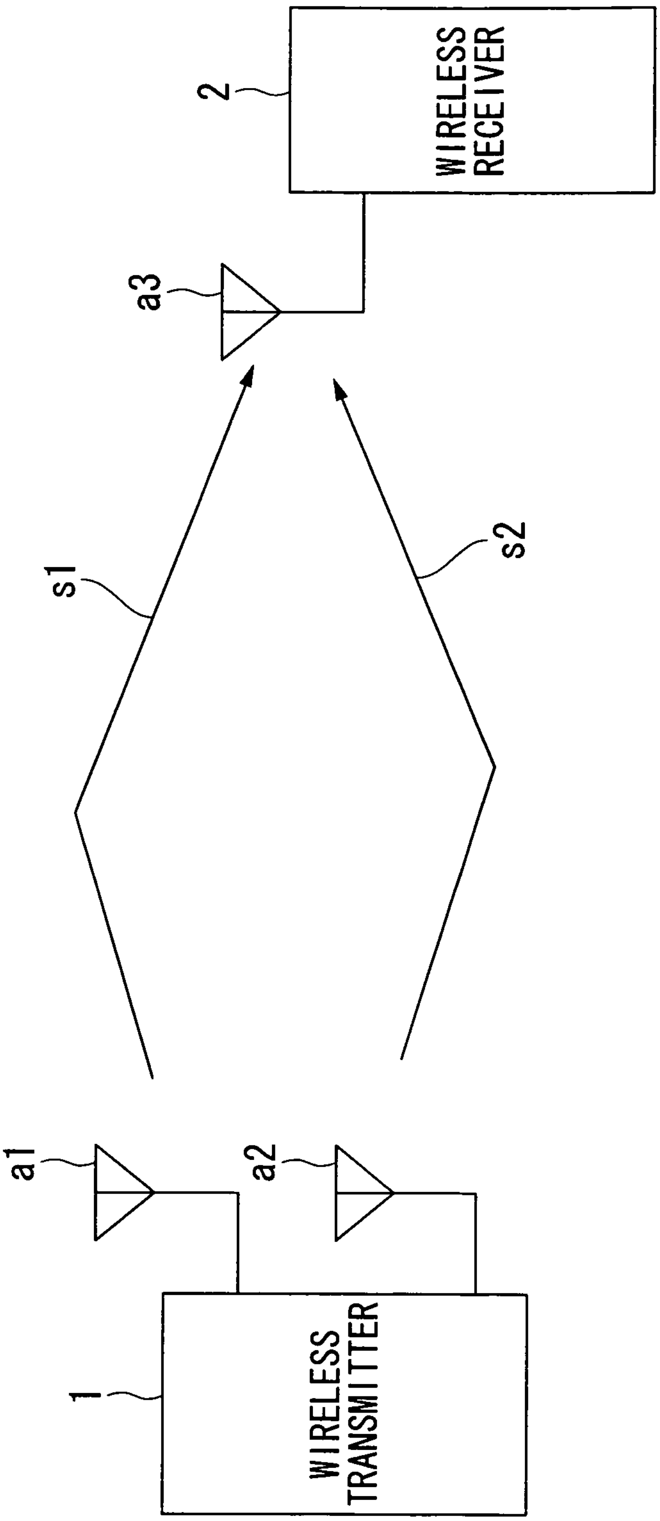

FIG. 5A

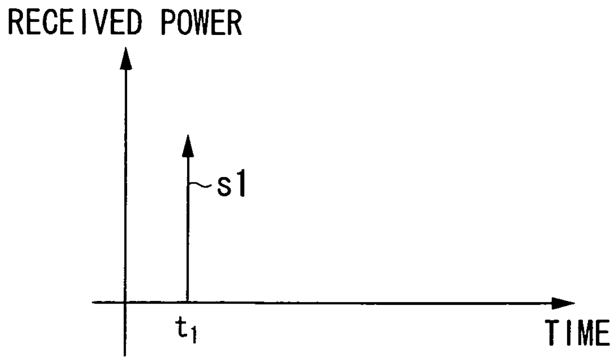


FIG. 5B

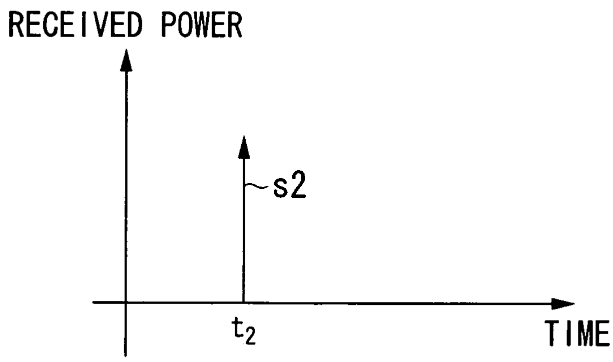


FIG. 5C

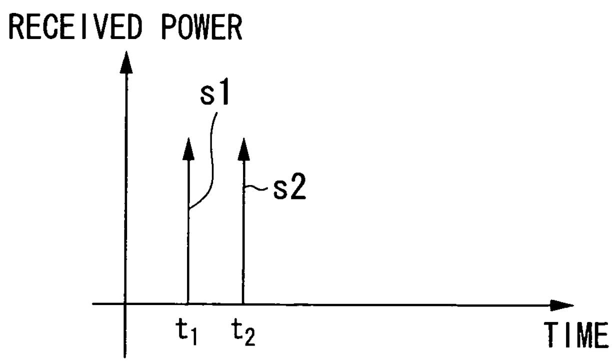


FIG. 5D

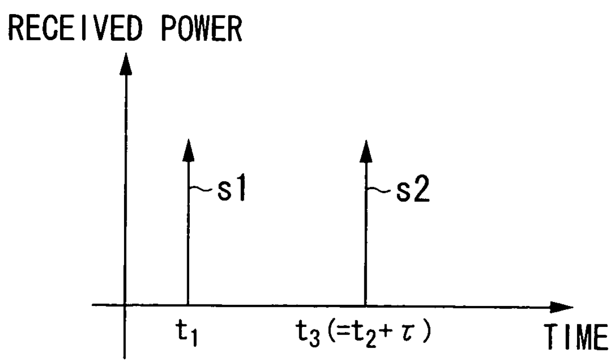

FIG. 6

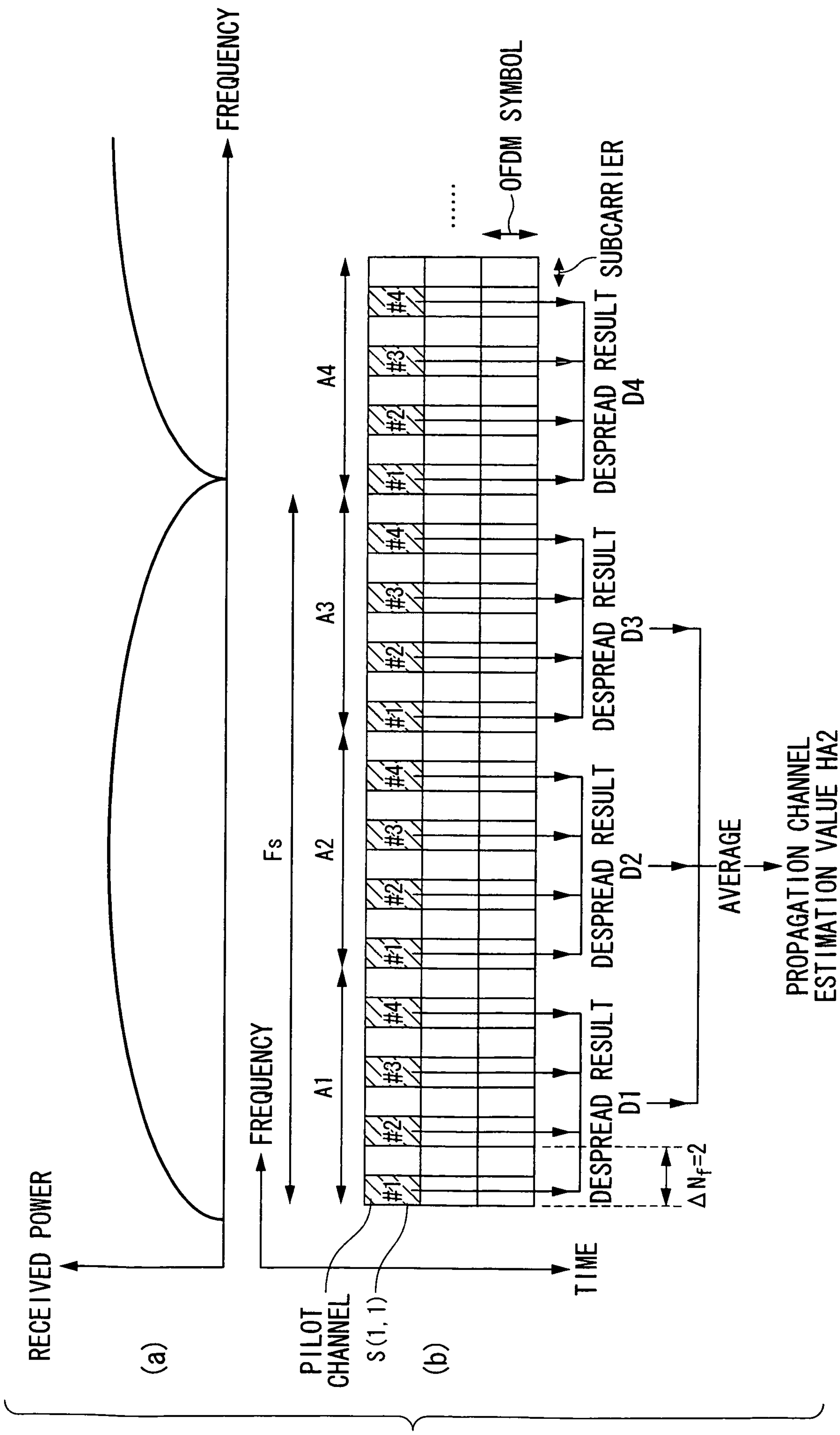
(a)
RECEIVED POWER
FREQUENCY
(b)
PILOT CHANNEL
S(1, 1)
FREQUENCY
TIME
Fs
A1
A2
A3
A4
#1
#2
#3
#4
OFDM SYMBOL
SUBCARRIER
ΔNf=2
DESPREAD RESULT D1
DESPREAD RESULT D2
DESPREAD RESULT D3
DESPREAD RESULT D4
AVERAGE
PROPAGATION CHANNEL ESTIMATION VALUE HA2

FIG. 7

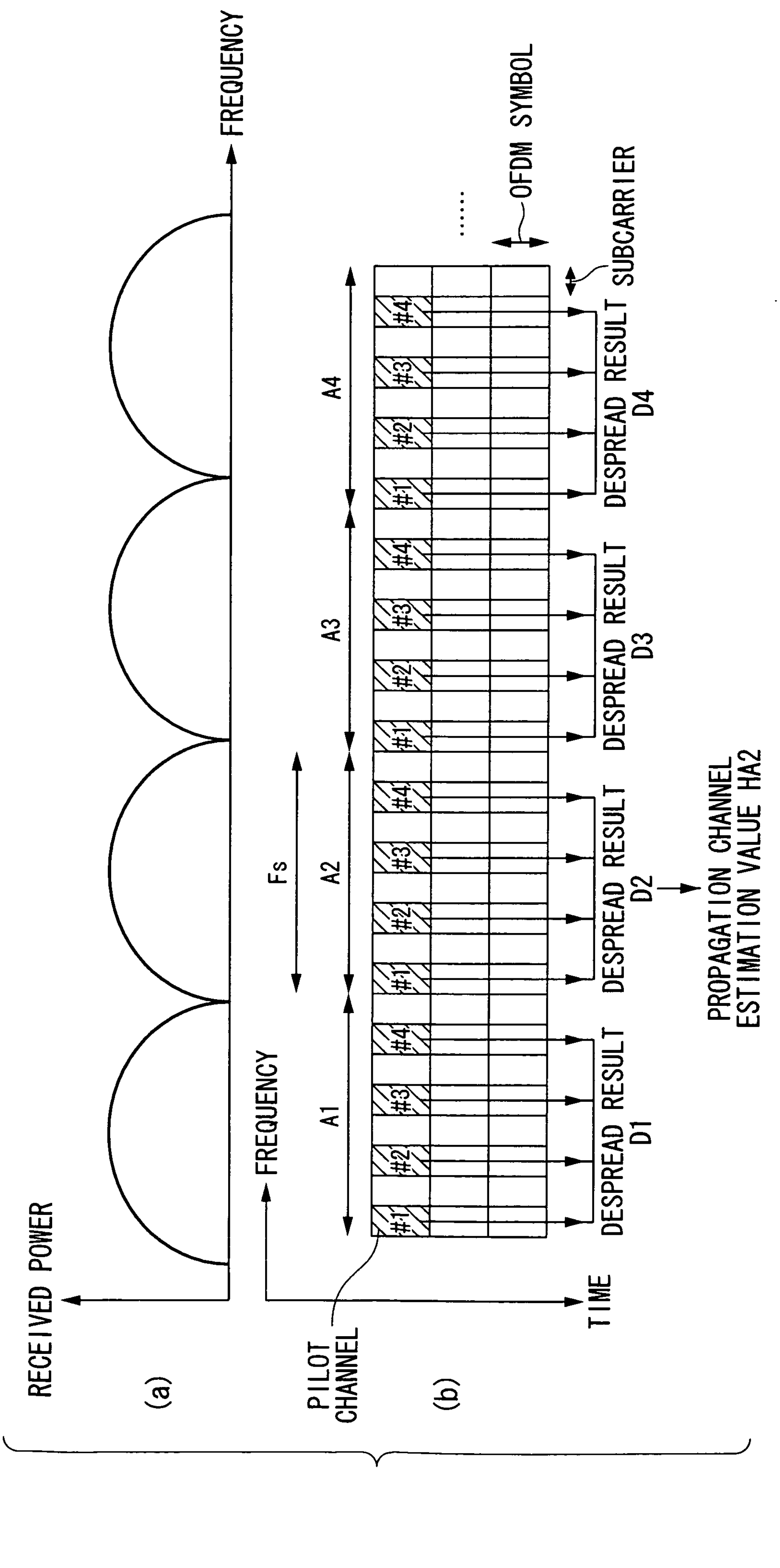
(a)
RECEIVED POWER
FREQUENCY
(b)
FREQUENCY
TIME
PILOT CHANNEL
OFDM SYMBOL
SUBCARRIER
Fs
A1
A2
A3
A4
#1
#2
#3
#4
DESPREAD RESULT D1
DESPREAD RESULT D2
DESPREAD RESULT D3
DESPREAD RESULT D4
PROPAGATION CHANNEL ESTIMATION VALUE HA2

FIG. 8

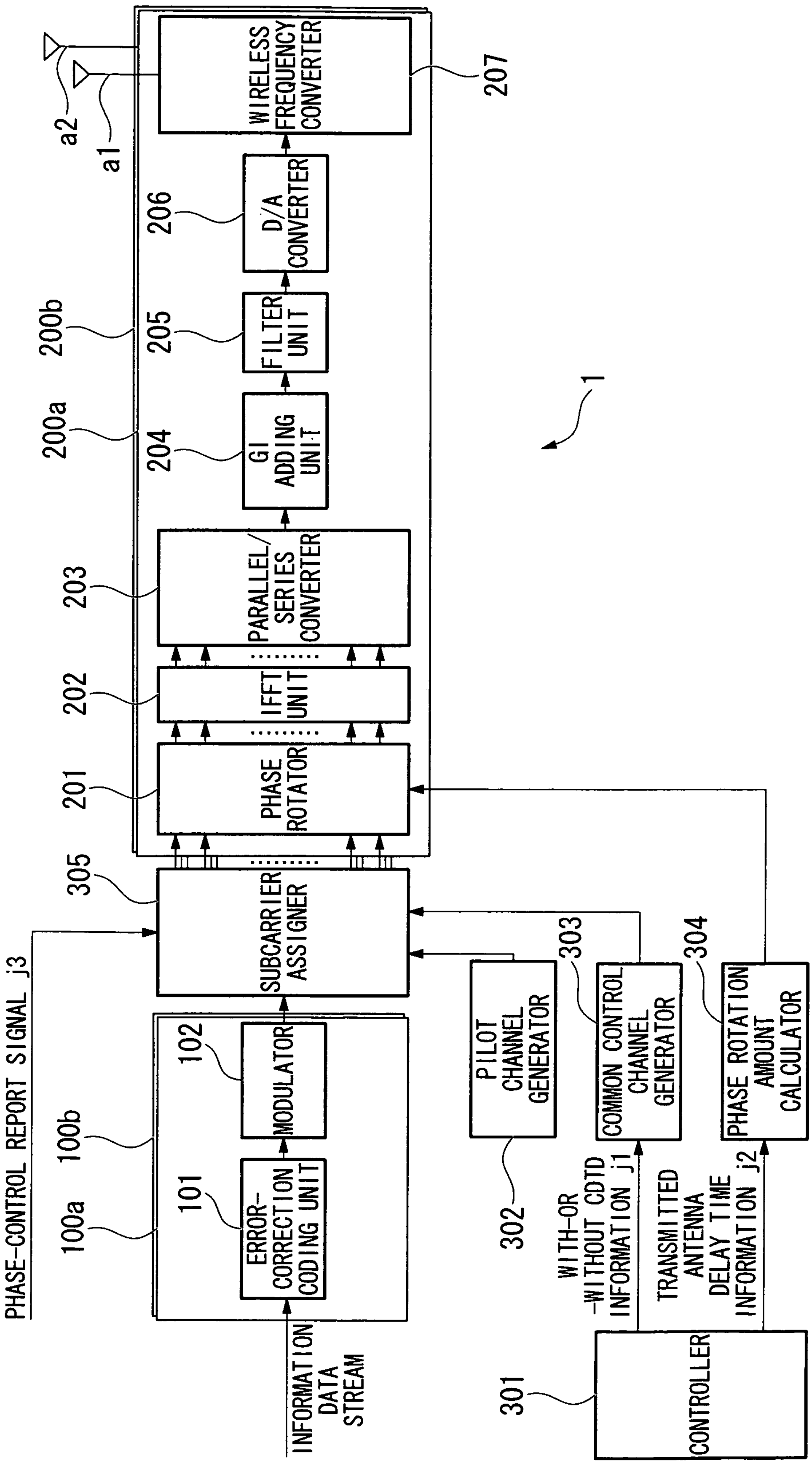
INFORMATION DATA STREAM
PHASE-CONTROL REPORT SIGNAL j3
100a
100b
101
ERROR-CORRECTION CODING UNIT
102
MODULATOR
305
SUBCARRIER ASSIGNER
201
PHASE ROTATOR
202
IFFT UNIT
203
PARALLEL/SERIES CONVERTER
200a
204
GI ADDING UNIT
200b
205
FILTER UNIT
206
D/A CONVERTER
207
WIRELESS FREQUENCY CONVERTER
a1
a2
1
301
CONTROLLER
WITH-OR-WITHOUT CDTD INFORMATION j1
TRANSMITTED ANTENNA DELAY TIME INFORMATION j2
302
PILOT CHANNEL GENERATOR
303
COMMON CONTROL CHANNEL GENERATOR
304
PHASE ROTATION AMOUNT CALCULATOR

FIG. 9

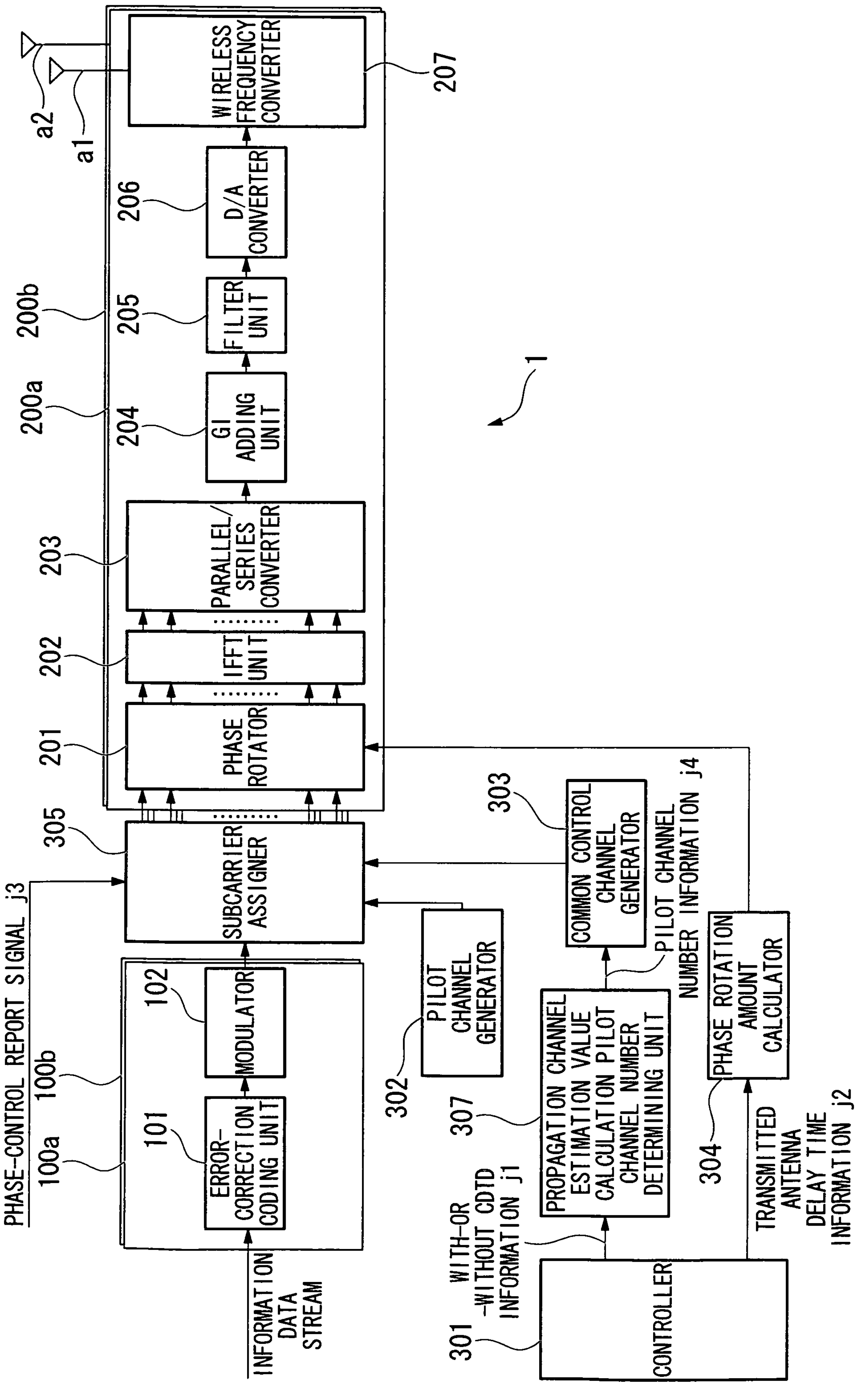
INFORMATION DATA STREAM
100a
100b
101
ERROR-CORRECTION CODING UNIT
102
MODULATOR
PHASE-CONTROL REPORT SIGNAL j3
305
SUBCARRIER ASSIGNER
302
PILOT CHANNEL GENERATOR
303
COMMON CONTROL CHANNEL GENERATOR
307
PROPAGATION CHANNEL ESTIMATION VALUE CALCULATION PILOT CHANNEL NUMBER DETERMINING UNIT
PILOT CHANNEL NUMBER INFORMATION j4
301
CONTROLLER
WITH-OR -WITHOUT CDTD INFORMATION j1
TRANSMITTED ANTENNA DELAY TIME INFORMATION j2
304
PHASE ROTATION AMOUNT CALCULATOR
200a
200b
201
PHASE ROTATOR
202
IFFT UNIT
203
PARALLEL/SERIES CONVERTER
204
GI ADDING UNIT
205
FILTER UNIT
206
D/A CONVERTER
207
WIRELESS FREQUENCY CONVERTER
a1
a2
1

FIG. 10

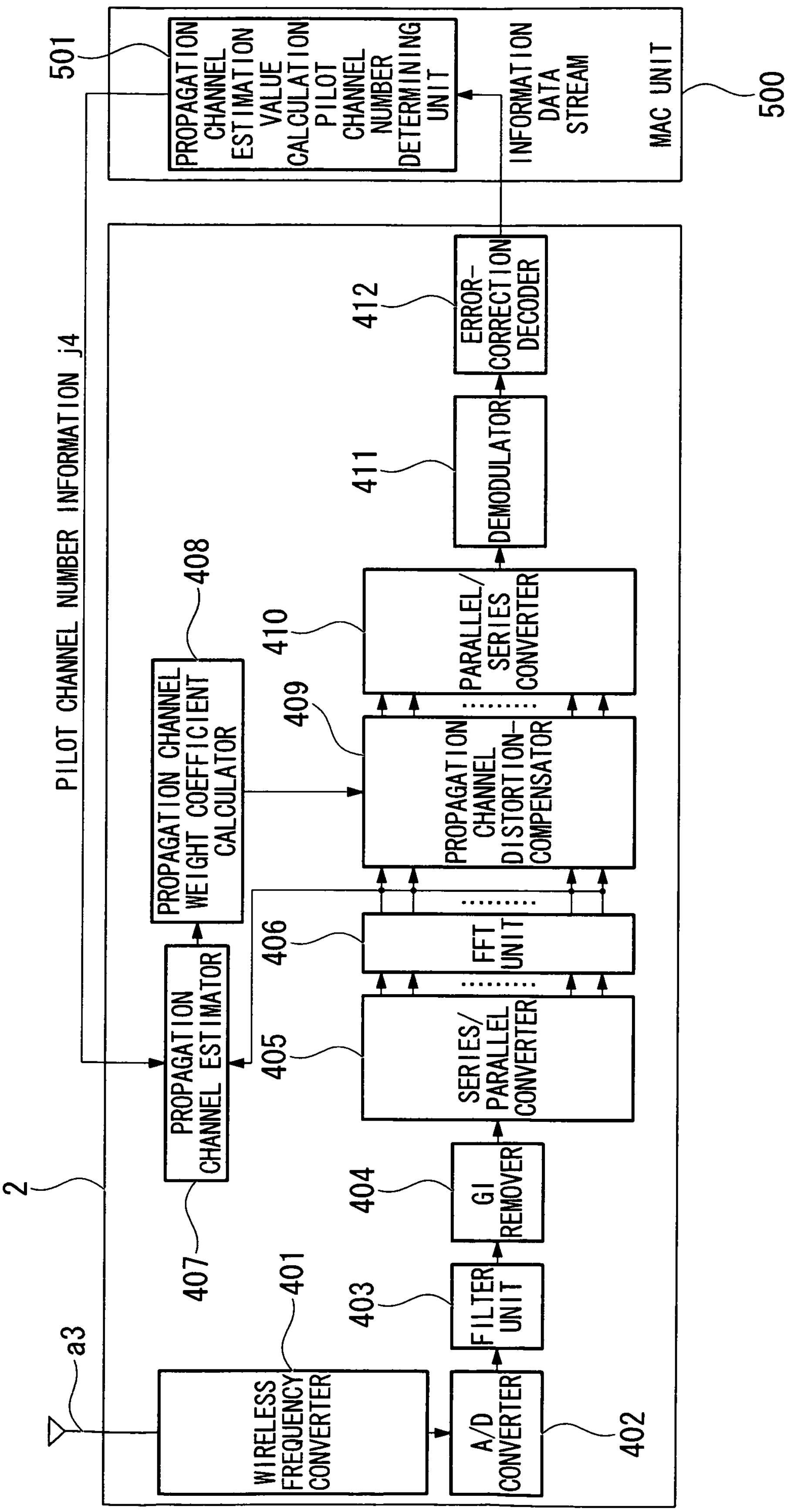
a3
2
401
WIRELESS FREQUENCY CONVERTER
402
A/D CONVERTER
403
FILTER UNIT
404
GI REMOVER
405
SERIES/ PARALLEL CONVERTER
406
FFT UNIT
407
PROPAGATION CHANNEL ESTIMATOR
408
PROPAGATION CHANNEL WEIGHT COEFFICIENT CALCULATOR
409
PROPAGATION CHANNEL DISTORTION-COMPENSATOR
410
PARALLEL/ SERIES CONVERTER
411
DEMODULATOR
412
ERROR-CORRECTION DECODER
PILOT CHANNEL NUMBER INFORMATION j4
501
PROPAGATION CHANNEL ESTIMATION VALUE CALCULATION PILOT CHANNEL NUMBER DETERMINING UNIT
INFORMATION DATA STREAM
MAC UNIT
500

FIG. 11

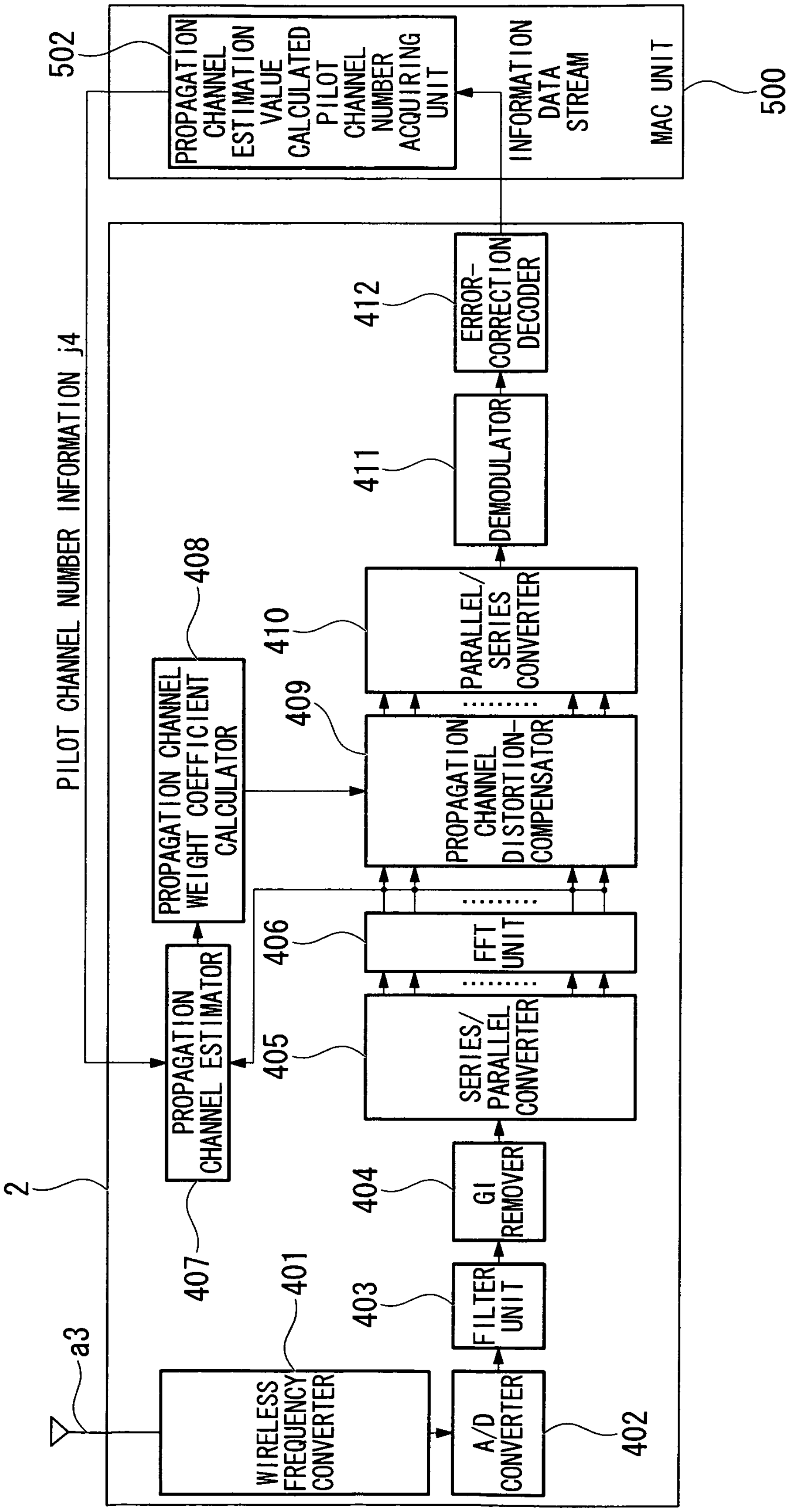
a3
2
WIRELESS FREQUENCY CONVERTER
401
A/D CONVERTER
402
FILTER UNIT
403
GI REMOVER
404
SERIES/ PARALLEL CONVERTER
405
FFT UNIT
406
PROPAGATION CHANNEL ESTIMATOR
407
PROPAGATION CHANNEL WEIGHT COEFFICIENT CALCULATOR
408
PROPAGATION CHANNEL DISTORTION-COMPENSATOR
409
PARALLEL/ SERIES CONVERTER
410
DEMODULATOR
411
ERROR-CORRECTION DECODER
412
PILOT CHANNEL NUMBER INFORMATION j4
PROPAGATION CHANNEL ESTIMATION VALUE CALCULATED PILOT CHANNEL NUMBER ACQUIRING UNIT
502
INFORMATION DATA STREAM
MAC UNIT
500

FIG. 12

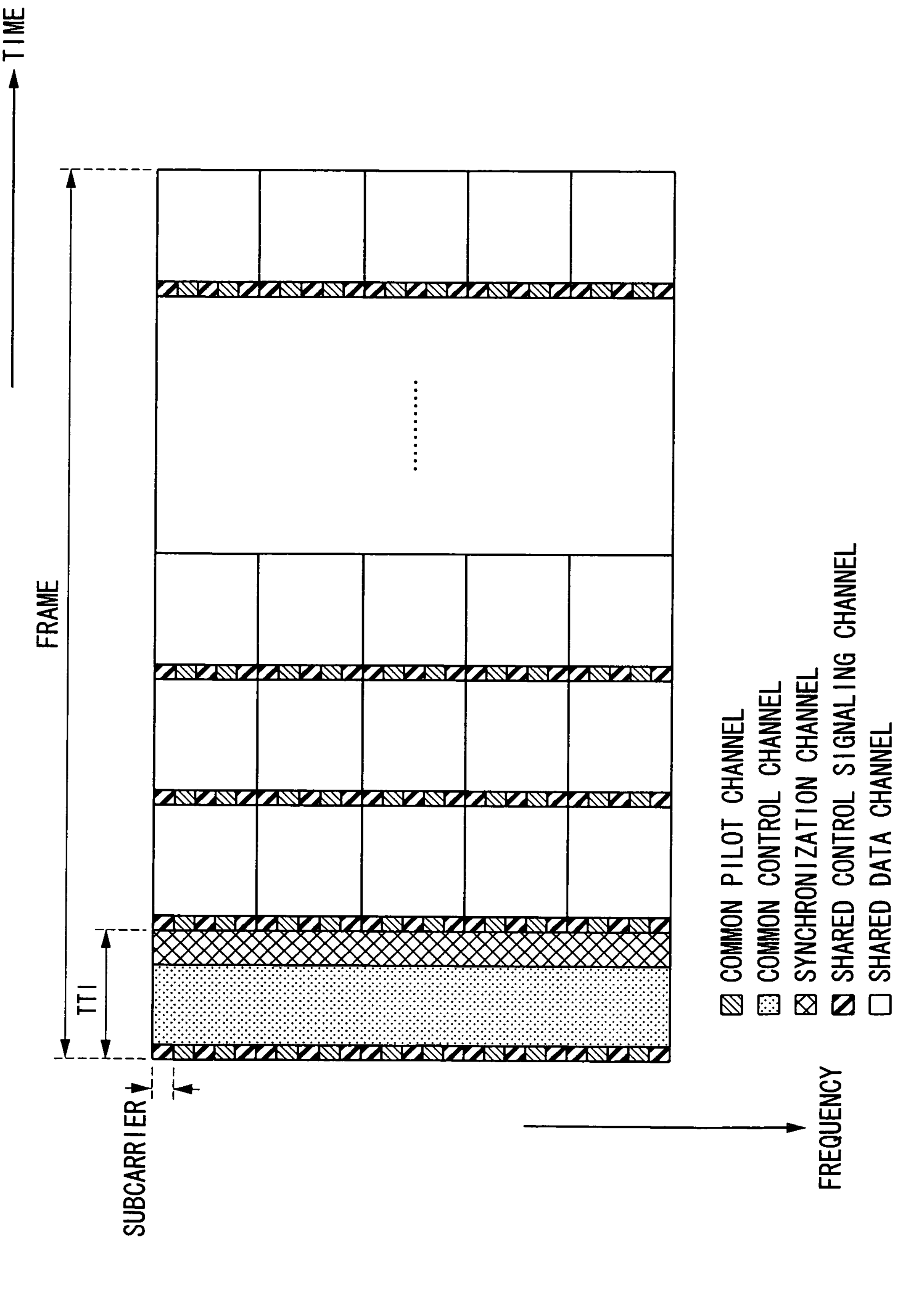
TIME
FRAME
TTI
SUBCARRIER
FREQUENCY
COMMON PILOT CHANNEL
COMMON CONTROL CHANNEL
SYNCHRONIZATION CHANNEL
SHARED CONTROL SIGNALING CHANNEL
SHARED DATA CHANNEL

FIG. 13A

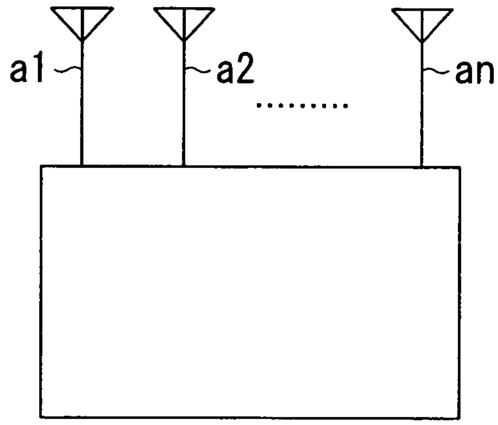


FIG. 13B

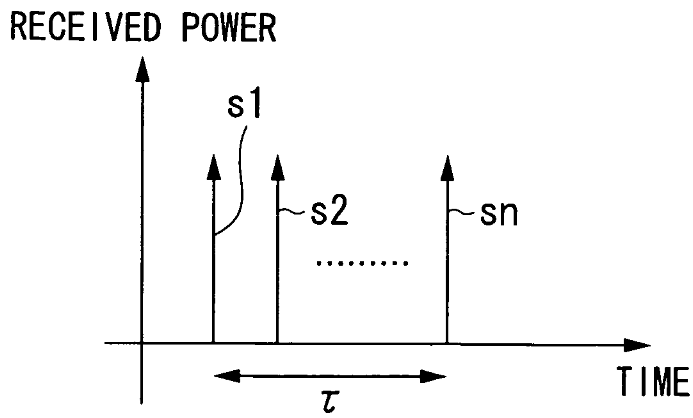

FIG. 14

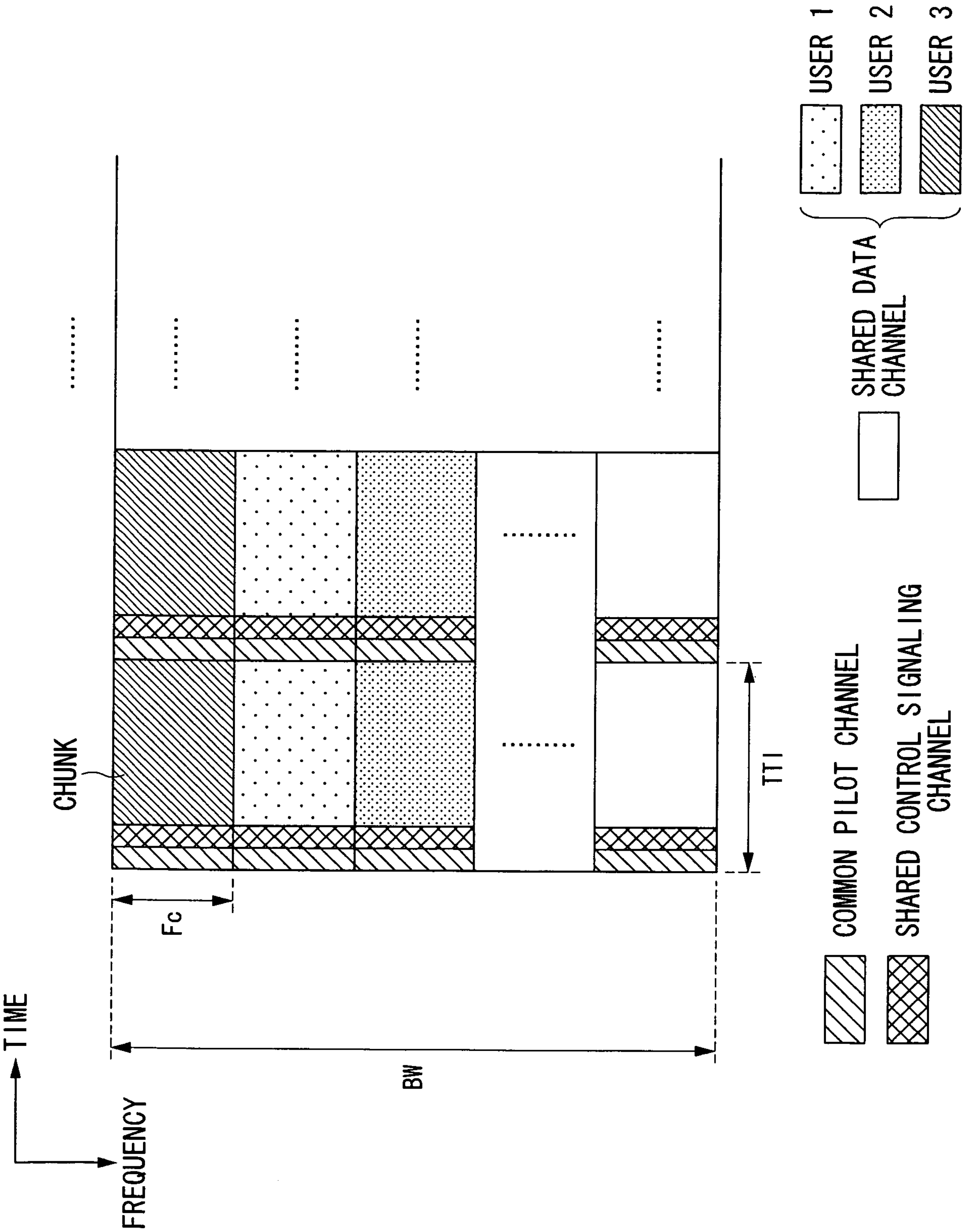
TIME
FREQUENCY
CHUNK
Fc
BW
TTI
COMMON PILOT CHANNEL
SHARED CONTROL SIGNALING CHANNEL
SHARED DATA CHANNEL
USER 1
USER 2
USER 3

FIG. 15

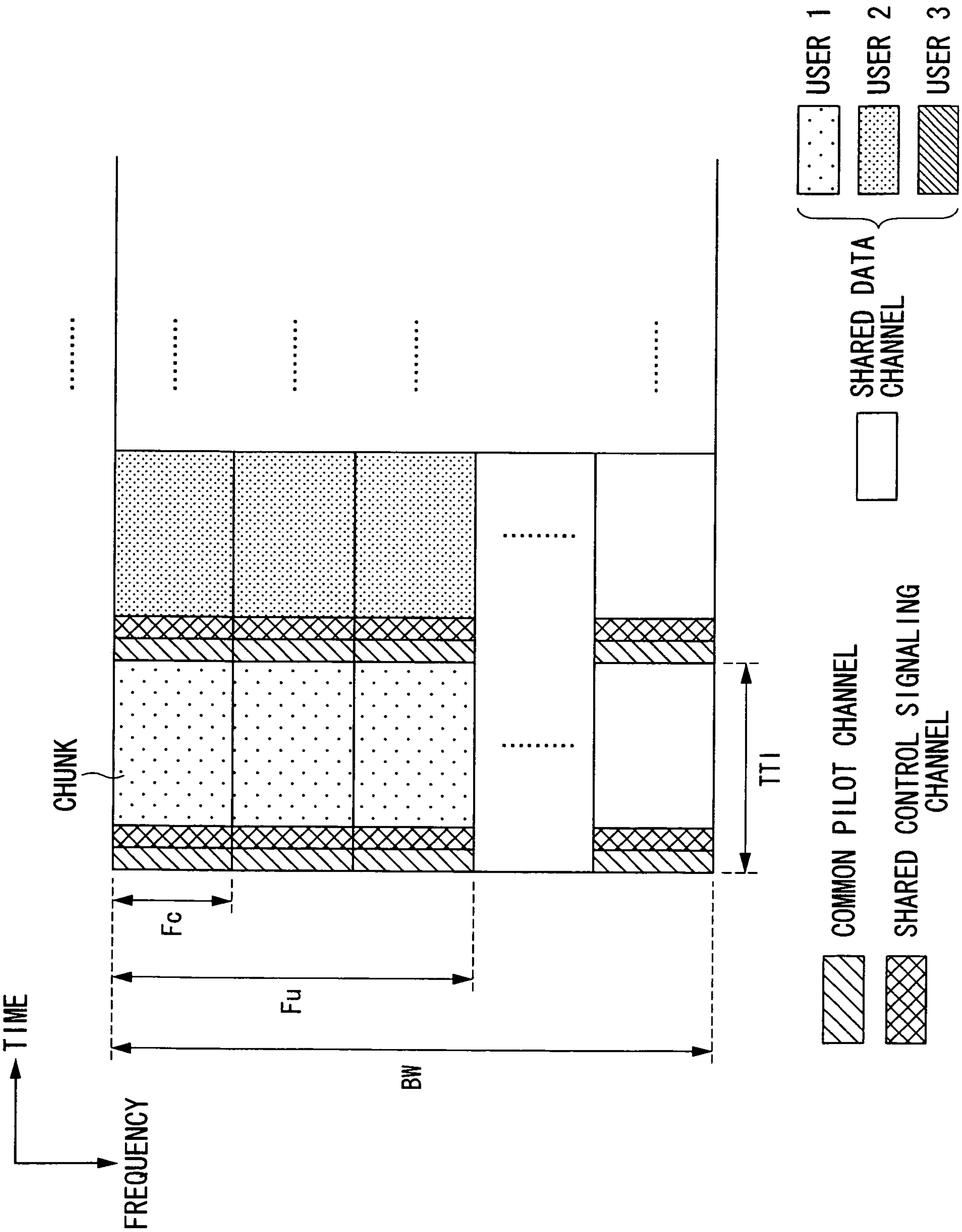
TIME
FREQUENCY
BW
Fu
Fc
CHUNK
TTI
COMMON PILOT CHANNEL
SHARED CONTROL SIGNALING CHANNEL
SHARED DATA CHANNEL
USER 1
USER 2
USER 3

FIG. 16

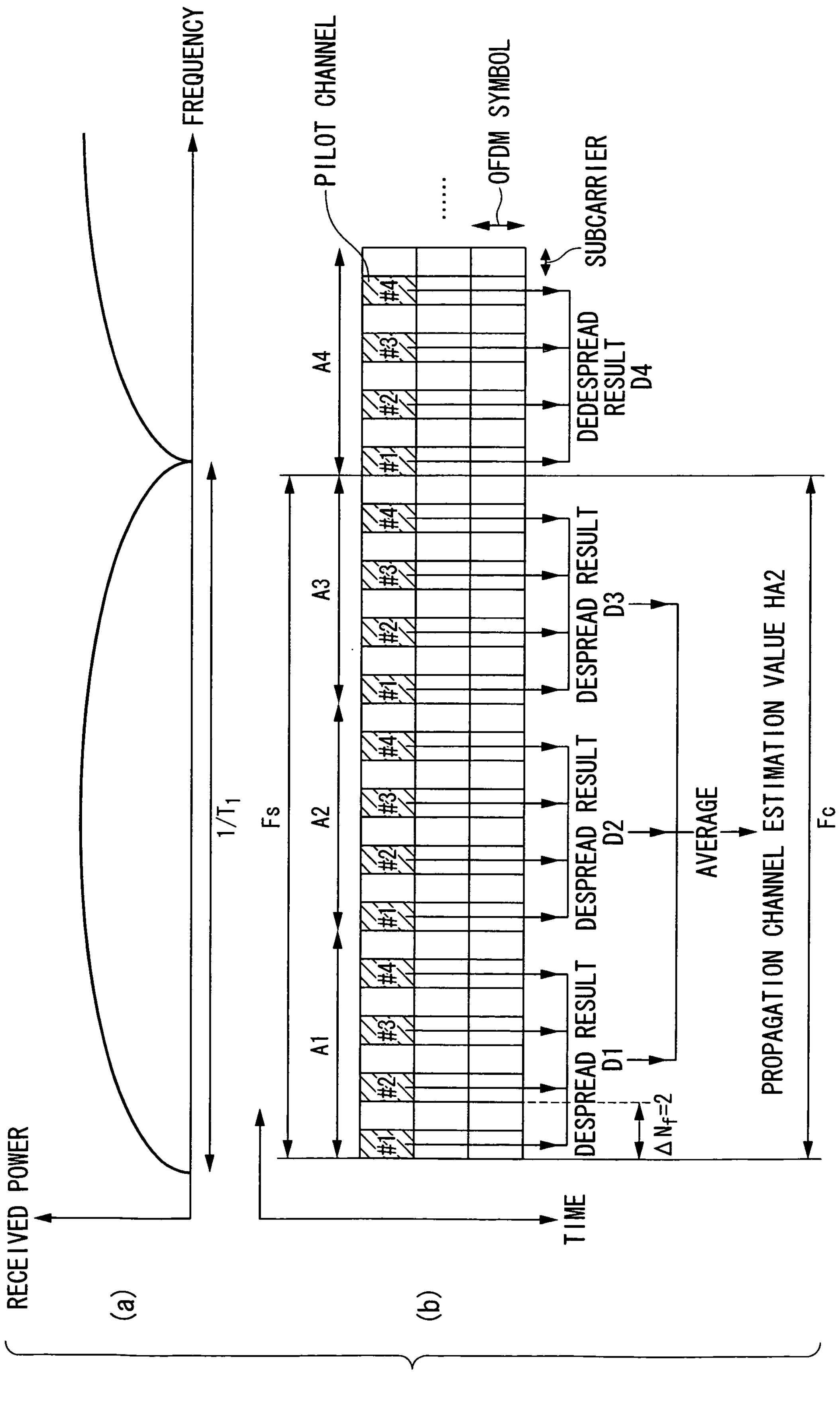
RECEIVED POWER
FREQUENCY
(a)
(b)
1/$T_1$
Fs
TIME
PILOT CHANNEL
OFDM SYMBOL
SUBCARRIER
A1
A2
A3
A4
#1
#2
#3
#4
DESPREAD RESULT D1
DESPREAD RESULT D2
DESPREAD RESULT D3
DEDESPREAD RESULT D4
$\Delta N_f$=2
AVERAGE
PROPAGATION CHANNEL ESTIMATION VALUE HA2
Fc

FIG. 17A

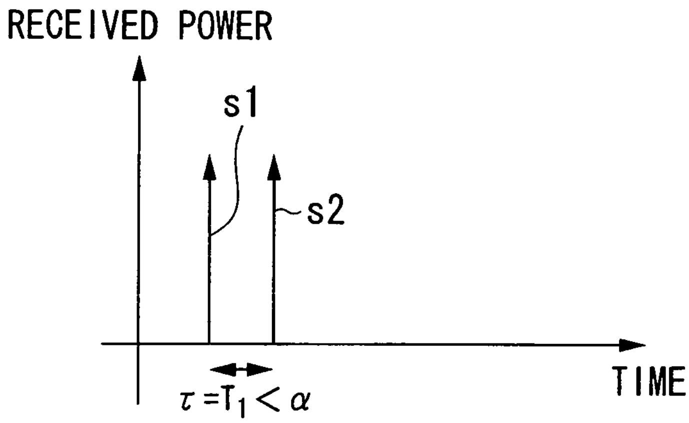


FIG. 17B

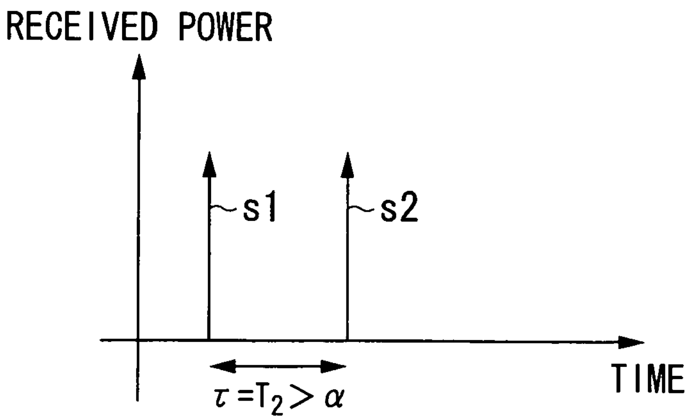

FIG. 18

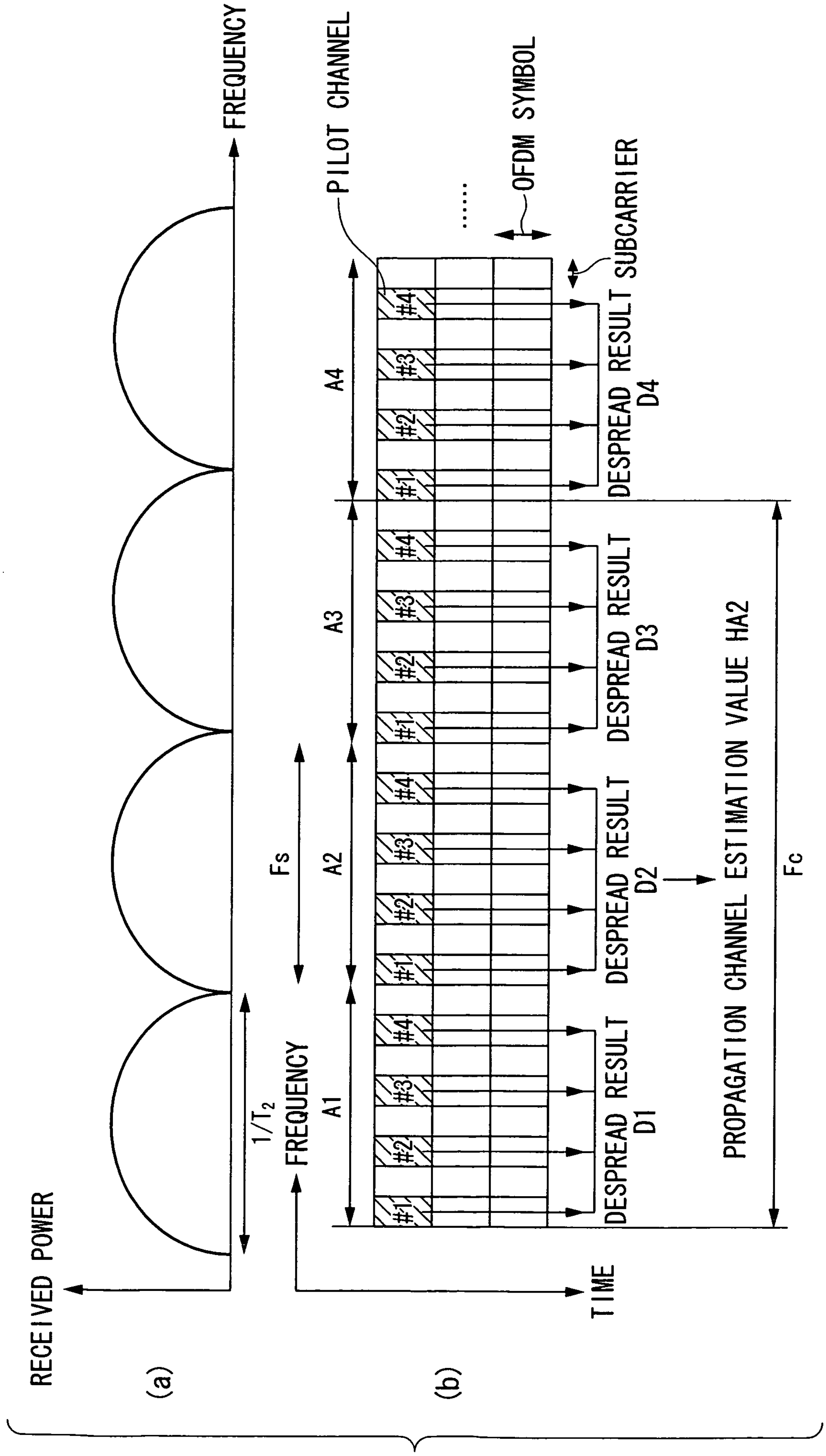
(a)
RECEIVED POWER
FREQUENCY
$1/T_2$
(b)
FREQUENCY
TIME
PILOT CHANNEL
OFDM SYMBOL
SUBCARRIER
Fs
A1
A2
A3
A4
#1
#2
#3
#4
DESPREAD RESULT D1
DESPREAD RESULT D2
DESPREAD RESULT D3
DESPREAD RESULT D4
PROPAGATION CHANNEL ESTIMATION VALUE HA2
Fc

FIG. 19

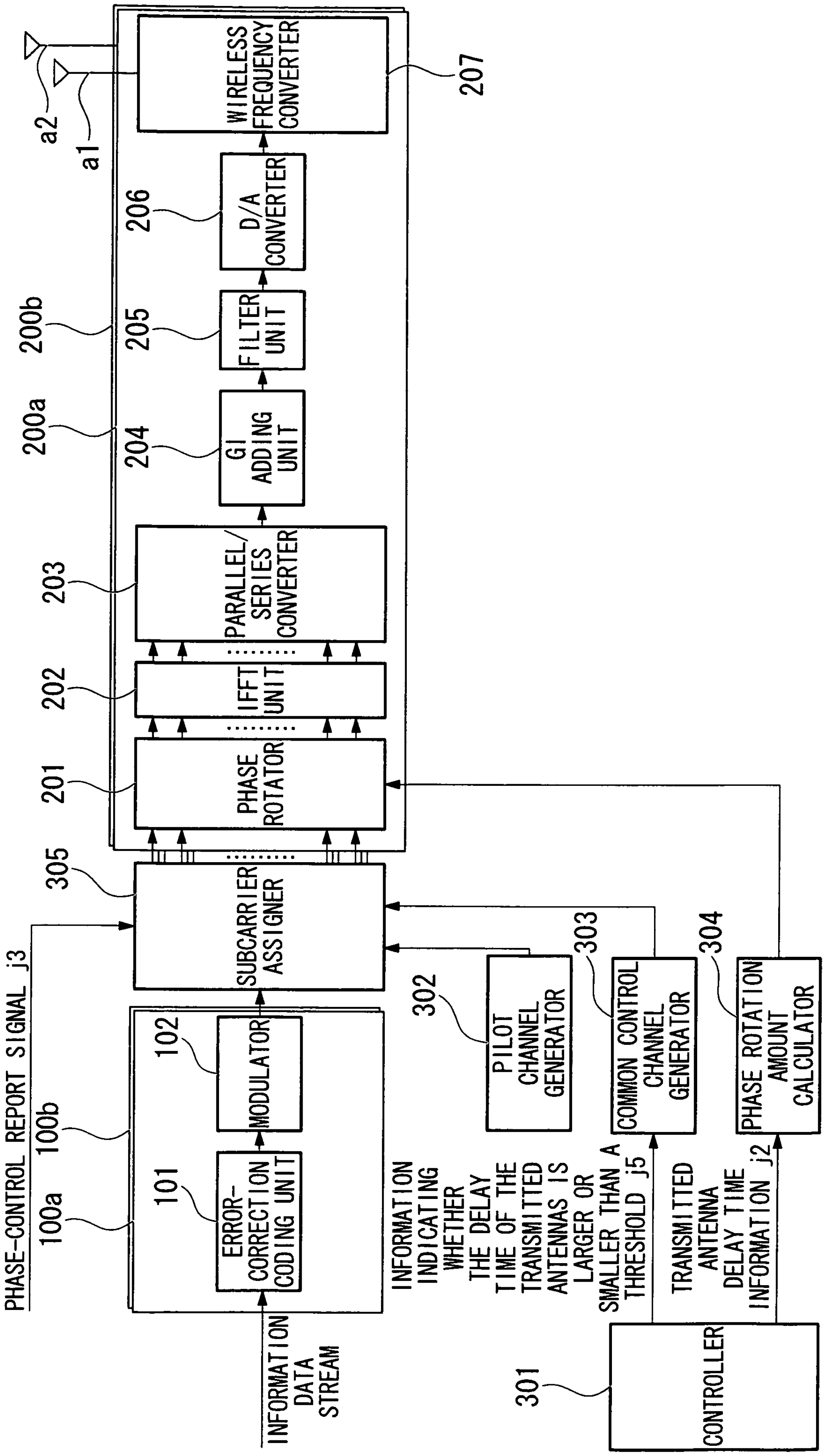
PHASE-CONTROL REPORT SIGNAL j3
100a
100b
101
ERROR-CORRECTION CODING UNIT
102
MODULATOR
INFORMATION DATA STREAM
305
SUBCARRIER ASSIGNER
302
PILOT CHANNEL GENERATOR
303
COMMON CONTROL CHANNEL GENERATOR
304
PHASE ROTATION AMOUNT CALCULATOR
301
CONTROLLER
INFORMATION INDICATING WHETHER THE DELAY TIME OF THE TRANSMITTED ANTENNAS IS LARGER OR SMALLER THAN A THRESHOLD j5
TRANSMITTED ANTENNA DELAY TIME INFORMATION j2
200a
200b
201
PHASE ROTATOR
202
IFFT UNIT
203
PARALLEL/SERIES CONVERTER
204
GI ADDING UNIT
205
FILTER UNIT
206
D/A CONVERTER
207
WIRELESS FREQUENCY CONVERTER
a1
a2

FIG. 20

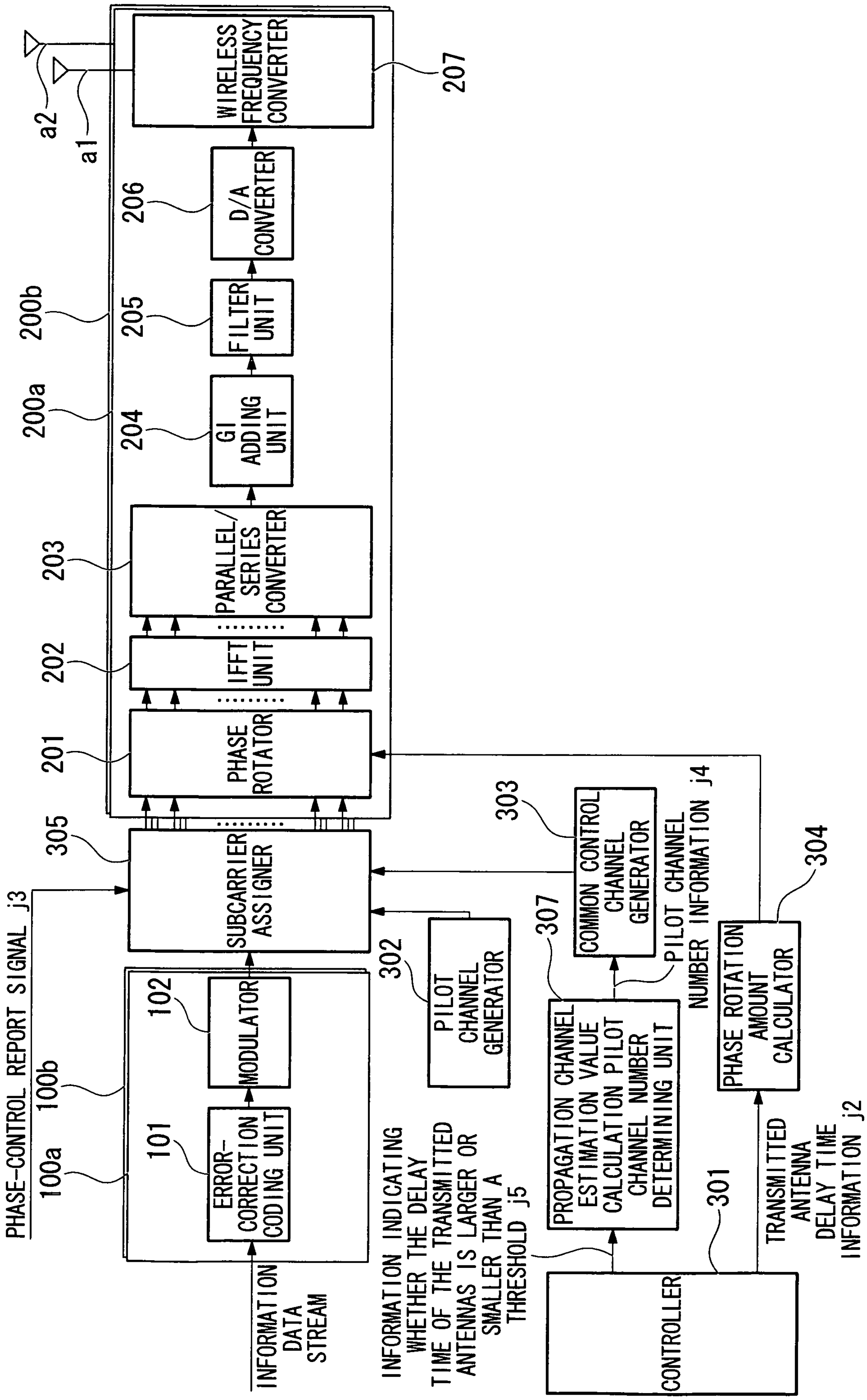
PHASE-CONTROL REPORT SIGNAL j3
100a
100b
101
ERROR-CORRECTION CODING UNIT
102
MODULATOR
INFORMATION DATA STREAM
305
SUBCARRIER ASSIGNER
201
PHASE ROTATOR
202
IFFT UNIT
203
PARALLEL/SERIES CONVERTER
200a
204
GI ADDING UNIT
200b
205
FILTER UNIT
206
D/A CONVERTER
WIRELESS FREQUENCY CONVERTER
207
a1
a2
302
PILOT CHANNEL GENERATOR
303
COMMON CONTROL CHANNEL GENERATOR
307
PROPAGATION CHANNEL ESTIMATION VALUE CALCULATION PILOT CHANNEL NUMBER DETERMINING UNIT
PILOT CHANNEL NUMBER INFORMATION j4
304
PHASE ROTATION AMOUNT CALCULATOR
INFORMATION INDICATING WHETHER THE DELAY TIME OF THE TRANSMITTED ANTENNAS IS LARGER OR SMALLER THAN A THRESHOLD j5
301
CONTROLLER
TRANSMITTED ANTENNA DELAY TIME INFORMATION j2

FIG. 21

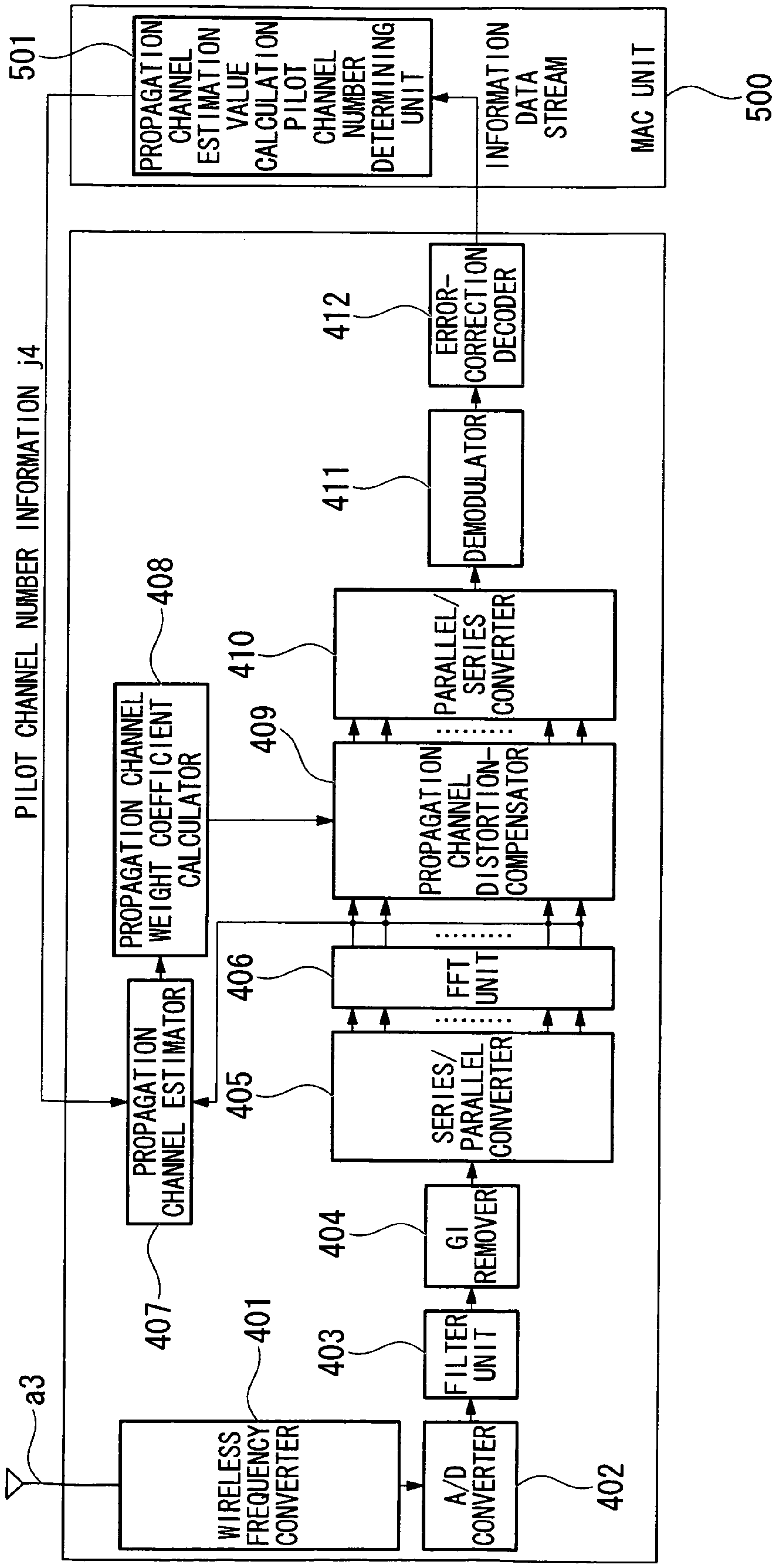
a3
401
WIRELESS FREQUENCY CONVERTER
402
A/D CONVERTER
403
FILTER UNIT
404
GI REMOVER
405
SERIES/ PARALLEL CONVERTER
406
FFT UNIT
407
PROPAGATION CHANNEL ESTIMATOR
408
PROPAGATION CHANNEL WEIGHT COEFFICIENT CALCULATOR
409
PROPAGATION CHANNEL DISTORTION-COMPENSATOR
410
PARALLEL/ SERIES CONVERTER
411
DEMODULATOR
412
ERROR-CORRECTION DECODER
PILOT CHANNEL NUMBER INFORMATION j4
501
PROPAGATION CHANNEL ESTIMATION VALUE CALCULATION PILOT CHANNEL NUMBER DETERMINING UNIT
INFORMATION DATA STREAM
MAC UNIT
500

FIG. 22

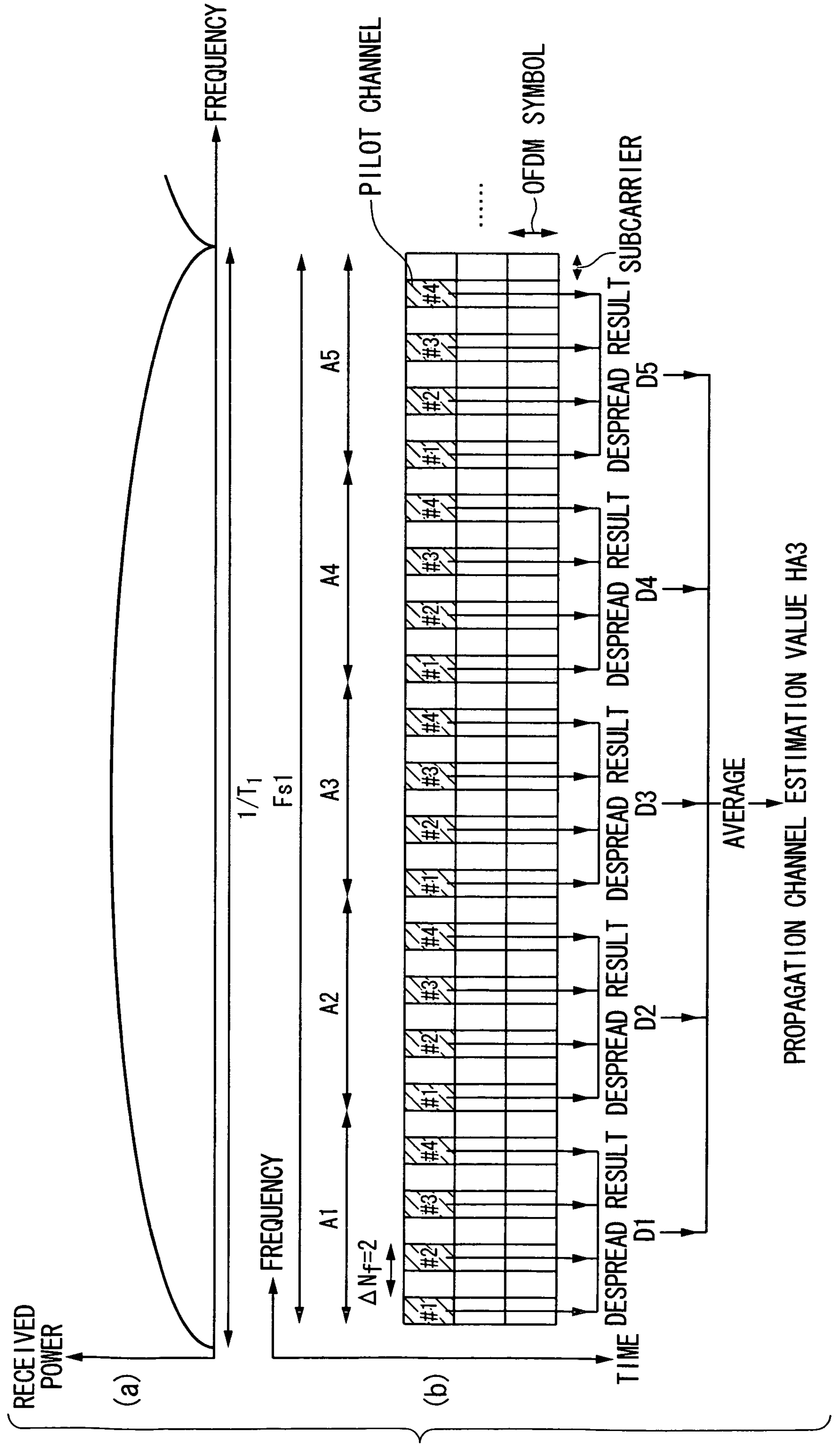
(a)
RECEIVED POWER
FREQUENCY
$1/T_1$
Fs1
(b)
FREQUENCY
TIME
A1
A2
A3
A4
A5
$\Delta Nf=2$
#1
#2
#3
#4
PILOT CHANNEL
OFDM SYMBOL
SUBCARRIER
DESPREAD RESULT D1
DESPREAD RESULT D2
DESPREAD RESULT D3
DESPREAD RESULT D4
DESPREAD RESULT D5
AVERAGE
PROPAGATION CHANNEL ESTIMATION VALUE HA3

FIG. 23A

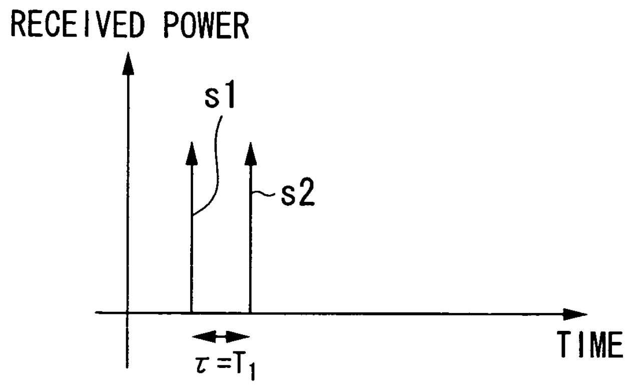


FIG. 23B

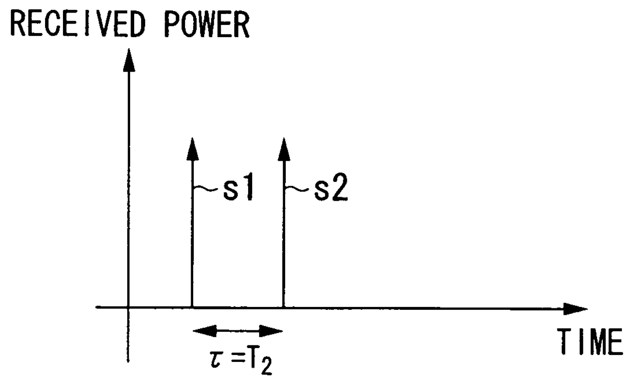


FIG. 23C

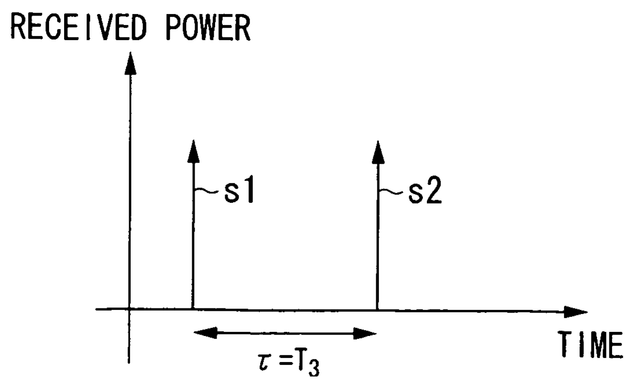

FIG. 24

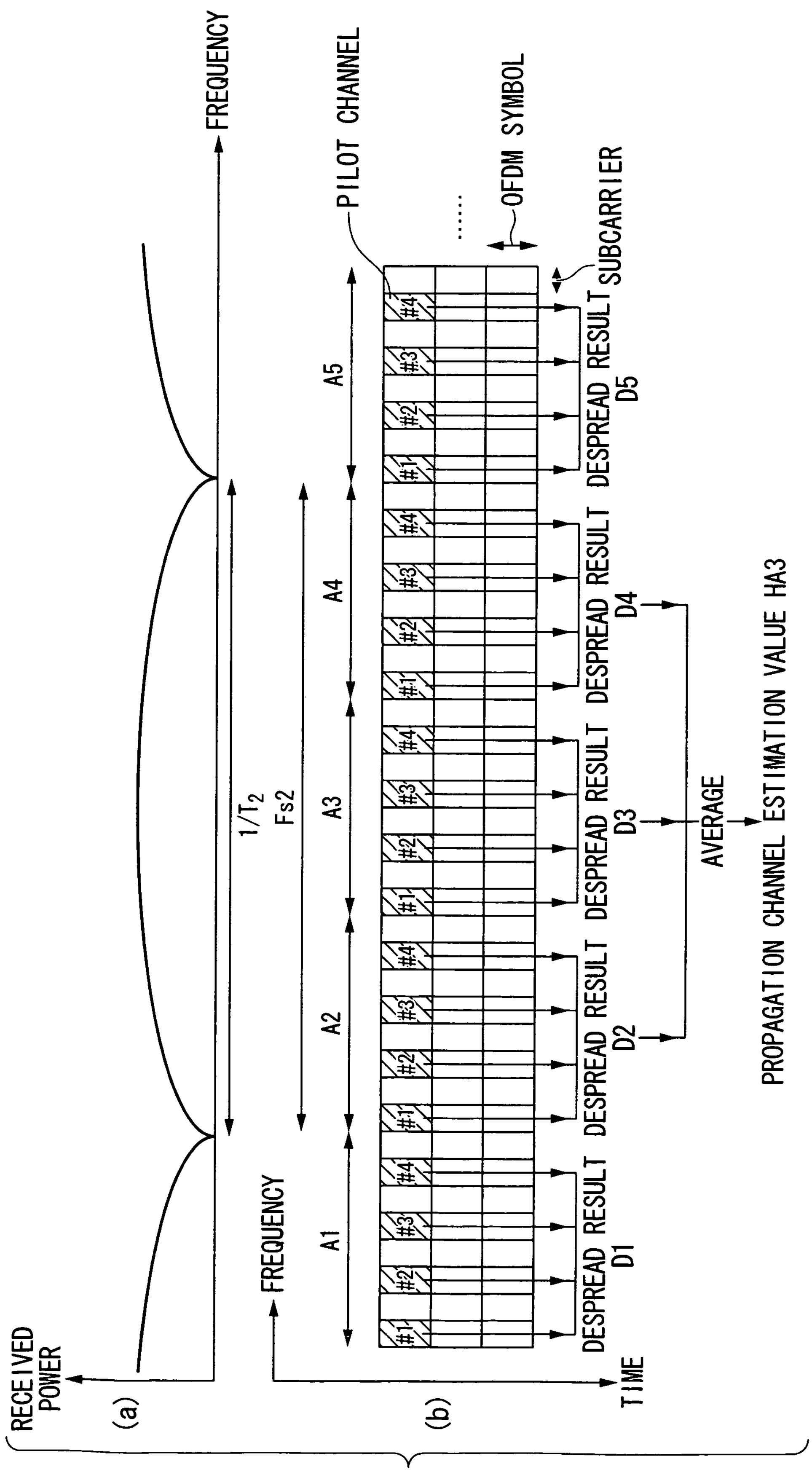
(a)
RECEIVED POWER
FREQUENCY
$1/T_2$
Fs2
(b)
FREQUENCY
TIME
A1
A2
A3
A4
A5
#1
#2
#3
#4
PILOT CHANNEL
OFDM SYMBOL
SUBCARRIER
DESPREAD RESULT D1
DESPREAD RESULT D2
DESPREAD RESULT D3
DESPREAD RESULT D4
DESPREAD RESULT D5
AVERAGE
PROPAGATION CHANNEL ESTIMATION VALUE HA3

FIG. 25

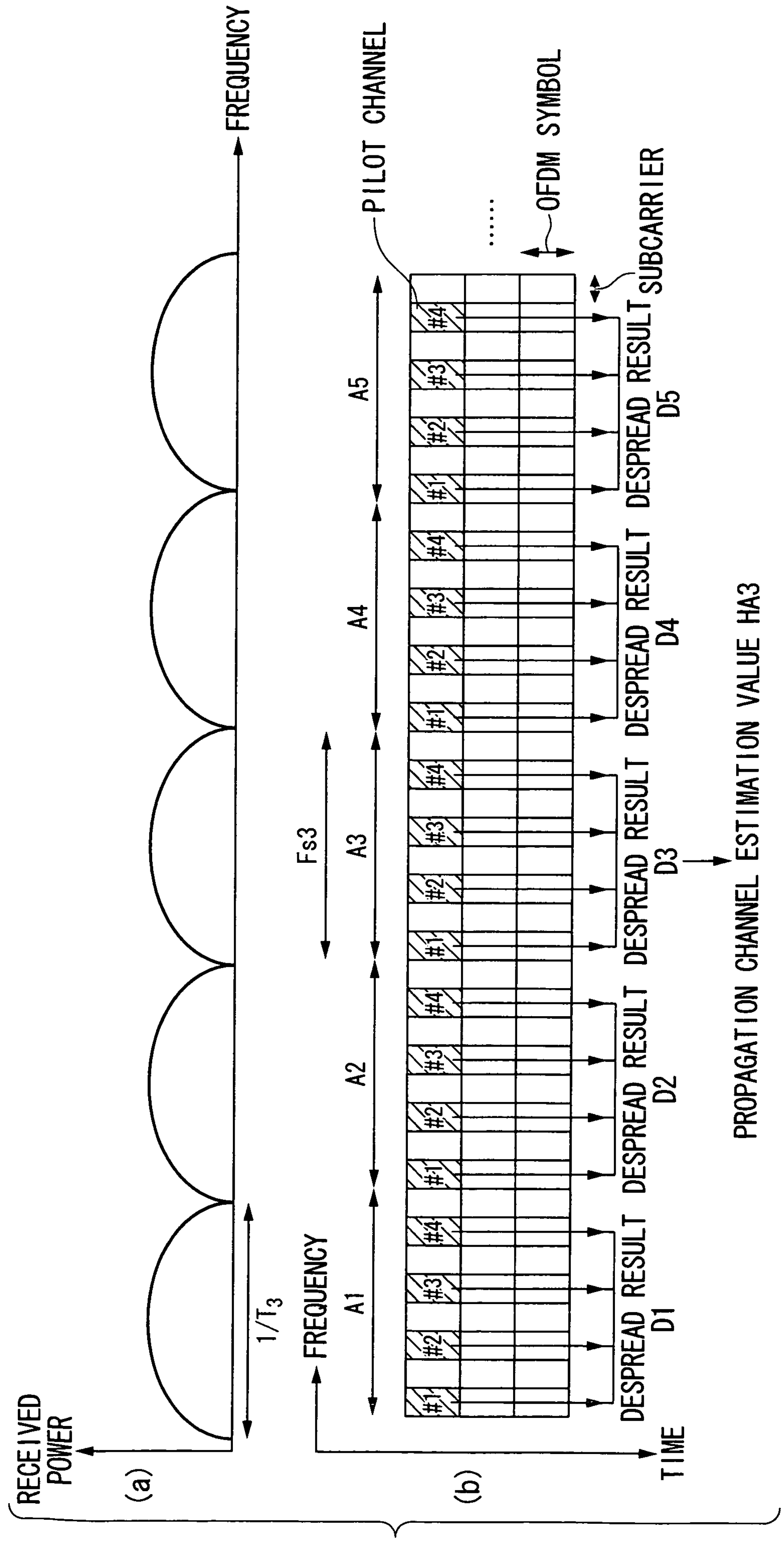
(a)
RECEIVED POWER
FREQUENCY
1/T3
(b)
FREQUENCY
TIME
PILOT CHANNEL
OFDM SYMBOL
SUBCARRIER
Fs3
A1
A2
A3
A4
A5
#1
#2
#3
#4
DESPREAD RESULT D1
DESPREAD RESULT D2
DESPREAD RESULT D3
DESPREAD RESULT D4
DESPREAD RESULT D5
PROPAGATION CHANNEL ESTIMATION VALUE HA3

FIG. 26

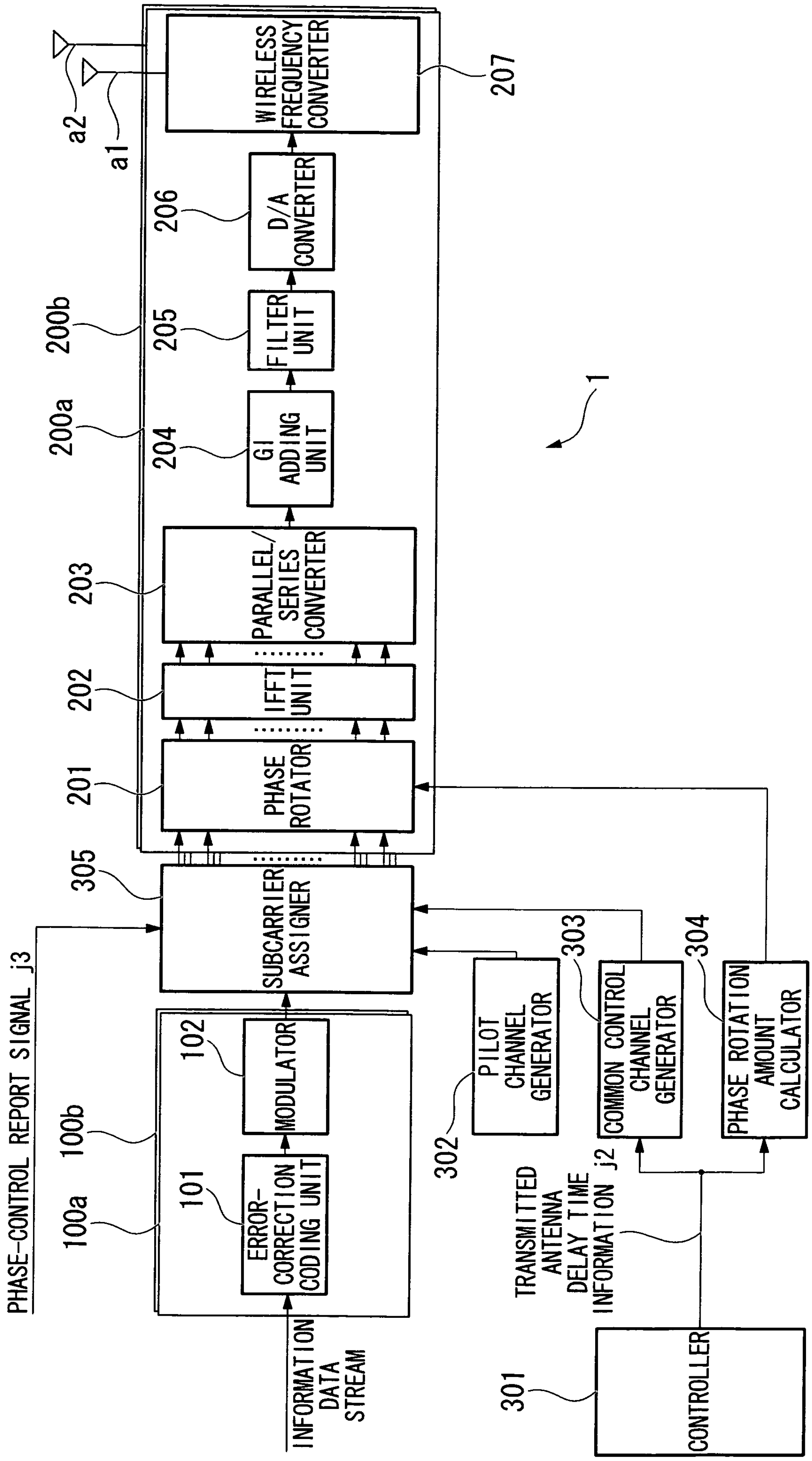
PHASE-CONTROL REPORT SIGNAL j3
INFORMATION DATA STREAM
100a
100b
101
ERROR-CORRECTION CODING UNIT
102
MODULATOR
305
SUBCARRIER ASSIGNER
302
PILOT CHANNEL GENERATOR
303
COMMON CONTROL CHANNEL GENERATOR
304
PHASE ROTATION AMOUNT CALCULATOR
TRANSMITTED ANTENNA DELAY TIME INFORMATION j2
301
CONTROLLER
200a
200b
201
PHASE ROTATOR
202
IFFT UNIT
203
PARALLEL/SERIES CONVERTER
204
GI ADDING UNIT
205
FILTER UNIT
206
D/A CONVERTER
207
WIRELESS FREQUENCY CONVERTER
a1
a2
1

FIG. 27

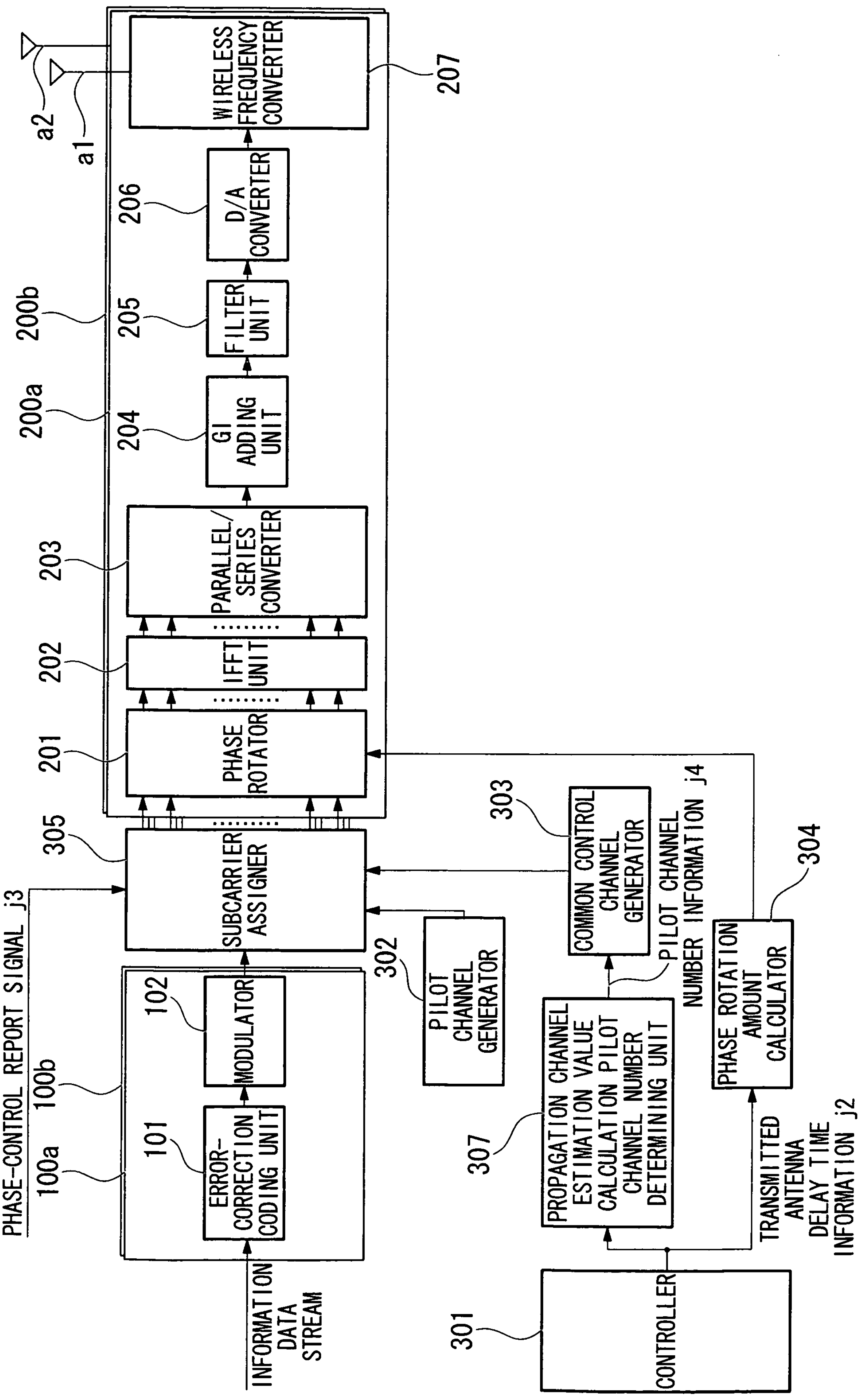
PHASE-CONTROL REPORT SIGNAL j3
100a
100b
101
ERROR-CORRECTION CODING UNIT
102
MODULATOR
INFORMATION DATA STREAM
305
SUBCARRIER ASSIGNER
302
PILOT CHANNEL GENERATOR
303
COMMON CONTROL CHANNEL GENERATOR
PILOT CHANNEL NUMBER INFORMATION j4
307
PROPAGATION CHANNEL ESTIMATION VALUE CALCULATION PILOT CHANNEL NUMBER DETERMINING UNIT
304
PHASE ROTATION AMOUNT CALCULATOR
TRANSMITTED ANTENNA DELAY TIME INFORMATION j2
301
CONTROLLER
200a
200b
201
PHASE ROTATOR
202
IFFT UNIT
203
PARALLEL/SERIES CONVERTER
204
GI ADDING UNIT
205
FILTER UNIT
206
D/A CONVERTER
207
WIRELESS FREQUENCY CONVERTER
a1
a2

FIG. 28

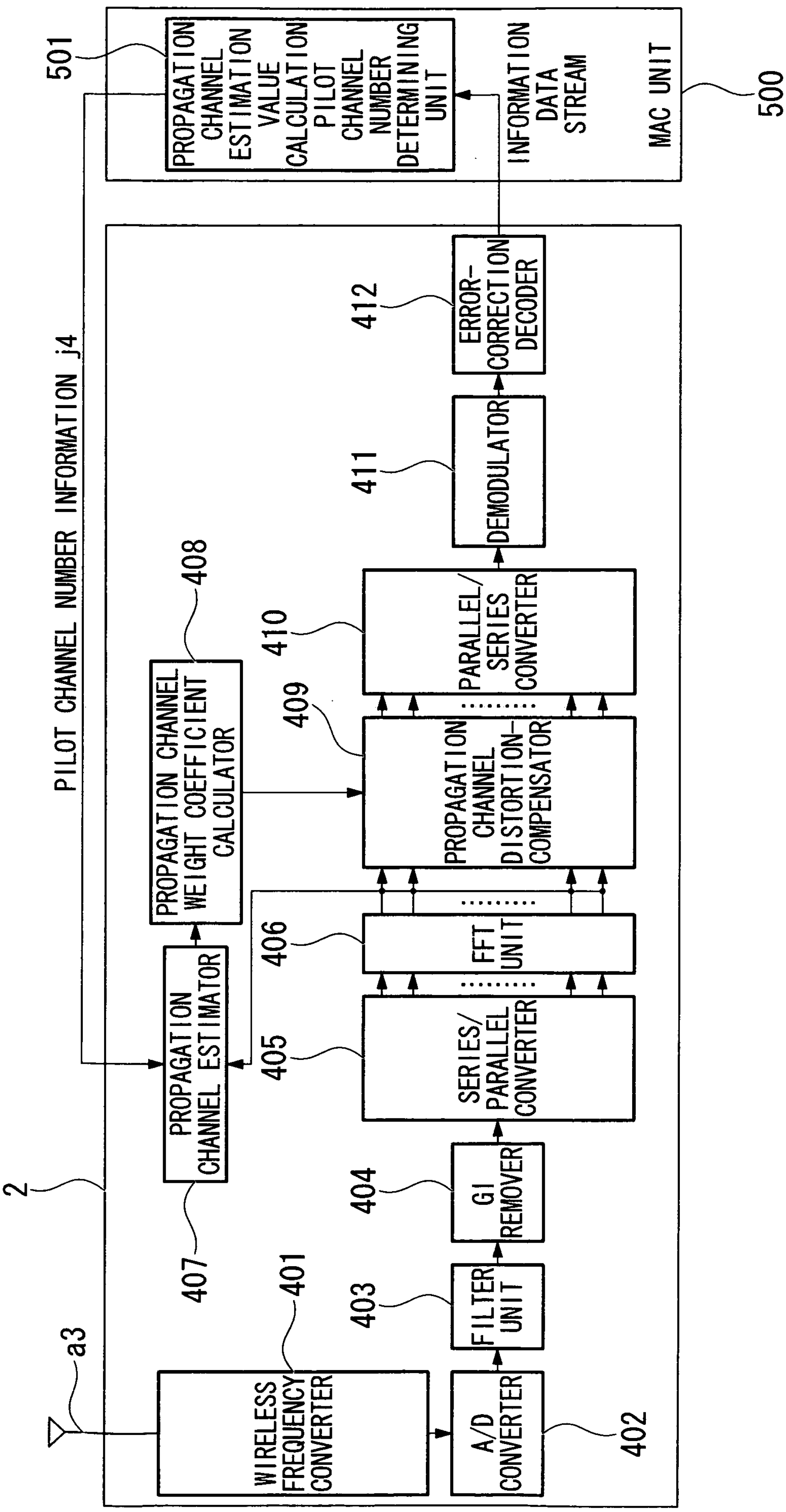
PROPAGATION CHANNEL ESTIMATION VALUE CALCULATION PILOT CHANNEL NUMBER DETERMINING UNIT
501
INFORMATION DATA STREAM
MAC UNIT
500
PILOT CHANNEL NUMBER INFORMATION j4
2
a3
WIRELESS FREQUENCY CONVERTER
401
A/D CONVERTER
402
FILTER UNIT
403
GI REMOVER
404
SERIES/ PARALLEL CONVERTER
405
FFT UNIT
406
PROPAGATION CHANNEL ESTIMATOR
407
PROPAGATION CHANNEL WEIGHT COEFFICIENT CALCULATOR
408
PROPAGATION CHANNEL DISTORTION-COMPENSATOR
409
PARALLEL/ SERIES CONVERTER
410
DEMODULATOR
411
ERROR-CORRECTION DECODER
412

FIG. 29

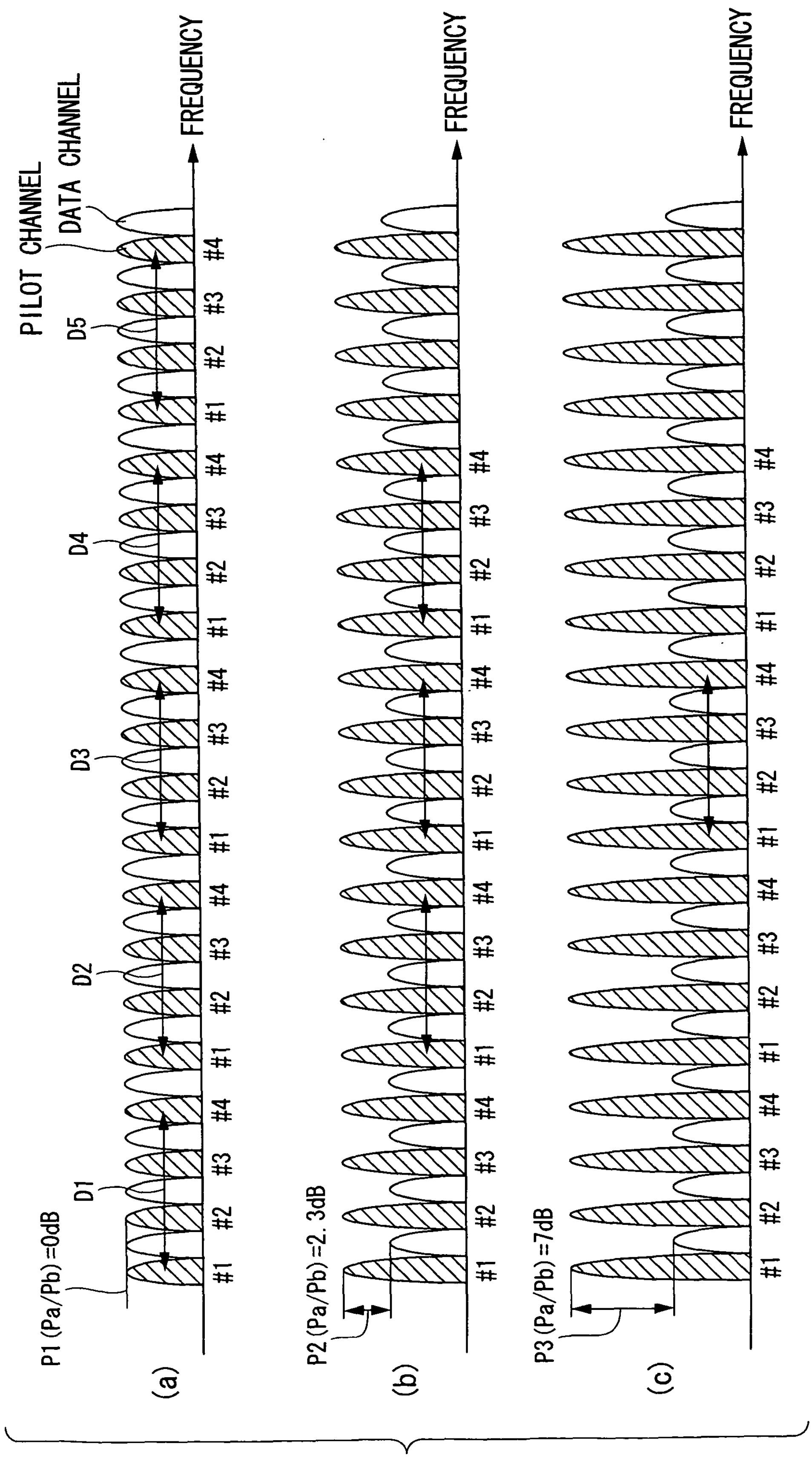
(a)
P1 (Pa/Pb) =0dB
D1
D2
D3
D4
D5
PILOT CHANNEL
DATA CHANNEL
FREQUENCY
#1 #2 #3 #4 #1 #2 #3 #4 #1 #2 #3 #4 #1 #2 #3 #4 #1 #2 #3 #4
(b)
P2 (Pa/Pb) =2. 3dB
FREQUENCY
#1 #2 #3 #4 #1 #2 #3 #4 #1 #2 #3 #4 #1 #2 #3 #4
(c)
P3 (Pa/Pb) =7dB
FREQUENCY
#1 #2 #3 #4 #1 #2 #3 #4 #1 #2 #3 #4 #1 #2 #3 #4

FIG. 30

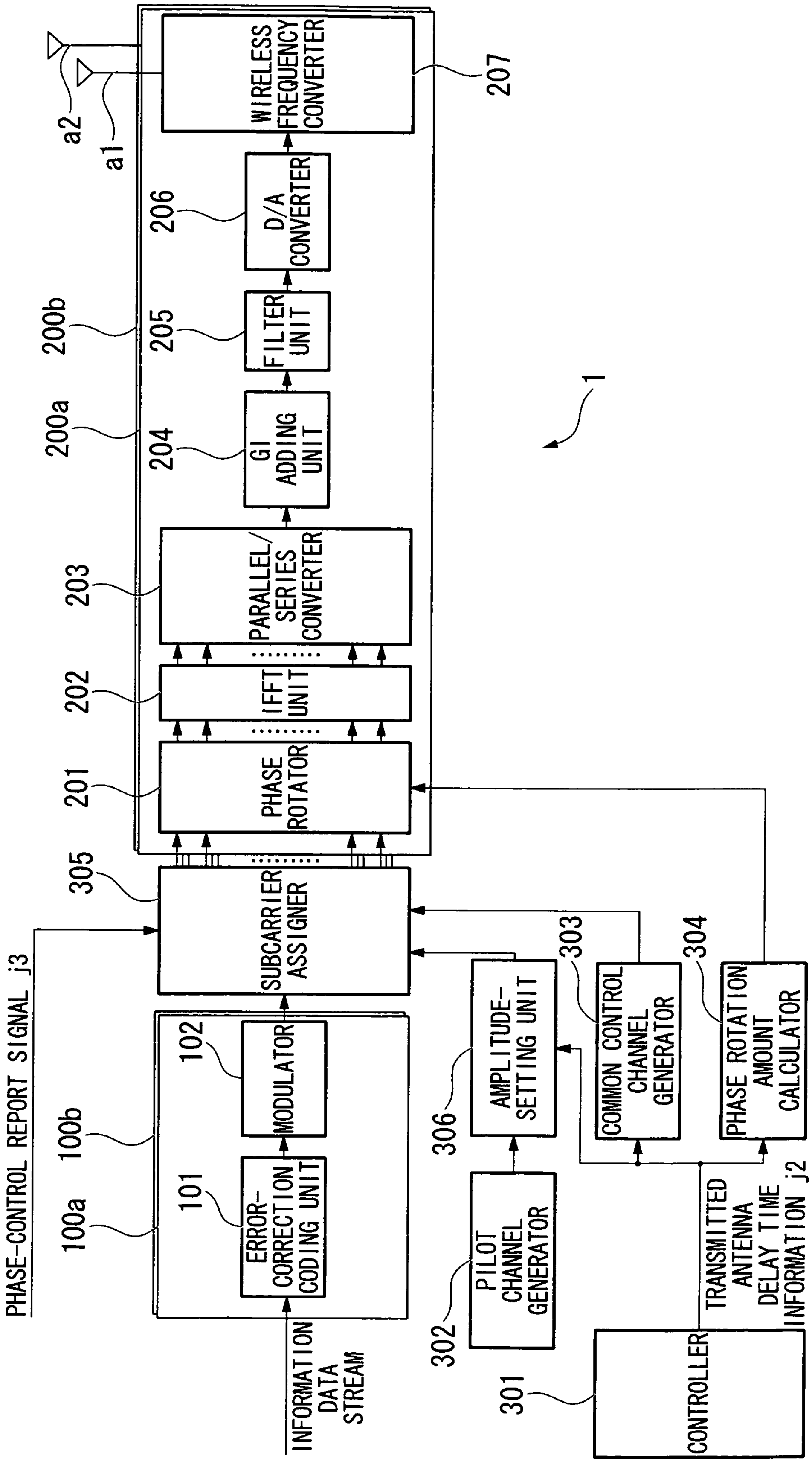
PHASE-CONTROL REPORT SIGNAL j3
INFORMATION DATA STREAM
100a
100b
101
ERROR-CORRECTION CODING UNIT
102
MODULATOR
305
SUBCARRIER ASSIGNER
200a
200b
201
PHASE ROTATOR
202
IFFT UNIT
203
PARALLEL/SERIES CONVERTER
204
GI ADDING UNIT
205
FILTER UNIT
206
D/A CONVERTER
207
WIRELESS FREQUENCY CONVERTER
a1
a2
1
301
CONTROLLER
302
PILOT CHANNEL GENERATOR
306
AMPLITUDE-SETTING UNIT
303
COMMON CONTROL CHANNEL GENERATOR
304
PHASE ROTATION AMOUNT CALCULATOR
TRANSMITTED ANTENNA DELAY TIME INFORMATION j2

FIG. 31

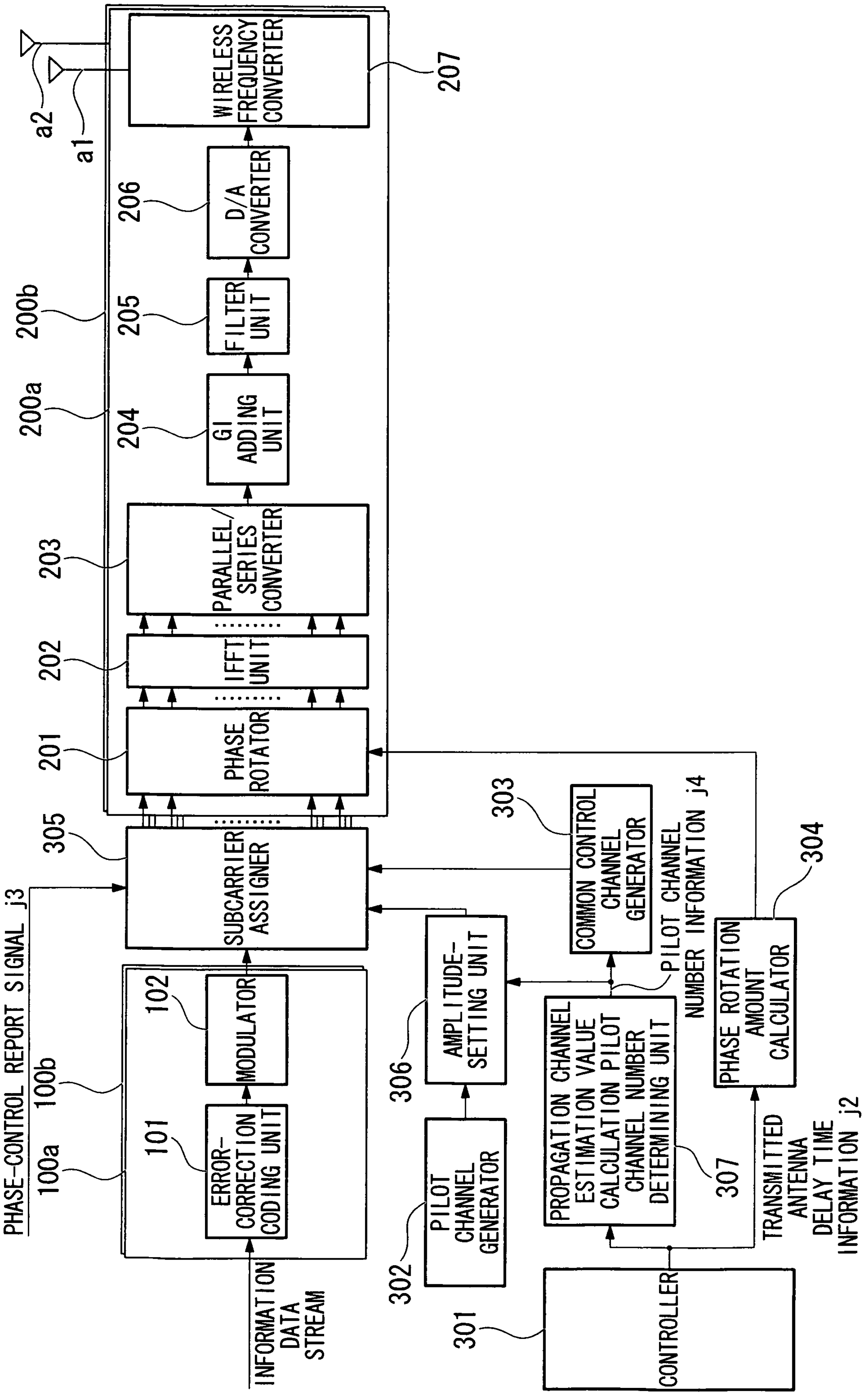
PHASE-CONTROL REPORT SIGNAL j3
100a
100b
101
ERROR-CORRECTION CODING UNIT
102
MODULATOR
INFORMATION DATA STREAM
305
SUBCARRIER ASSIGNER
200a
200b
201
PHASE ROTATOR
202
IFFT UNIT
203
PARALLEL/SERIES CONVERTER
204
GI ADDING UNIT
205
FILTER UNIT
206
D/A CONVERTER
207
WIRELESS FREQUENCY CONVERTER
a1
a2
301
CONTROLLER
302
PILOT CHANNEL GENERATOR
306
AMPLITUDE-SETTING UNIT
303
COMMON CONTROL CHANNEL GENERATOR
307
PROPAGATION CHANNEL ESTIMATION VALUE CALCULATION PILOT CHANNEL NUMBER DETERMINING UNIT
PILOT CHANNEL NUMBER INFORMATION j4
304
PHASE ROTATION AMOUNT CALCULATOR
TRANSMITTED ANTENNA DELAY TIME INFORMATION j2

FIG. 32A

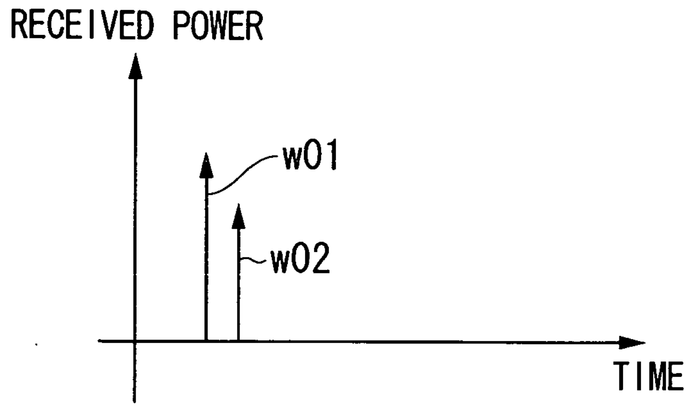


FIG. 32B

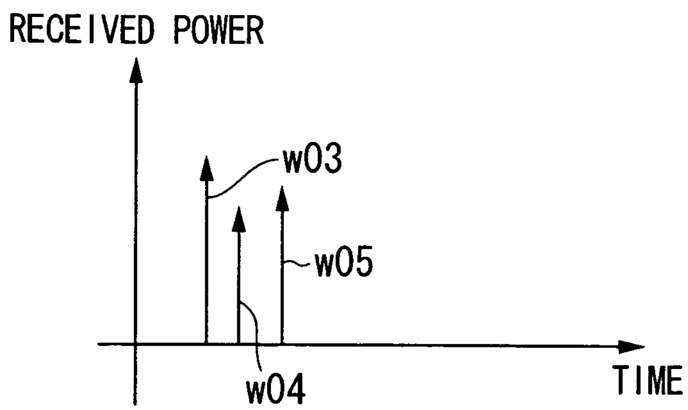

FIG. 33A

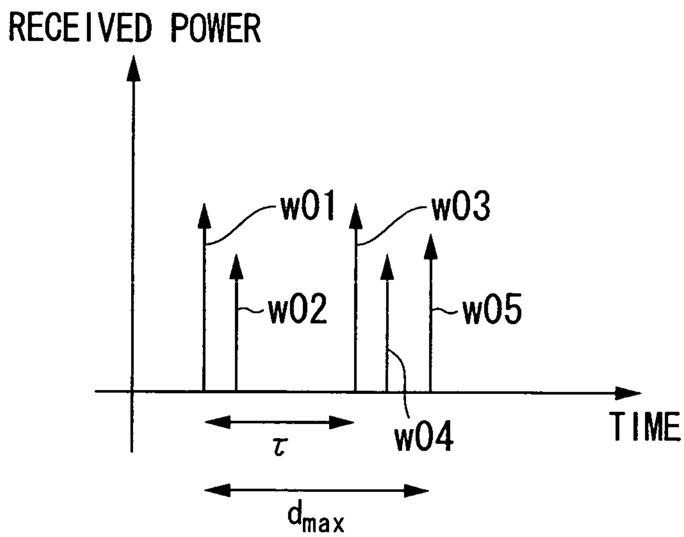


FIG. 33B

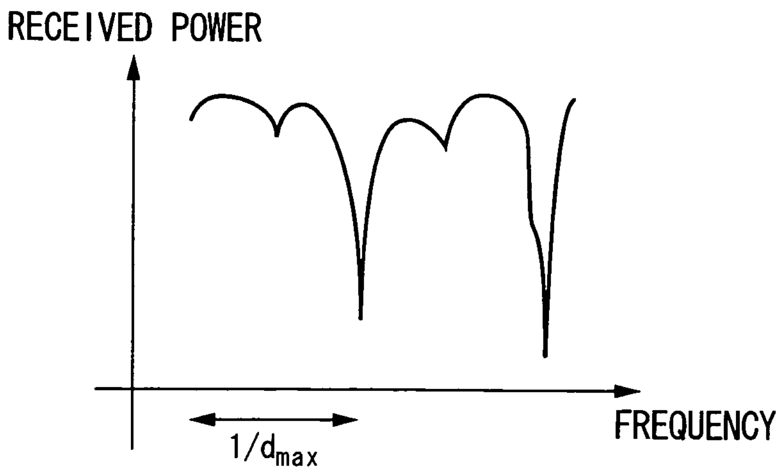

FIG. 34

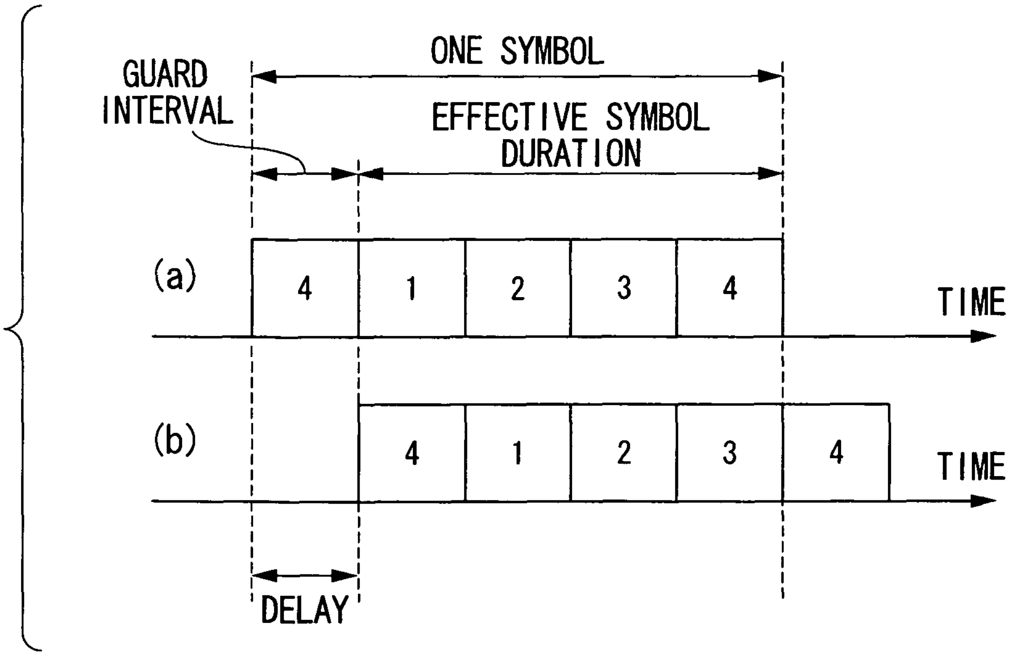
ONE SYMBOL
GUARD INTERVAL
EFFECTIVE SYMBOL DURATION
(a)
4
1
2
3
4
TIME
(b)
4
1
2
3
4
TIME
DELAY

FIG. 35

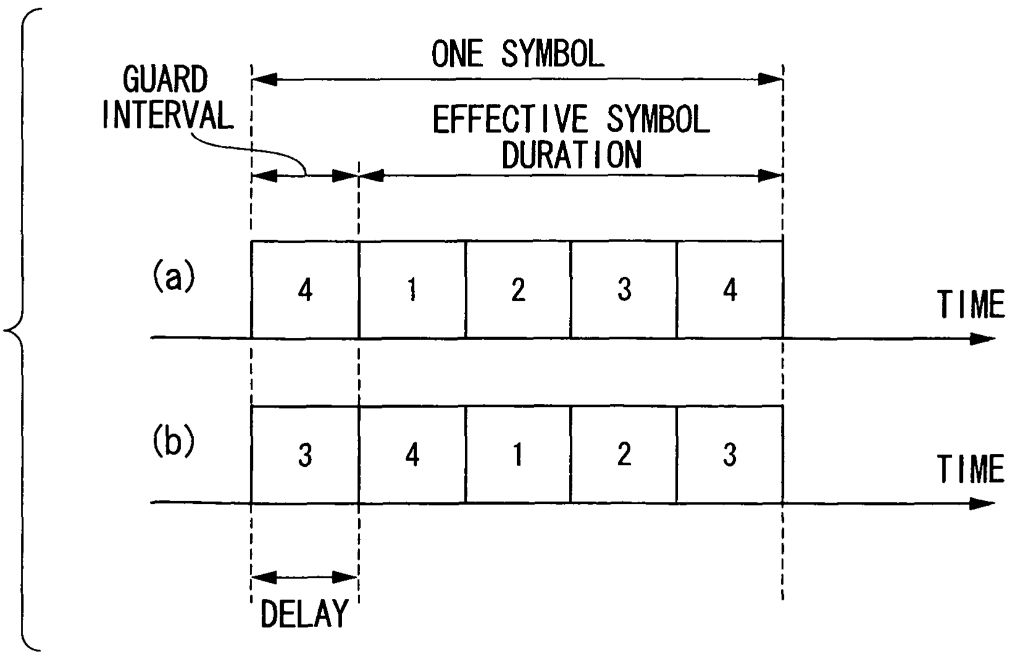
ONE SYMBOL
GUARD INTERVAL
EFFECTIVE SYMBOL DURATION
(a)
4
1
2
3
4
TIME
(b)
3
4
1
2
3
TIME
DELAY

FIG. 36

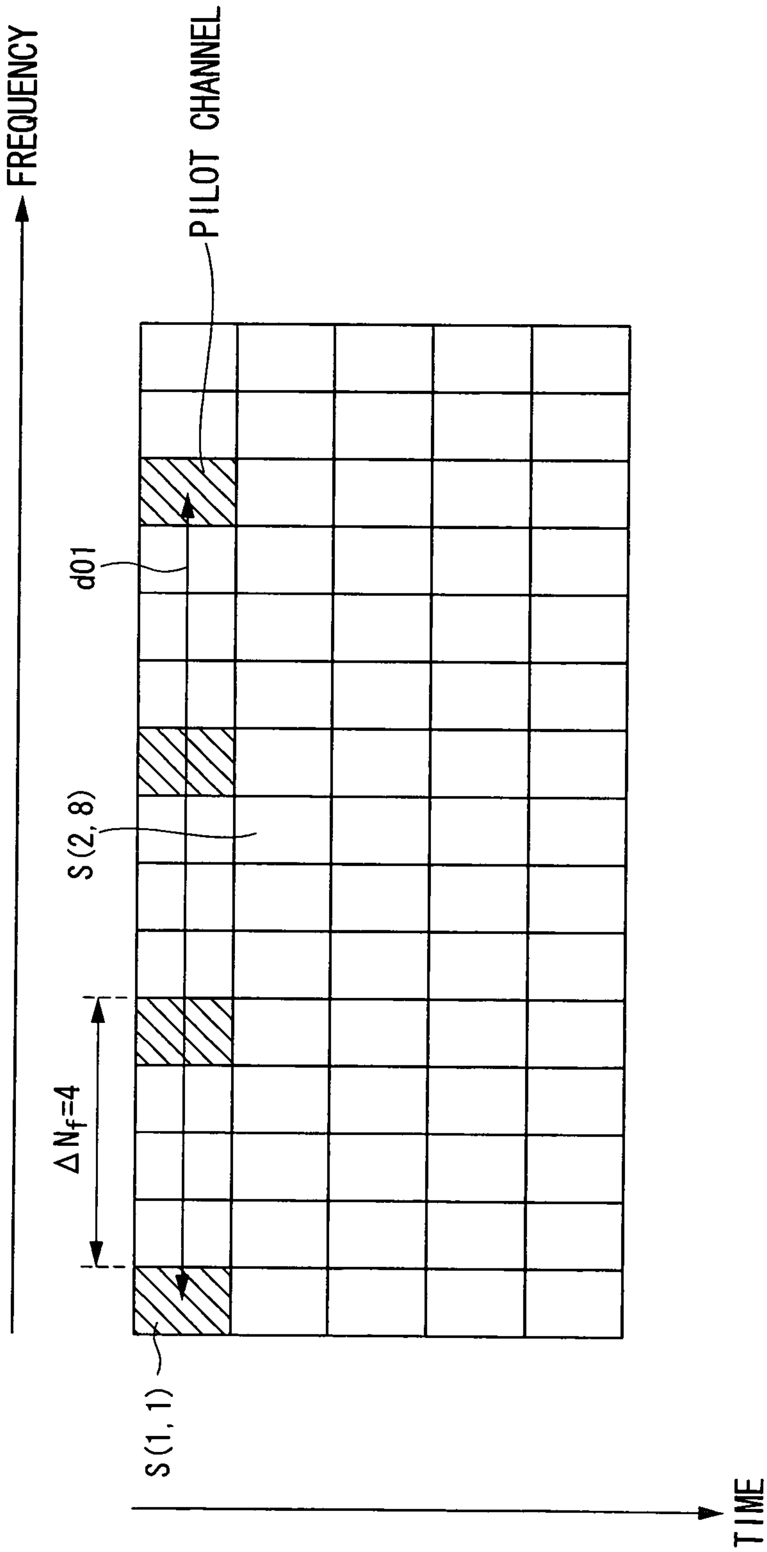

FIG. 37

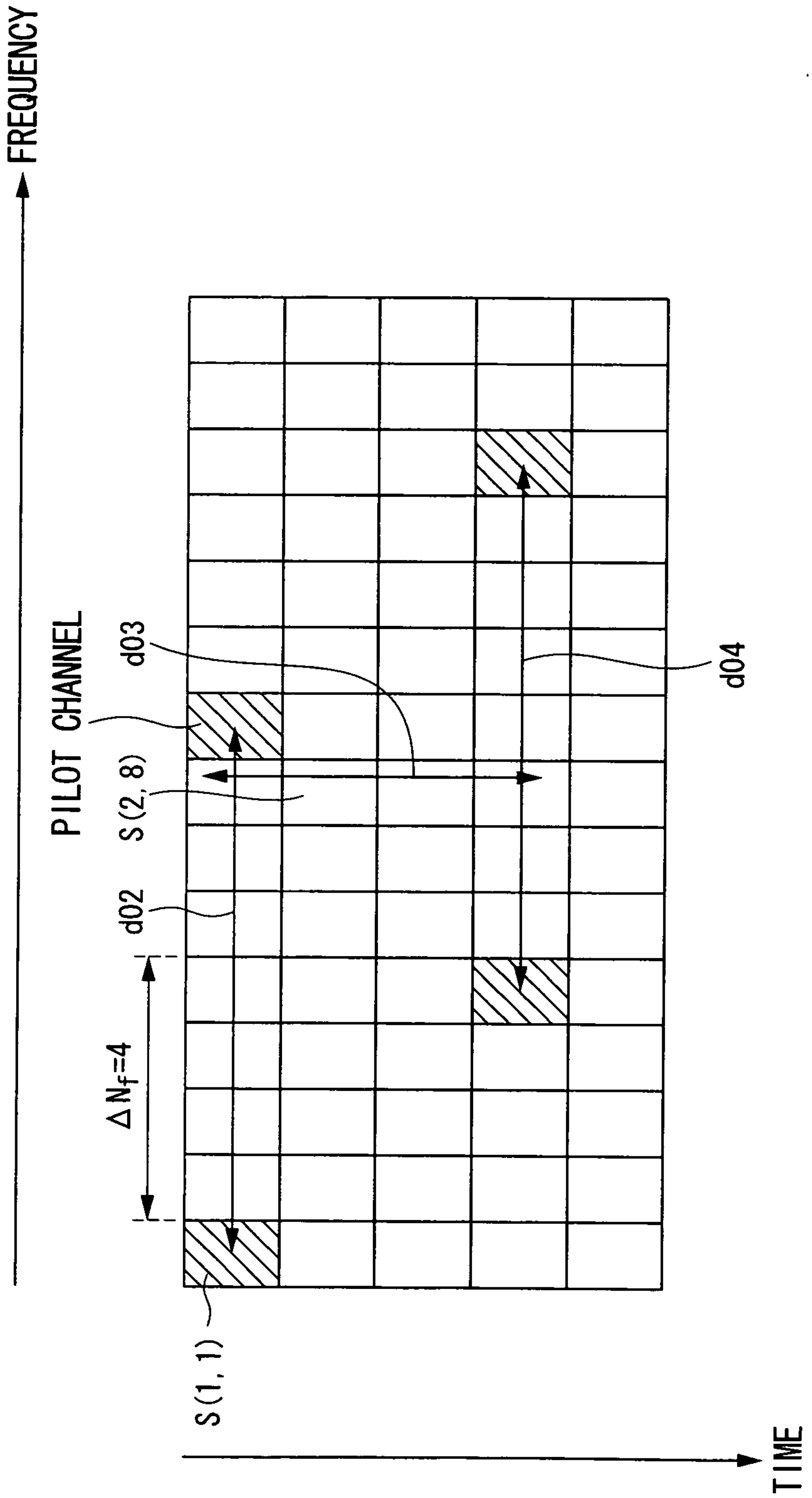

FIG. 38

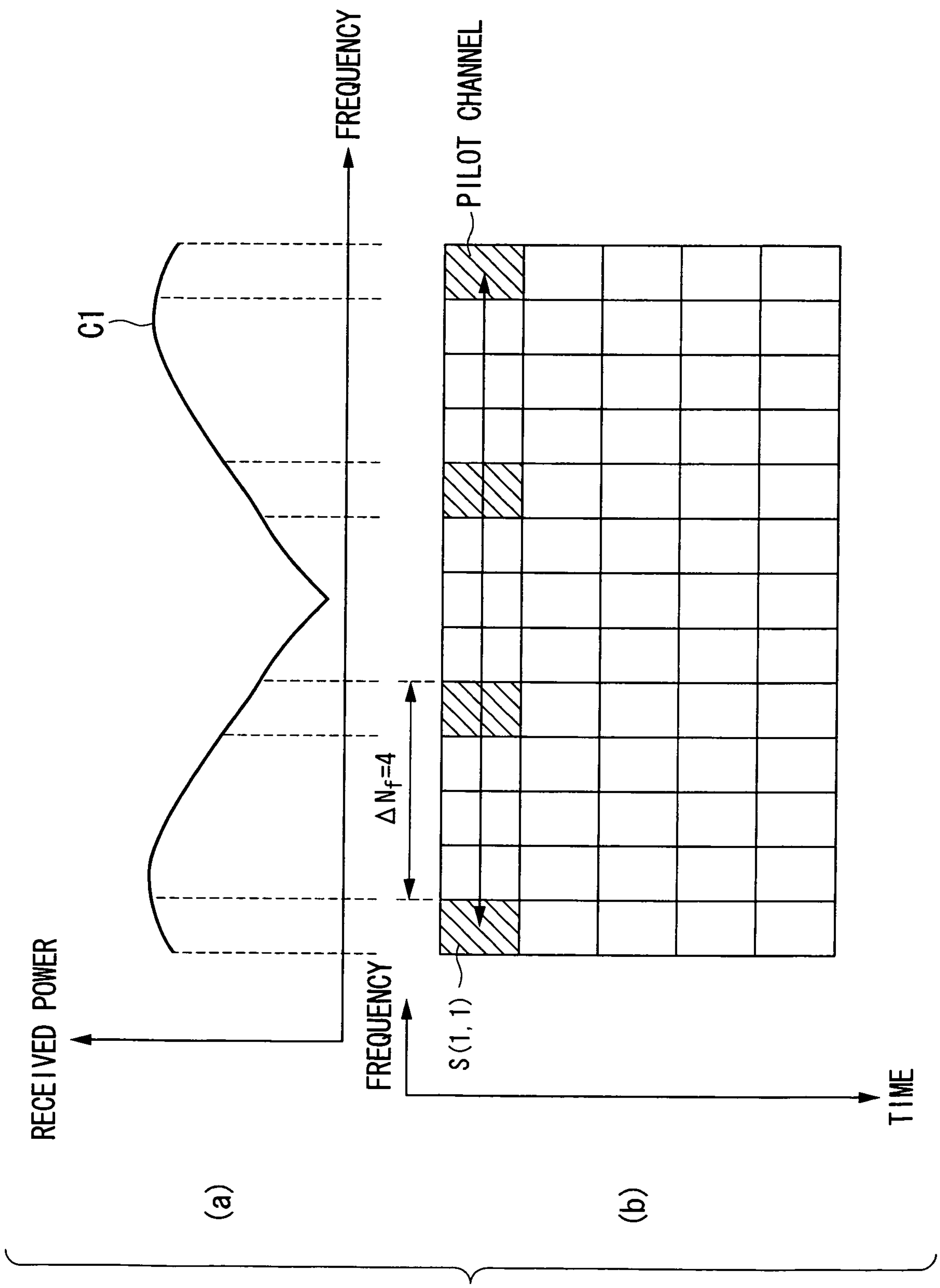
(a)
RECEIVED POWER
FREQUENCY
C1
(b)
PILOT CHANNEL
ΔNf=4
S(1, 1)
FREQUENCY
TIME

**INTERNATIONAL SEARCH REPORT**

International application No.
PCT/JP2006/324560

A. CLASSIFICATION OF SUBJECT MATTER
*H04J11/00*(2006.01)i, *H04B7/06*(2006.01)i, *H04B7/26*(2006.01)i, *H04J1/02*(2006.01)i

According to International Patent Classification (IPC) or to both national classification and IPC

B. FIELDS SEARCHED

Minimum documentation searched (classification system followed by classification symbols)
H04J11/00, H04B7/06, H04B7/26, H04J1/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
IEEE Xplore

C. DOCUMENTS CONSIDERED TO BE RELEVANT

| Category* | Citation of document, with indication, where appropriate, of the relevant passages | Relevant to claim No. |
|---|---|---|
| X<br>Y<br>A | Samsung, TSG RAN WG1 Meeting #42bis R1-051046, 2005.10, Internet <URL:http://www.3gpp.org/ftp/tsg_ran/WG1_RL1/TSGR1_42bis/Docs/R1-051046.zip> | 9,11<br>32<br>1-8,10,12-31,33-35 |
| Y<br>A | JP 2005-109743 A (Toshiba Corp.), 21 April, 2005 (21.04.05), Par. Nos. [0033], [0039] to [0046]; Figs. 9, 10 (Family: none) | 29-30,32<br>1-28,31,33-35 |
| Y<br>A | JP 2003-174426 A (Nippon Terekomu Kabushiki Kaisha), 20 June, 2003 (20.06.03), Par. Nos. [0009] to [0010]; Fig. 1 (Family: none) | 29-30,32<br>1-28,31,33-35 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 February, 2007 (19.02.07) | 27 February, 2007 (27.02.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/324560

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-354708 A (Samsung Electronics Co., Ltd.), 22 December, 2005 (22.12.05), Full text; all drawings & US 2005/0281240 A1 & EP 1605607 A1 & CN 1728616 A & KR 5118031 A | 1-35 |
| A | Gunther Auer, 'Channel Estimation for OFDM with Cyclic DelayDiversity', Personal, Indoor and Mobile Radio Communications, 2004. PIMRC 2004. 15th IEEE International Symposium on, Volume 3, Sept. 2004, pp.1792-1796 | 1-35 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005374134 A